(19) Europäisches Patentamt
European Patent Office
Office européen des brevets

(11) **EP 3 555 695 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **18708326.6**

(22) Anmeldetag: **19.01.2018**

(51) Int Cl.:
**G02C 7/02** *(2006.01)*          **G02C 7/06** *(2006.01)*

(86) Internationale Anmeldenummer:
**PCT/EP2018/000026**

(87) Internationale Veröffentlichungsnummer:
**WO 2018/134037 (26.07.2018 Gazette 2018/30)**

(54) **GLEITSICHT-BRILLENGLAS MIT VARIABLEM BRECHUNGSINDEX UND VERFAHREN ZU DESSEN ENTWURF UND HERSTELLUNG**

PROGRESSIVE SPECTACLE LENS HAVING A VARIABLE REFRACTIVE INDEX AND METHOD OF DESIGNING AND PRODUCING SAME

VERRE DE LUNETTE À FOYER PROGRESSIF AYANT UN INDICE DE RÉFRACTION VARIABLE ET SON PROCÉDÉ DE CONCEPTION ET DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2017 EP 17152384**

(43) Veröffentlichungstag der Anmeldung:
**23.10.2019 Patentblatt 2019/43**

(60) Teilanmeldung:
**19187068.2 / 3 598 214**
**19189829.5 / 3 591 458**

(73) Patentinhaber: **Carl Zeiss Vision International GmbH**
**73430 Aalen (DE)**

(72) Erfinder:
• KELCH, Gerhard
  73434 Aalen (DE)
• MENKE, Christoph
  73447 Oberkochen (DE)
• WIETSCHORKE, Helmut
  73433 Aalen (DE)

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**EP-A1- 0 318 035          EP-A1- 0 347 917**
**EP-A1- 2 177 943          EP-A1- 2 878 989**
**WO-A1-99/13361          WO-A1-2011/093929**
**GB-A- 2 294 553          US-A- 4 762 408**
**US-A1- 2004 008 319     US-A1- 2010 238 400**
**US-B2- 8 186 829**

• YUKI SHITANOKI ET AL: "Application of Graded-Index for Astigmatism Reduction in Progressive Addition Lens", APPLIED PHYSICS EXPRESS, Bd. 2, 6. März 2009 (2009-03-06), Seite 032401, XP055392139, JP ISSN: 1882-0778, DOI: 10.1143/APEX.2.032401
• Darryl Meister: "The Optics of Free-Form Progressive Lenses", , 1. Oktober 2008 (2008-10-01), XP055392812, Gefunden im Internet: URL:http://64.50.176.246/files/optics_of_free-form_lenses.pdf [gefunden am 2017-07-21]

**Beschreibung**

Die Erfindung betrifft ein Erzeugnis umfassend ein Gleitsicht-Brillenglas oder auf einem Datenträger befindliche Darstellung des Gleitsicht-Brillenglases nach dem Oberbegriff des Patentanspruchs 1 sowie ein Verfahren zum Herstellen eines Gleitsicht-Brillenglases nach Anspruch 8.

Gleitsicht-Brillengläser sind seit Jahrzehnten in der Brillenoptik bekannt und verbreitet. Wie Mehrstärken-Brillengläser (i.A. Zwei- und Dreistärken-Brillengläser) stellen sie dem Alterssichtigen (Presbyopen) eine zusätzliche optische Wirkung im unteren Teil des Glases zum Betrachten naher Objekte, z.B. beim Lesen, zur Verfügung. Diese wird benötigt, da die Augenlinse mit zunehmendem Alter ihre Eigenschaft, auf nahe Objekte fokussieren zu können, mehr und mehr einbüßt. Gleitsichtgläser bieten gegenüber diesen Mehrstärkengläsern den Vorteil, eine stufenlose Zunahme der optischen Wirkung vom Fernteil zum Nahteil bereitzustellen, so dass nicht nur in Ferne und Nähe, sondern auch in allen Zwischenentfernungen ein scharfes Sehen gewährleistet ist.

Das Fernteil ist nach Abschnitt 14.1.1 der DIN EN ISO 13666:2013-10 das Teil eines Mehrstärken- oder Gleitsicht-Brillenglases, das die dioptrische Wirkung für das Sehen in die Ferne besitzt. Entsprechend ist das Nahteil nach Abschnitt 14.1.3 dieser Norm das Teil eines Mehrstärken- oder Gleitsicht-Brillenglases, das die dioptrische Wirkung für das Sehen in die Nähe besitzt.

Gleitsicht-Brillengläser werden bisher üblicherweise aus einem Material mit einheitlicher konstanter Brechzahl hergestellt. Das bedeutet, dass die dioptrische Wirkung des Brillenglases ausschließlich durch entsprechende Formgebung der beiden an Luft grenzenden Flächen (Vorder- bzw. objektseitige Fläche, sowie Rück- bzw. augenseitige Fläche entsprechend den in den Abschnitten 5.8 und 5.9 der DIN EN ISO 13666:2013-10 bereitgestellten Definitionen) des Brillenglases festgelegt ist. Unter dioptrischer Wirkung ist nach der Definition des Abschnitts 9.3 der DIN EN ISO 13666:2013-10 der Sammelbegriff für die fokussierende und die prismatische Wirkung eines Brillenglases zu verstehen.

Um die stufenlose Zunahme der fokussierenden Wirkung in einem Gleitsicht-Brillenglas aus einem Material mit einheitlicher konstanter Brechzahl zu erzeugen, muss auf mindestens einer der beiden Brillenglasflächen eine entsprechende kontinuierliche Änderung der Flächenkrümmung vorhanden sein, wie dies auch Abschnitt 8.3.5 der Norm DIN EN ISO 13666:2013-10 reflektiert, welcher den Begriff Gleitsicht-Brillenglas" als "Brillenglas mit mindestens einer Gleitsichtfläche und einer zunehmenden (positiven) Wirkung, wenn der Brillenträger nach unten blickt" definiert. Eine Gleitsichtfläche ist nach Abschnitt 7.7 eine nichtrotationssymmetrische Fläche mit einer kontinuierlichen Änderung der Krümmung über die gesamte Gleitsichtfläche oder einen Teil davon, die im Allgemeinen dazu dient, einen zunehmenden Nahzusatz oder eine Degressionswirkung bereitzustellen.

Die WO 89/04986 A1 geht zunächst von Gleitsicht-Brillengläsern (in diesem Dokument wird der Ausdruck "progressive Brillengläser" verwendet) der vorstehend beschriebenen Art aus. Dem Dokument entnimmt man auf Seite 1, 2. und 3. Abschnitt, dass "der Herstellvorgang und insbesondere das Polieren" von Gleitsichtflächen von Gleitsicht-Brillengläsern aufgrund deren "sehr stark von der sphärischen Form abweich[enden]" Flächengestaltung "schwierig" sei und dass die hergestellte Fläche stark von der berechneten Soll-Form abweiche. "Darüber hinaus" sei "es - zumindest mit einer progressiven Fläche - nicht möglich, die Abbildungsfehler und insbesondere den Astigmatismus und die Verzeichnung über das gesamte Glas klein zu halten."

Die WO 89/04986 A1 führt weiter auf Seite 2 aus, dass zwar Brillengläser mit sich änderndem Brechungsindex bekannt seien, die Realisierung von progressiven Brillengläsern durch Ersatz der komplizierten Flächengestaltung der Gleitsichtfläche durch einen variierenden Brechungsindex in der Vergangenheit vermutlich an dessen erwarteter ähnlich komplizierter Brechungsindex-Funktion gescheitert sei.

Die WO 89/04986 A1 behauptet, "bei vergleichbaren Abbildungseigenschaften eine vereinfachte Herstellung" zu erreichen, "wenn [...] ein sich wenigstens längs der Hauptblicklinie im Zwischenteil ändernder Brechungsindex des Glasmaterials zumindest teilweise zur Zunahme des Brechwerts beiträgt." Dies wird allerdings unter der Zielsetzung realisiert, dass "die Unterschiede der Krümmungsradien zwischen Fernteil und Nahteil abgebaut [werden], so dass zum einen die Bearbeitung eines Rohlings mit sphärischen Begrenzungsflächen zur Herstellung einer progressiven Fläche verkürzt wird" und "zum anderen [...] der Poliervorgang, der bei progressiven Brillengläsern gemäß dem Stand der Technik wesentlichen dem eines sphärischen Glases entspricht, vereinfacht und das Ergebnis des Poliervorgangs verbessert [wird]". Zum Zeitpunkt des Anmeldetags der WO 89/04986 A1 war es nämlich üblich, großflächige Polierwerkzeuge einzusetzen, deren Polierflächen in etwa die Größe der zu polierenden Gleitsichtfläche aufwies.

Weiter führt das Dokument auf Seite 5, Zeile 15ff aus: Wenn zusätzlich auch der Astigmatismus entlang des Hauptmeridians durch die Variation des Brechungsindex verringert wird, so bedeutet dies, dass auch die Einschränkung bei der Gestaltung des Brillenglases, dass der Flächenastigmatismus längs des Hauptmeridians bzw. der Hauptblicklinie klein sein soll, wegfällt, so dass das [...] Brillenglas nicht dem Satz von Minkwitz unterworfen ist, und das Brillenglas unter anderen Gesichtspunkten wesentlich günstiger gestaltet werden kann.

Erklärtes Ziel dieses Dokuments ist es, auf einfache Weise polierbare Flächen zu erhalten, indem die Brechungsindexvariation entsprechend kompliziert gestaltet wird. Ausdrücklich wird auf Seite 6, zweitletzter Absatz erklärt: "Dabei ist es im Extremfall sogar möglich, dass beide Flächen des progressiven Brillenglases sphärische Flächen sind.

Selbstverständlich ist es aber auch möglich, rotationssymmetrische asphärische Flächen zu verwenden." Andererseits äußert das Dokument keine Einschränkung hinsichtlich der Komplexität der Brechungsindexfunktion, die sich ausweislich des letzten Satzes auf der Seite 6 "beispielsweise mittels Spline-Funktionen beschreiben" lassen kann.

Das Dokument offenbart zwei Ausführungsbeispiele. Beim zweiten Ausführungsbeispiel "[sind] sowohl die Vorderfläche als auch die augenseitige Fläche [...] sphärische Flächen" (siehe ebd., S. 11, letzter Satz). Beim ersten Ausführungsbeispiel besitzt die Vorderfläche einen Hauptmeridian in Form eines Kreises (vgl. ebd. S. 12, Z. 6-13) und senkrecht dazu die Gestalt von Kegelschnitten (vgl. ebd., S. 11, Z. 6-14). Die Rückseite ist bei dem ersten Ausführungsbeispiel sphärisch.

Zum ersten Ausführungsbeispiel weist das Dokument "ausdrücklich [...] darauf hin [...], dass bei der Optimierung die Korrektur von Abbildungsfehlern nicht beachtet worden ist, und dass sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion".

Die WO 99/13361 A1 beschreibt ein sogenanntes "MIV" -Linsenobjekt, welches alle funktionellen Merkmale von Gleitsichtgläser aufweisen soll, nämlich ein Fernteil, ein Nahteil und eine Progressionszone, deren Randbereiche aber frei von astigmatischen Aberrationen sein sollen. Dieses Dokument beschreibt, dass ein derartiges Linsenobjekt eine sphärische Vorder- und eine sphärische Rückfläche aufweisen kann. Das Linsenobjekt soll eine Progressionszone mit vom Fernteil zum Nahteil kontinuierlich zunehmendem Brechungsindex aufweisen. Mit einer derartigen Ausführung lassen sich allerdings in der Regel nicht alle gewünschten Additionen realisieren. Das Dokument führt daher aus: "Falls gewünscht, kann der Bereich von Zusätzen überbrückt werden, falls dies durch den einzigen variablen Brechungsindex unmöglich ist, auch durch Herstellen der Linsen mit einem Materialrohblock mit variablem Brechungsindex, wie oben beschrieben, und Bilden von Kurven mit variabler Geometrie wie die herkömmlicher progressiver Linsen, wodurch das Ergebnis erzielt wird, dass sie im Vergleich zu diesen letzteren eine viel höhere Wirkung aufweisen, da die Linse mit variierendem Brechungsindex in den verschiedenen Bereichen die gewünschte Addition unter Verwendung viel weniger differenzierter Kurven zwischen der Fernteilwirkung und der Nahteilwirkung mit einer Verringerung der Aberrationsfläche und einer Vergrößerung der Nutzsichtfläche bereitstellt."

Die US 2010/238400 A1, von der die Erfindung ausgeht, beschreibt jeweils aus mehreren Schichten bestehende Gleitsicht-Brillengläser. Wenigstens eine der Schichten kann einen variierenden Brechungsindex aufweisen, welcher bezüglich zweier orthogonal zueinander verlaufenden Meridianen beschrieben wird. Darüber hinaus kann zumindest eine der Flächen einer der Schichten eine progressive Flächengestalt aufweisen. Es ist beschrieben, dass der Brechungsindexverlauf in horizontaler Richtung zur Vollkorrektur der durch die Geometrie der Flächen verwendet werden kann.

Yuki Shitanoki et al: "Application of Graded-Index for Astigmatism Reduction in Progressive Addition Lens", Applied Physics Express, Bd. 2, 1. März 2009, Seite 032401 beschreibt durch Vergleich zweier mit Hilfe derselben Formschale abgegossener Gleitsicht-Brillengläser der Astigmatismus bei einem Gleitsicht-Brillenglas mit einem Brechungsindexgradienten gegenüber einem Gleitsicht-Brillenglas ohne einen Brechungsindexgradienten verringert werden kann.

Im Hinblick auf die Unterscheidbarkeit des Gegenstands der vorliegenden Patentanmeldung von den in der US 2010/238400 A1 beschriebenen Mehrschichtbrillengläsern wird hiermit ausgeführt, dass Brillengläser regelmäßig einem oder mehreren Veredelungsprozessen unterzogen werden. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1. Diese Funktionsschichten haben keinen oder einen vernachlässigbaren Einfluss auf die im Rahmen der vorliegenden Patentanmeldung diskutierten dioptrischen Eigenschaften des Brillenglases. Die in der US 2010/238400 A1 beschriebenen Schichten haben demgegenüber einen nicht zu vernachlässigenden Einfluss auf die dioptrische Wirkung des Gleitsicht-Brillenglases.

Die Aufgabe der Erfindung wird nunmehr darin gesehen, ein Gleitsicht-Brillenglas bereitzustellen, welches gegenüber den aus dem Stand der Technik bekannten Gleitsicht-Brillengläsern weiter verbesserte optische Eigenschaften für den Brillenträger aufweist und ein Verfahren bereitzustellen, mit welchem ein Gleitsicht-Brillenglas mit weiter verbesserten optischen Abbildungseigenschaften entworfen und hergestellt werden kann.

Diese Aufgabe wird durch ein Erzeugnis mit den Merkmalen des Patentanspruchs 1 und ein Verfahren mit den Merkmalen des Patentanspruchs 8 gelöst.

Vorteilhafte Ausführungen und Weiterbildungen sind Gegenstand der Unteransprüche.

Während die WO 89/04986 A1 vorschlägt, durch Einführung einer komplizierten aber entgegen früheren Annahmen technisch realisierbaren Brechungsindexverteilung die Komplexität der notwendigen Flächengeometrie zu verringern, um deren Herstellung zu vereinfachen (siehe ebd., S. 2, 4. Abschnitt, letzte Zeile; S. 4, erster Abschnitt, letzter Satz; Seite 5, erster Abschnitt; Seite 5, zweiter Abschnitt; Seite 5, letzter Abschnitt, letzter Satz; Seite 6, zweitletzter Abschnitt) und auf diese Weise die die optischen Eigenschaften beeinträchtigenden großen Abweichungen der gefertigten Fläche von der berechneten Fläche zu reduzieren (siehe ebd. S. 1, 3. Abschnitt) haben die Erfinder erkannt, dass dieses Vorgehen nicht zwangsläufig zu Gleitsicht-Brillengläsern mit für den Brillenträger besseren optischen Eigenschaften führt. Die Erfinder haben erkannt, dass es auf das Zusammenspiel des Grads der Komplexität der Geometrie der Gleitsichtfläche und des Grads der Komplexität der Brechungsindexverteilung ankommt. Abweichend von der in der WO 89/04986 A1 beschriebenen Lösung schlagen die Erfinder daher ein Erzeugnis umfassend ein Gleitsicht-Brillenglas oder auf einem Datenträger befindliche Darstellung des Gleitsicht-Brillenglases mit Anweisungen für seine Herstellung durch ein additives Verfahren mit den Merkmalen des Anspruchs 1 vor. Das Gleitsicht-Brillenglas weist eine Vorderfläche und eine Rückfläche sowie einen räumlich variierenden Brechungsindex auf. Die Vorderfläche oder die Rückfläche oder Vorder- und Rückfläche sind als Gleitsichtfläche ausgebildet. Das Gleitsicht-Brillenglas zeichnet sich nach der Erfindung dadurch aus, dass die als Gleitsichtfläche ausgebildete Vorderfläche als Freiformfläche ausgebildet ist oder dass die als Gleitsichtfläche ausgebildete Rückfläche als Freiformfläche ausgebildet ist oder dass beide als Gleitsichtflächen ausgebildeten Flächen als Freiformflächen ausgebildet sind. Es ist also auch der Fall eingeschlossen, bei dem zwar beide Flächen, nämlich Vorder- und Rückfläche als Gleitsichtflächen ausgebildet sind, aber nur eine der beiden Flächen lediglich als Freiformfläche vorliegt.

Unter dem Ausdruck "auf einem Datenträger befindliche Darstellung eines Gleitsicht-Brillenglases mit Anweisungen für seine Herstellung durch ein additives Verfahren" versteht man im Rahmen der vorliegenden Erfindungen eine in einem Speicher eines Computers gespeicherte Darstellung des Gleitsicht-Brillenglases.

Die Darstellung des Gleitsicht-Brillenglases umfasst insbesondere eine Beschreibung der geometrischen Gestalt und des Mediums des Gleitsicht-Brillenglases. Eine derartige Darstellung kann z.B. eine mathematische Beschreibung der Vorderfläche, der Rückfläche, der Anordnung dieser Flächen zueinander (einschließlich der Dicke) und der Randbegrenzung des Gleitsicht-Brillenglases sowie der Brechzahlverteilung des Mediums, aus dem das Gleitsicht-Brillenglas bestehen soll, umfassen. Die Darstellung kann in kodierter oder gar in verschlüsselter Form vorliegen. Unter Medium ist hier das Material/die Materialien bzw. der Stoff gemeint, aus dem das Gleitsicht-Brillenglas gefertigt ist. Das Gleitsicht-Brillenglas kann auch aus mehreren Schichten bestehen, z.B. auch aus einem Dünnstglas mit einer Dicke zwischen 10 $\mu$m und 500 $\mu$m und darauf aufgebrachtem Kunststoff.

Die Vorderfläche oder objektseitige Fläche eines Brillenglases ist nach Abschnitt 5.8 der DIN EN ISO 13666:2013-10 die Fläche eines Brillenglases, die bestimmungsgemäß in der Brille vom Auge abgewandt liegt. Demgemäß ist nach Abschnitt 5.9 dieser Norm die Rückfläche die augenseitige Fläche, also die Fläche eines Brillenglases, die bestimmungsgemäß in der Brille dem Auge zugewandt liegt.

Eine Gleitsichtfläche ist nach Abschnitt 7.7 der DIN EN ISO 13666:2013-10 eine nichtrotationssymmetrische Fläche mit einer kontinuierlichen Änderung der Krümmung über die gesamte Fläche oder einen Teil davon, die im Allgemeinen dazu dient, einen zunehmenden Nahzusatz oder eine Degressionswirkung bereitzustellen. Eine kontinuierliche Änderung schließt sprunghafte Änderungen aus. Im Allgemeinen bedeutet insbesondere im Rahmen der Erfindung, dass der Nahzusatz oder die Degressionswirkung bereitgestellt werden kann aber nicht muss. Insbesondere kann im Rahmen der vorliegenden Erfindung der räumlich variierende Brechungsindex zumindest teilweise diese Aufgabe übernehmen. Jede Freiformfläche ist nach dieser Definition eine Gleitsichtfläche aber nicht umgekehrt.

Unter einer Freiformfläche versteht man im weiteren Sinn eine komplexe Fläche, die sich insbesondere mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)) darstellen lässt. Hiervon zu unterscheiden sind einfache Flächen, wie z.B. sphärische Flächen, asphärische Flächen, zylindrische Flächen, torische Flächen oder auch die in der WO 89/04986 A1 beschriebenen Flächen, die zumindest längs des Hauptmeridians als Kreis beschrieben sind (vgl. ebd. S. 12, Z. 6-13). Anders ausgedrückt lassen sich Freiformflächen nicht in Form klassischer Regelkörper wie z.B. sphärische Flächen, asphärische Flächen, zylindrische Flächen, torische Flächen oder auch die in der WO 89/04986 A1 beschriebenen Flächen, darstellen (siehe z.B. https://www.computerwoche.de/a/die-natur-kennt-auch-nur-freiformflaechen, 1176029 heruntergeladen am 18.1.2018; http://www.megacad.de/kennenlernen/megacadschulungen/schulungsinhalte/schulung-freiformflaechen.html heruntergeladen am 18.1.2018) jedoch beispielsweise mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)). Freiformflächen sind demnach Flächen, die keiner Regelgeometrie entsprechen (siehe z.B. https://www.infograph.de/de/nurbs heruntergeladen am 18.1.2018; https://books.google.de/books?id=QpugBwAAQB AJ&pg=PA 101&lpg=PA 101&dq=regelgeome trie+definition&source=bl&ots=C JimOwghvo&sig=MvsGvOsqbA VEygCa W-JQhfJ99jw&hl=de&sa=X&ved=0ahUKEwi jcD5y-HY AhXDXCwKHUaOCBw4ChDoAOssMAI#v=oneDase&Q=rese)seometrie%20definition&f= false heruntergeladen am 18.1.2018) oder die nicht mittels Formen der analytischen Geometrie beschreibbar sind (siehe z.B. https://books.google.de/books?id=LPzBgAAQBAJ&pg= PA26&lpg=PA26&dq=regelgeometrie+definition&source=bl&ots=e1upL5jinn&sig=hUNimu8d eH5x8OvCiYsa242ddn8&hl=de&sa=X&ved=0ahUKEwi_jcD5y-HYAhXDXCwKHUaQCBw4ChDoAQgvMAM#v=onepage&q=regelgeometrie%20definition& f=false heruntergeladen am 18.1.2018).

Die eingangs beschriebene Aufgabe wird durch die nachfolgend als Varianten gekennzeichneten Ausführungen eines Gleitsicht-Brillenglases vollumfänglich gelöst.

In weiterer Ausgestaltung der Erfindung ist vorgesehen, dass die Freiformfläche eine Freiformfläche im engeren Sinn entsprechend dem Abschnitt 2.1.2 der DIN SPEC 58194 vom Dezember 2015 ist, nämlich eine in Freiformtechnologie gefertigte Brillenglasfläche, die im Rahmen der Grenzen der Differentialgeometrie mathematisch beschrieben wird und weder punkt- noch achsensymmetrisch ist.

Weiter insbesondere kann die Freiformfläche keine Punktsymmetrie, keine Achsensymmetrie, keine Rotationssymmetrie und keine Symmetrie bzgl. einer Symmetrieebene aufweisen. Obwohl es günstig ist, jede Beschränkung hinsichtlich der Flächengeometrie aufzuheben, ist es in Anbetracht derzeit üblicher Anforderungen an die optischen Eigenschaften von Gleitsicht-Brillengläsern hinreichend, nur Freiformflächen mit einem hohen Grad an Komplexität als Gleitsichtflächen zuzulassen. Lässt man darüber hinaus dasselbe Maß an Komplexität für die Brechungsindexverteilung über das Gleitsicht-Brillenglas zu und zwar zumindest in zwei oder vorzugsweise in drei Raumdimensionen, so werden diese Gleitsicht-Brillengläsern den Anforderungen der Brillenträger an deren optischen Eigenschaften in höchstem Maße gerecht.

Die Erfindung besteht bei einem erfindungsgemäßen Gleitsicht-Brillenglas, welches einen Progressionskanal aufweist, darin, dass die als Freiformfläche ausgebildete Vorderfläche so gestaltet ist, dass die mittlere Krümmung im Progressionskanal maximal ist und zur Peripherie und/oder nach unten abfällt. Alternativ oder zusätzlich kann auch die als Freiformfläche ausgebildete Rückfläche so gestaltet sein, dass die mittlere Krümmung im Progressionskanal minimal ist und zur Peripherie und/oder nach unten zunimmt. Anders ausgedrückt ist die als Freiformfläche ausgebildete Vorderfläche so gestaltet, dass das Maximum des Betrags der mittleren Krümmung der Vorderfläche im Progressionskanal ist und/oder die als Freiformfläche ausgebildete Rückfläche ist so gestaltet, dass das Minimum des Betrags der mittleren Krümmung der Rückfläche im Progressionskanal ist.

Der Progressionskanal ist dabei nach DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen.

Derartige Flächen können mit den heute verfügbaren Produktionsmethoden mit höchster Genauigkeit hergestellt werden. Insbesondere bei der Wahl dieser Flächengeometrie für die Vorderfläche ergeben sich Vorteile bei der Herstellung. Der Polierabtrag unter Verwendung derzeit gängiger Polierwerkzeuge, deren wenigstens annähernd sphärische Polierfläche in etwa einem Drittel der zu polierenden Brillenglasfläche entspricht, kann hinreichend homogen über der zu polierenden Brillenglasfläche gehalten werden, so dass die Abweichung von der berechneten Brillenglasgeometrie vergleichsweise gering ist. Die Abweichung der tatsächlichen optischen Eigenschaften von den berechneten optischen Eigenschaften des Brillenglases ist damit höchst gering.

Eine Variante der Erfindung ist dadurch gekennzeichnet, dass das erfindungsgemäße Gleitsicht-Brillenglas so gestaltet ist, dass es für den Gleitsicht-Brillenträger die nachfolgend beschriebenen gegenüber einem Vergleichs-Gleitsicht-Brillenglas, welches keine räumliche Brechungsindexvariation aber eine identische Verteilung des sphärischen Äquivalents aufweist, vorteilhafteren optischen Eigenschaften besitzt.

Erläuternd wird ausgeführt, dass ein Brillenglas für eine vorbestimmte Anordnung vor einem Auge eines Brillenträgers und für eine oder mehrere vorbestimmte Objektentfernungen, unter denen der Brillenträger ein Objekt scharf wahrnehmen soll, konzipiert ist. In einer davon abweichenden Anordnung vor dem Auge des Brillenträgers und für andere Objektentfernungen ist das Brillenglas wertlos oder die optische Qualität ist für den Brillenträger stark eingeschränkt. Dies gilt umso mehr für Gleitsicht-Brillengläser. Demnach ist ein Gleitsicht-Brillenglas lediglich über die Kenntnis der vorbestimmten Anordnung vor dem Auge des Brillenträgers charakterisiert. Anders ausgedrückt ist die Kenntnis der Anordnung des Brillenglases in Ort und Ausrichtung im Raum in Bezug auf das Auge notwendig aber auch hinreichend, um dieses in eineindeutiger Weise in dessen optischer Wirkung für den Brillenträger zu charakterisieren. Darüber hinaus ist ein Optiker auch nur dann in der Lage, das Brillenglas lagerichtig in eine Brillenfassung einzusetzen, wenn er die Anordnung des Brillenglases in Ort und Ausrichtung in Bezug auf das Auge des Brillenträgers kennt. Eine Darstellung der vorbestimmten Anordnung des Gleitsicht-Brillenglases vor einem Auge eines Gleitsicht-Brillenträgers, für den das Gleitsicht-Brillenglas bestimmt ist, ist damit untrennbarer Bestandteil des Produkts (Erzeugnis) oder der Handelsware "Gleitsicht-Brillenglas".

Der Hersteller bringt zum Zweck der Gewährleistung einer lage- und orientierungsrichtigen Anordnung im Gleitsicht-Brillenglas durch den Optiker permanent vorhandene Markierungen an. Der DIN EN ISO 13666:2013-10 entnimmt man unter 14.1.24, dass diese als Markierung zur Ausrichtung oder Permanentmarkierung bezeichnet wird und vom Hersteller angebracht wurde, um die horizontale Orientierung des Brillenglases [...] oder die Rekonstruktion weiterer Bezugspunkte zu ermöglichen. Nach Abschnitt 6.1 der DIN EN ISO 14889:2009 muss der Hersteller rohkantiger fertiger Brillengläser durch Angaben auf der Einzelverpackung oder in einem Begleitdokument eine Identifizierung ermöglichen. Insbesondere hat er Korrekturwerte für Gebrauchssituationen, die Nahzusatzwirkung, die Typbezeichnung oder den Handelsnamen und die notwendige Information, um den Nahzusatz zu messen. Aus der Typbezeichnung oder dem Handelsnamen ergibt sich das von dem Hersteller dem Gleitsicht-Brillenglas zugrunde gelegte Objektabstandsmodell. Unter Hersteller ist nach 3.1 dieser Norm eine natürliche oder juristische Person, die das rohkantige fertige Brillenglas auf den Markt bringt, zu verstehen.

Bei dieser erfindungsgemäßen Variante umfasst das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist. Wie bereits ausgeführt weist das erfindungsgemäß ausgebildete Gleitsicht-Brillenglas (nicht nur) bei dieser Variante eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, auf. Ferner weist das erfindungsgemäß ausgebildete Gleitsicht-Brillenglas einen Progressionskanal mit einer Breite auf. Das erfindungsgemäß nach dieser Variante konzipierte Gleitsicht-Brillenglas besitzt einen Brechungsindex, der räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases für eine gleiche Verordnung mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Der Begriff "sphärisches Äquivalent" ist hierbei definiert als das arithmetische Mittel der fokussierenden Wirkung, wie dies beispielsweise aus Albert J. Augustin: Augenheilkunde. 3., komplett überarbeitete und erweiterte Auflage. Springer, Berlin u. a. 2007, ISBN 978-3-540-30454-8, S. 1272 oder Heinz Diepes, Ralf Blendowske: Optik und Technik der Brille. 1. Auflage, Optische Fachveröffentlichung GmbH, Heidelberg 2002, ISBN 3-922269-34-6, S. 482 hervorgeht:

$$Sph\ddot{a}risches\ \ddot{A}quivalent = Sph\ddot{a}re + \frac{1}{2} \times Zylinder$$

Die fokussierende Wirkung ist nach Abschnitt 9.2 der DIN EN ISO 13666:2013-10 der Sammelbegriff für die sphärische und astigmatische Wirkung eines Brillenglases. Die sphärische Wirkung ist in der Gleichung durch "Sphäre" abgekürzt, die astigmatische Wirkung ist repräsentiert durch "Zylinder". Für den Begriff sphärisches Äquivalent wird auch der Begriff mittlere sphärische Wirkung verwendet.

Der Progressionskanal ist -wie oben bereits ausgeführt wurde- nach der DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen. In der Mitte des Progressionskanals verläuft die Hauptblicklinie, welche die Gesamtheit aller Durchblickpunkte durch die Gleitsichtfläche bei der Blickbewegung des Auges auf Objektpunkte geradeaus vor dem Brillenträger von der Ferne zur Nähe darstellt. Die Hauptblicklinie wird regelmäßig auf der Vorderfläche angenommen. Anders ausgedrückt wird als Hauptblicklinie diejenige Linie auf der Vorderfläche eines Brillenglases bezeichnet, die die Hauptdurchblickpunkte durch das Gleitsichtglas für das Sehen in die Ferne und in die Nähe miteinander verbindet und auf der die Durchstoßpunkte der Sehstrahlen für Zwischenentfernungen in Richtung "geradeaus" liegen (Anmerkung: die Verwendung der Rückfläche als Bezugsfläche, auf der die Hauptblicklinie liegt ist eher unüblich). Die Hauptblicklinie ist regelmäßig eine im Fern- und im Nahteil angenähert senkrecht und im Progressionskanal, also dem Teil eines Gleitsicht-Brillenglases, das die dioptrische Wirkung für das Sehen in Entfernungen besitzt, die zwischen Ferne und Nähe liegen, gewunden verlaufende Linie. Die Länge des Progressionskanals kann sich z.B. durch die Lage der Fern- und Nah-Konstruktionsbezugspunkte oder die Lage der Fern- und Nah-Bezugspunkte ergeben. Der Fern-Konstruktionsbezugspunkt ist nach 5.13 der DIN EN ISO 13666:2013-10 der Punkt auf der Vorderfläche eines fertigen Brillenglases oder der fertig bearbeiteten Fläche eines Brillenglasblanks, in dem nach Angabe des Herstellers die Konstruktions-Sollwerte für das Fernteil vorliegen. Entsprechend ist nach 5.14 dieser Norm der Nah-Konstruktionsbezugspunkt der Punkt auf der Vorderfläche eines fertigen Brillenglases oder der fertig bearbeiteten Fläche eines Brillenglasblanks, in dem nach Angabe des Herstellers die Konstruktions-Sollwerte für das Nahteil vorliegen. Nach 5.15 ist der Fern-Bezugspunkt bzw. Hauptbezugspunkt der Punkt auf der Vorderfläche eines Brillenglases, in dem die dioptrische Wirkung für das Fernteil erreicht werden muss und nach 5.17 ist der Nah-Durchblickpunkt die angenommene Lage des Durchblickpunktes auf einem Brillenglas für das Sehen in die Nähe unter bestimmten Bedingungen.

Grundsätzlich ist es möglich, anhand der vorstehenden Angabe die Eigenschaften des Gleitsicht-Brillenglases im Verhältnis zu einem Vergleichs-Gleitsicht-Brillenglas in eineindeutiger Weise festzulegen und festzustellen. Ein einfaches Kriterium ergibt sich, wenn man annimmt, dass der wenigstens eine Schnitt eine Variante aus der Gruppe

- horizontaler Schnitt,
- Schnitt bei halber Addition (insbesondere auf der Hauptblicklinie),
- horizontaler Schnitt bei halber Addition (insbesondere auf der Hauptblicklinie)

- horizontaler Schnitt bei halber Addition (insbesondere auf der Hauptblicklinie) und horizontaler Schnitt bei 25 % der Addition (insbesondere auf der Hauptblicklinie)
- horizontaler Schnitt bei halber Addition (insbesondere auf der Hauptblicklinie) und horizontaler Schnitt bei 75 % der Addition (insbesondere auf der Hauptblicklinie)
- horizontaler Schnitt bei halber Addition (insbesondere auf der Hauptblicklinie) und horizontaler Schnitt bei 25 % der Addition (insbesondere auf der Hauptblicklinie) und horizontaler Schnitt bei 75 % der Addition (insbesondere auf der Hauptblicklinie)

ist.

Die DIN EN ISO 13666:2013-10 definiert in Abschnitt 14.2.1 den Nahzusatz bzw. die Addition als Differenz zwischen dem Scheitelbrechwert des Nahteiles und dem Scheitelbrechwert des Fernteiles gemessen mit festgelegten Verfahren. Diese Norm gibt an, dass entsprechende Messverfahren in der für Brillengläser maßgebenden Norm enthalten seien. Als maßgebende Norm wird in der DIN EN ISO 13666:2013-10 auf die DIN EN ISO 8598-1:2012, "Optik und optische Instrumente - Scheitelbrechwert-Messgeräte - Teil 1: Instrumente für den allgemeinen Gebrauch" verwiesen. Der Scheitelbrechwert ist in der DIN EN ISO 13666:2013-10, Abschnitt 9.7 wie folgt definiert. Es wird unterschieden zwischen bildseitigem Scheitelbrechwert, welcher definiert ist als Kehrwert der paraxialen Schnittweite des bildseitigen Brennpunktes, gemessen in Metern und objektseitigem Scheitelbrechwert, welcher definiert ist als Kehrwert der paraxialen Schnittweite des objektseitigen Brennpunktes, gemessen in Metern. Es wird angemerkt, dass nach Übereinkunft in der Augenoptik der bildseitige Scheitelbrechwert der "Scheitelbrechwert" eines Brillenglases verwendet wird, für bestimmte Zwecke aber auch der objektseitige Scheitelbrechwert benötigt wird, z. B. zur Messung der Addition bei einigen Mehrstärken- und Gleitsicht-Brillengläsern.

Eine weitere Variante die Eigenschaften des Gleitsicht-Brillenglases über einen Vergleich mit den Eigenschaften eines Vergleichs-Gleitsicht-Brillenglases mit in eineindeutiger Weise vorbestimmbaren Eigenschaften, nämlich derselben Verteilung des sphärischen Äquivalents über das Glas unter der derselben Position des Brillenglases vor dem Auge des selben Gleitsicht-Brillenträgers unter Zugrundelegung des selben Objektabstandsmodells, zu definieren, besteht darin, wenn das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist.

Bei dieser Variante eines erfindungsgemäßen Gleitsicht-Brillenglases, welches ein Fernteil und ein Nahteil aufweist, wird die Breite des Progressionskanals durch die Abmessung quer zu einer zwischen Fernteil und Nahteil verlaufenden Längsrichtung des Progressionskanals definiert, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

Unter Restastigmatismus versteht man den Astigmatismus (nach Betrag und Achsrichtung), um den der Astigmatismus bzw. die astigmatische Wirkung des Gleitsicht-Brillenglases an einem jeweiligen Ort auf einer Gleitsicht-Brillenglasfläche für ein das Gleitsicht-Brillenglas an diesem Ort durchdringenden Strahlenbündels für den Gleitsicht-Brillenträger, für den das Gleitsicht-Brillenglas bestimmt ist, wenn der Gleitsicht-Brillenträger das Gleitsicht-Brillenglas bestimmungsgemäß trägt (so dass es in vorbestimmter Weise vor dem Auge des Gleitsicht-Brillenträgers angeordnet ist), von der für eine Vollkorrektion geforderten astigmatischen Wirkung abweicht. Der Begriff "Verteilung" stellt klar, dass dieser Restastigmatismus lokal über das Brillenglas unterschiedlich sein kann und im Regelfall auch sein wird.

Anders formuliert versteht man unter Restastigmatismus die Abweichung der astigmatischen Wirkung (astigmatische Ist-Wirkung) des Gleitsicht-Brillenglases von der "verordneten" astigmatischen Wirkung bezüglich Betrag und Achslage. Anders ausgedrückt ist der Restastigmatismus die blickrichtungsabhängige Differenz zwischen der astigmatischen Ist-Wirkung und der astigmatischen Soll-Wirkung für den Träger des Gleitsicht-Brillenglases in Gebrauchsstellung. Berücksichtigt wird bei der Gebrauchsstellung die Position und Orientierung des Brillenglases zum Auge bei bestimmungsgemäßem Gebrauch. Die Blickrichtungsabhängigkeit der astigmatischen Wirkung kann insbesondere aus der Blickrichtungsabhängigkeit der Objektentfernung und der Blickrichtungsabhängigkeit der astigmatischen Wirkung des Auges resultieren. Der Ausdruck "verordnete Wirkung" ist also im weitesten Sinn als Soll-Wirkung zu verstehen, die das Brillenglas aufgrund seiner zugrunde gelegten Position und Orientierung in Bezug auf das Auge für die jeweilige Blickrichtung und die Entfernung, in welcher der Brillenträger das Objekt für diese Blickrichtung scharf sehen soll, haben soll.

Für die konkrete Berechnung der Restastigmatismusverteilung (oder anderer Fehlerverteilungen, wie z.B. der sphärischen Fehlerverteilung oder sonstigen z.B. in der EP 2 115 527 B1 beschriebenen Fehlerverteilungen höherer Ordnung oder von Ist-Wirkungsverteilungen, wie z.B. der astigmatischen Ist-Wirkung, der sphärischen Ist-Wirkung oder der prismatischen Ist-Wirkung) wird beispielsweise regelmäßig der Hornhautscheitelabstand, die Pupillendistanz, die Vorneigung des Brillenglases, der Fassungsscheibenwinkel des Brillenglases und die Brillenglasgröße, dazu gehört insbesondere auch die Dicke und/oder die Berandung (Randverlauf), berücksichtigt. Darüber hinaus wird regelmäßig ein Objektabstandsmodell zugrunde gelegt, welches die Position von Objektpunkten im Blickfeld des Brillenträgers relativ zu dessen Augendrehpunkten beschreibt.

Die Restastigmatismusverteilung kann bereits als errechnete mathematische Beschreibung vorliegen (wie im Fall (i)) oder sie lässt sich aus der Verordnung (häufig wird auch der Begriff Rezept verwendet) und einem Objektabstandsmodell (wie im Fall (iii)) oder einer bereits berechneten astigmatischen Wirkungsverteilung für Vollkorrektion (wie im Fall (ii)) ermitteln.

Die Verordnung kann neben den herkömmlichen Refraktionswerten auch weitere dem Brillenträger inhärente physiologische Parameter (also allgemein solche Parameter, die dem Brillenträger eigen sind) sowie die Gebrauchsbedingungen (also allgemein solche Parameter, die der Umgebung des Brillenträgers zuordenbar sind), unter denen das verordnete Gleitsicht-Brillenglas getragen werden soll, umfassen. Zu den inhärenten physiologischen Parametern gehören u.a. die Fehlsichtigkeit, die Akkommodationsfähigkeit und die (ggf. auch monokulare) Pupillendistanz des Brillenträgers. Zu den Gebrauchsbedingungen gehören Informationen zum Sitz der Gläser vor dem Auge und auch Daten, die das Objektabstandsmodell charakterisieren, wie z.B. ob es sich um eine Bildschirmarbeitsplatzbrille handeln soll, welches für die Fernblickrichtung ein Objekt, nämlich den Bildschirm, in einer von unendlich abweichenden Entfernung zugrunde legt. Für den Fall dass, die individuell gemessene oder bestimmte Verordnung bestimmte Gebrauchsbedingungen nicht enthält, werden gewisse Standardwerte angenommen (z.B. Standardvorneigung 9°)

Unter Objektabstandsmodell versteht man eine Annahme für Entfernungen im Raum unter denen der Brillenträger Objekte scharf sehen soll. Bei dem Objektabstandsmodell wird die Objektlage im Allgemeinen auf den Augendrehpunkt bezogen, wie dies oben bereits ausgeführt wurde.

Die Modellrechnung kann berücksichtigen, dass sich die Wirkung und Achslage des Auges bei unterschiedlichen Objektentfernungen und Blickrichtungen ändert. Die Modellrechnung kann insbesondere die sogenannte Listing'sche Regel berücksichtigen. Die Modellrechnung kann z.B. auch die Änderung der astigmatischen Wirkung des Auges für die Nähe und die Ferne berücksichtigen, beispielsweise in der Art wie dies in der DE 10 2015 205 721 A1 beschrieben ist.

Vollkorrektion bezeichnet im Rahmen der vorliegenden Erfindung eine durch das bestimmungsgemäße Tragen der Gleitsicht-Brille bewirkte Korrektion, die es dem Gleitsicht-Brillenträger unter Berücksichtigung der durch die Verordnung repräsentierten Seheigenschaften seines Auges erlaubt, in den Entfernungen angeordnete Objekte, die dem Objektabstandsmodell zugrunde gelegt sind, scharf zu sehen.

Es sei der Vollständigkeit halber darauf hingewiesen, dass der Datenträger, auf dem sich die vorbestimmte Darstellung befindet z.B. anstelle eines Speichers eines Computers auch ein Blatt Papier sein kann. Dies betrifft insbesondere den o.a. Fall (iii), in dem die Verordnung auch auf einem Blatt Papier notiert sein kann.

Eine weitere Ausführungsform des erfindungsgemäßen Erzeugnisses umfasst folgende Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, sowie

- eine oder mehrere der folgenden Darstellungen auf einem Datenträger:

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsform weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Der Brechungsindex des Gleitsicht-Brillenglases variiert bei dieser Ausführungsform räumlich derart, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung, mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Die für den Brillenträger wahrnehmbaren optischen Eigenschaften des Gleitsicht-Brillenglases nach dieser Ausführungsform der Erfindung sind verbessert gegenüber allen Gleitsicht-Brillengläsern konventionellen Typs.

Eine andere Variante des erfindungsgemäßen Erzeugnisses umfasst die nachfolgend angegebenen Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist,
- wenigstens eine der nachfolgenden Darstellungen auf einem Datenträger:

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsvariante weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Das Gleitsicht-Brillenglas besitzt einen Progressionskanal. Der Brechungsindex des Gleitsicht-Brillenglases variiert räumlich derart, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals (z.B. dort, wo die Isoastigmatismuslinien für 1 dpt den geringsten Abstand zueinander haben) oder auf einem horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\ W}$$

wobei grad W der Wirkungsgradient des sphärischen Äquivalents des Gleitsicht-Brillenglases auf dem Punkt auf der Hauptblicklinie an der schmalsten Stelle des Progressionskanals oder in dem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

    (a) 1,0 < c
    (b) 1,1<c
    (c) 1,2 < c
    (d) 1,3 < c

Die für den Brillenträger wahrnehmbaren optischen Eigenschaften des Gleitsicht-Brillenglases nach dieser Ausführungsform der Erfindung sind verbessert gegenüber allen Gleitsicht-Brillengläsern konventionellen Typs.

Ein Beispiel, welches nicht von der Erfindung abgedeckt ist, umfasst ein Gleitsicht-Brillenglas oder eine auf einem Datenträger befindliche Darstellung des Gleitsicht-Brillenglases, wobei das Gleitsicht-Brillenglas eine Vorderfläche und eine Rückfläche sowie einen räumlich variierenden Brechungsindex aufweist. Es sind entweder die Vorderfläche oder die Rückfläche oder beide Flächen als Gleitsichtfläche ausgebildet. Die als Gleitsichtfläche ausgebildete Vorderfläche ist als Freiformfläche ausgebildet und/oder die als Gleitsichtfläche ausgebildete Rückfläche ist als Freiformfläche ausgebildet.

Das Gleitsicht-Brillenglas besteht aus einem keine Einzelschichten aufweisenden Substrat sowie eine oder mehrere Einzelschichten umfassenden Vorderflächenbeschichtung auf der Vorderfläche des Substrats und/oder einer eine oder mehrere Einzelschichten umfassenden Rückflächenbeschichtung auf der Rückfläche des Substrats. Nur das Substrat weist den räumlich variierenden Brechungsindex auf.

Nach dem Beispiel ist ein Unterschied zwischen dem sphärischen Äquivalent gemessen in jedem Punkt auf der Vorderfläche des Gleitsicht-Brillenglases mit der Vorderflächenbeschichtung und/oder der Rückflächenbeschichtung und dem sphärischen Äquivalent gemessen in jedem korrespondierenden Punkt auf der Vorderfläche eines Vergleichs-Gleitsicht-Brillenglases ohne Vorderflächenbeschichtung und ohne Rückflächenbeschichtung aber identischem Substrat (mit identischer Geometrie und identischem Brechungsindex) kleiner als ein Wert aus der nachfolgend angegebenen Gruppe:

    (a) der Unterschiedswert ist kleiner als 0,001 dpt
    (b) der Unterschiedswert ist kleiner als 0,002 dpt
    (c) der Unterschiedswert ist kleiner als 0,003 dpt
    (d) der Unterschiedswert ist kleiner als 0,004 dpt.

Diese Variante kann selbstverständlich auch eine oder mehrere der vorstehend beschriebenen Merkmale aufweisen.

Oben wurde ausgeführt, dass die Erfinder erkannt haben, dass es auf das Zusammenspiel des Grads der Komplexität der Geometrie der Gleitsichtfläche und des Grads der Komplexität der Brechungsindexverteilung ankommt. Sie schlagen daher abweichend von der in der WO 89/04986 A1 beschriebenen Lösung ein computerimplementiertes Verfahren zum Entwerfen eines Gleitsicht-Brillenglases mit einer Vorderfläche und einer Rückfläche und einem räumlich variierenden Brechungsindex, bei dem entweder die Vorderfläche oder die Rückfläche oder beide Flächen als Gleitsichtfläche ausgebildet sind, in Form eines Strahldurchrechnungsverfahrens vor. Mittels des Strahldurchrechnungsverfahrens werden optische Eigenschaften des Gleitsicht-Brillenglases an einer Vielzahl von Bewertungsstellen, durch die Sehstrahlen das Gleitsicht-Brillenglas durchsetzen, berechnet. Bei diesem Strahldurchrechnungsverfahren wird wenigstens eine optische Soll-Eigenschaft für das Gleitsicht-Brillenglas an der jeweiligen Bewertungsstelle festgelegt. Zunächst wird ein Entwurf für das Gleitsicht-Brillenglas festgelegt, wobei dieser Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst. Der Entwurf des Gleitsicht-Brillenglases wird im Hinblick auf eine Approximierung der wenigstens einen optischen Soll-Eigenschaft des Gleitsicht-Brillenglases modifiziert. Das Modifizieren umfasst nicht nur ein Modifizieren der Repräsentation der lokalen Flächengeometrie der Gleitsichtfläche, sondern auch des lokalen Brechungsindex des Gleitsicht-Brillenglases im jeweiligen Sehstrahlengang durch die Bewertungsstellen, wobei die wenigstens eine optische Soll-Eigenschaft einen Soll-Restastigmatismus des Gleitsicht-Brillenglases umfasst.

Die der modifizierten Gleitsichtfläche gegenüberliegende Fläche wird in der Regel fest vorgegeben. Diese weist im Allgemeinen eine einfache Flächengeometrie, wie z.B. eine sphärische, rotationssymmetrisch asphärische oder torische Geometrie auf. Im Fall einer torischen Fläche ist die Flächengeometrie und Achslage häufig so gewählt, dass sie (abgesehen vom unerwünschten Rest-Astigmatismus) das astigmatische Refraktionsdefizit des Auges des Gleitsicht-Brillenträgers ausgleicht. Die der modifizierten Gleitsichtfläche gegenüberliegende Fläche kann auch eine Gleitsichtfläche, ggf. auch eine Freiformfläche, mit fest vorgegebener Flächengeometrie sein. Diese kann zu dem zur Bereitstellung der Addition notwendigen Wirkungsanstieg beitragen. Auch die modifizierte Gleitsichtfläche kann zu dem zur Bereitstellung der Addition notwendigen Wirkungsanstieg beitragen. Es ist auch möglich, dass beide Flächen, nämlich Vorder- und Rückfläche zusammen mit der Brechungsindexverteilung zur Approximierung der Soll-Restastigmatismusverteilung modifiziert werden. Strahldurchrechnungsverfahren zur Verwendung beim Entwurf von Gleitsicht-Brillengläsern sind bekannt. Es wird insbesondere auf Werner Köppen: Konzeption und Entwicklung von Progressivgläsern, in Deutsche Optiker Zeitung DOZ 10/95, S. 42-46 sowie die EP 2 115 527 B1 und die darin genannten Druckschriften hingewiesen. Die Berechnung optimierter ortsabhängiger Brechungsindexverteilungen mittels optischer Rechenprogramme, wie beispielsweise das Rechenprogramm ZEMAX von der Finna Zemax, LLC, ist ebenfalls bekannt. Es wird z.B. auf deren Internetauftritt unter http://www.zemax.com/ verwiesen.

Die Festlegung von Soll-Eigenschaften für ein Brillenglas bezieht sich auf das sogenannte Design eines Brillenglases. Ein Design eines Brillenglases umfasst üblicherweise die Verteilung der Soll-Werte für eine oder mehreren Abbildungsfehler, welche vorzugsweise in die Optimierung des Brillenglases als Zielwerte oder bei der Bestimmung der Zielwerte eingehen. Insbesondere wird ein Brillenglasdesign durch die Verteilung des Refraktionsfehlers (d.h. die Differenz des sphärischen Äquivalents des Gleitsicht-Brillenglases im Strahlengang in Gebrauchsstellung von dem sphärischen Äquivalent, welches mittels Refraktionsbestimmung ermittelt wird) und/oder die Verteilung des Restastigmatismus (d.h. die Differenz des Astigmatismus des Brillenglases von dem Astigmatismus, welcher mittels Refraktionsbestimmung ermittelt wird) charakterisiert. Anstelle des Begriffs Restastigmatismusverteilung werden in der Literatur auch die Begriffe Astigmatismusfehlerverteilung und astigmatische Abweichung verwendet. Ferner kann ein Brillenglasdesign ebenfalls die Verteilung der Soll-Werte für Vergrößerungs-, Verzerrungs- oder anderen Abbildungsfehler, insbesondere von Abbildungsfehlern höherer Ordnung, wie dies in der EP 2 115 527 B1 beschrieben ist, umfassen. Dabei kann es sich um Flächenwerte oder vorzugsweise um Gebrauchswerte, d.h. Werte in Gebrauchsstellung des Brillenglases handeln.

Nach dem Beispiel wird der Entwurf des Gleitsicht-Brillenglases mit dem Ziel dem vorgegebenen Soll-Restastigmatismus möglichst nahe zu kommen modifiziert. Der Soll-Restastigmatismus kann beispielsweise an allen Bewertungsstellen zu Null gesetzt werden. Es ist auch möglich, eine Restastigmatismusverteilung vorzugeben, die vorzugsweise weit niedrigere Werte hat, als die, die mit einem herkömmlichen Gleitsicht-Brillenglas mit räumlich nicht variierendem Brechungsindex aber freigeformter Rück- (und/oder Vorderfläche) theoretisch überhaupt erreichbar ist bzw. für die Optimierung eines derartigen Gleitsicht-Brillenglases vorgegeben wird. Die Zahl der Bewertungsstellen liegt nach Werner Köppen: Konzeption und Entwicklung von Progressivgläsern, in Deutsche Optiker Zeitung DOZ 10/95, S. 42-46 üblicherweise im Bereich zwischen 1000 und 1500. Die EP 2 115 527 B1 schlägt eine Zahl von über 8000 Bewertungsstellen vor.

Um diesem Ziel möglichst nahe zu kommen wird nicht nur die Flächengeometrie der (späteren) Gleitsichtfläche an der Bewertungsstelle lokal verändert, sondern auch der lokale Brechungsindex in dem vom Strahlengang durchsetzten Medium des Gleitsicht-Brillenglases bei der Bewertungsstelle. Unter Medium versteht man das Material oder die Materialien, aus denen das Gleitsicht-Brillenglas besteht.

Um dem Ziel möglichst nahe zu kommen, muss dieser Vorgang des Modifizierens in der Regel mehrfach, d.h. iterativ durchgeführt werden. Es soll dabei noch einmal klar gestellt werden, dass beim Modifizieren, insbesondere bei der Iteration sowohl die lokale Flächengeometrie als auch der lokale Brechungsindex frei variieren können und weder die lokale Flächengeometrie noch der lokale Brechungsindex festgehalten wird. Demgegenüber lehrt die WO 89/04986 A1 die Vorgabe vergleichsweise einfacher Geometrien für Vorder- und Rückfläche und die Suche nach einer geeigneten Brechungsindexverteilung, um den für die Bereitstellung der Addition notwendigen Wirkungsanstieg herzustellen und um ggf. den (Rest-)Astigmatismus entlang der Hauptblicklinie ganz oder teilweise zu beheben sowie weiter ggf. Korrekturen von Abbildungsfehlern seitlich des Hauptmeridians vorzunehmen.

Obwohl der Brechungsindex in der Regel wellenlängenabhängig ist, wird im Allgemeinen die Dispersion nicht berücksichtigt und die Durchrechnung erfolgt für eine sogenannte Designwellenlänge. Es ist aber nicht ausgeschlossen, dass ein Optimierungsprozess unterschiedliche Designwellenlängen berücksichtigt, wie z.B. in der EP 2 383 603 B1 beschrieben ist.

Da die Modifikation mit dem Ziel erfolgt, optischen Soll-Eigenschaften möglichst nahe zu kommen, spricht der Fachmann auch von Optimierung. Die Modifikation wird so lange durchgeführt, bis ein Abbruchkriterium erfüllt ist. Im Idealfall besteht das Abbruchkriterium darin, dass das entworfene Gleitsicht-Brillenglas die vorgegebenen optischen Soll-Eigenschaften aufweist. In dem Fall, in dem der Restastigmatismus an allen Bewertungsstellen zu Null gesetzt wird, wäre dieser Idealfall, dass der Restastigmatismus des berechneten Brillenglases tatsächlich an allen Bewertungsstellen Null ist. Da dies jedoch regelmäßig, insbesondere in dem beschriebenen Fall, nicht gegeben sein wird, erfolgt ein Abbruch der Berechnung z.B. nach Erreichen eines oder mehrerer Grenzwerte in der Umgebung der Soll-Eigenschaft(en) oder nach Erreichen einer vorgegebenen Anzahl an Iterationen.

Üblicherweise basiert die Ermittlung der Soll-Eigenschaften und die Berechnung der Ist-Eigenschaften auf Modellrechnungen, die die Gebrauchsbedingungen, nämlich z.B. den Sitz der Brillengläser vor dem Auge und ein Objektabstandsmodell sowie physiologische Parameter des Brillenträgers, nämlich z.B. die Fehlsichtigkeit, die Akkommodationsfähigkeit und die Pupillendistanz berücksichtigen. Details wurden oben bereits beschrieben.

Ergebnis der Approximierung der wenigstens einen optischen Soll-Eigenschaft(en) des Gleitsicht-Brillenglases durch Modifikation des lokalen Brechungsindex und der lokalen Flächengeometrie ist in der Regel, dass die als Gleitsichtfläche ausgebildete Vorderfläche als Freiformfläche ausgebildet ist und/oder dass die als Gleitsichtfläche ausgebildete Rückfläche als Freiformfläche ausgebildet ist.

Die eingangs gestellte Aufgabe wird durch das vorstehend beschriebene Verfahren vollumfänglich gelöst.

Eine Ausführungsvariante dieses Verfahrens ist dadurch gekennzeichnet, dass die Modifikation des Entwurfs des Gleitsicht-Brillenglases im Hinblick auf eine Minimierung einer Zielfunktion erfolgt. In der deutschsprachigen Literatur wird eine derartige Zielfunktion auch als Kostenfunktion und in der angelsächsischen Literatur als Merit-Function bezeichnet. Sehr häufig wird beim Entwerfen von Gleitsicht-Brillengläsern als Methode zur Minimierung einer Zielfunktion die Methode der kleinsten Fehlerquadrate angewandt, wie dies z.B. auch in der EP 0 857 993 B2, der EP 2 115 527 B1 oder auch in Werner Köppen: Konzeption und Entwicklung von Progressivgläsern, in Deutsche Optiker Zeitung DOZ 10/95, S. 42-46 praktiziert wird. Die Ausführungsvariante wendet diese Methode mit der nachfolgend wiedergegebenen Zielfunktion

$$F = \sum_m P_m \sum_n W_n \left( T_n - A_n \right)^2$$

an. In dieser Zielfunktion F ist $P_m$ die Gewichtung an der Bewertungsstelle m, $W_n$ die Gewichtung der optischen Eigenschaft n, $T_n$ der Soll-Wert der optischen Eigenschaft n an der jeweiligen Bewertungsstelle m und $A_n$ der Ist-Wert der optischen Eigenschaft n an der Bewertungsstelle m.

Die Anwendung dieser Methode hat sich zum Entwurf von Gleitsicht-Brillengläsern herkömmlicher Art bewährt. Es wird hiermit vorgeschlagen, diese Methode auch zum Entwerfen von erfindungsgemäßen Gradientenindex (GRIN) Gleitsicht-Brillengläsern zu verwenden.

Eine besonders vorteilhafte Ausführungsvariante des Verfahrens ist dadurch gekennzeichnet, dass für wenigstens eine Bewertungsstelle ein Soll-Restastigmatismus vorgegeben wird, der kleiner ist, als der theoretisch erreichbare Restastigmatismus an der wenigstens einen entsprechenden Bewertungsstelle bei einem Vergleichs-Gleitsicht-Brillenglas für eine gleiche Verordnung, mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex und dass das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen erst dann abgebrochen wird, wenn der für das entworfene Gleitsicht-Brillenglas erreichte Restastigmatismus an der wenigstens einen Bewertungsstelle kleiner ist als der theoretisch erreichbare Restastigmatismus an der wenigstens einen entsprechenden Bewertungsstelle bei dem Vergleichs-Gleitsicht-Brillenglas.

Man kann -wie oben bereits ausgeführt wurde- den Soll-Restastigmatismus an allen Bewertungsstellen zu Null setzen. Um ein Gleitsicht-Brillenglas zu entwerfen, welches ganzflächig bessere optische Eigenschaften hat, als eine Vergleichs-Gleitsicht-Brillenglas der herkömmlichen Art, wird man den Soll-Restastigmatismus an allen Bewertungsstellen zumindest um einen signifikanten Prozentsatz, von z.B. 10 - 50 % geringer wählen, als zum Entwurf des Vergleichs-Gleitsicht-Brillenglases üblicherweise angesetzt wird. Im Allgemeinen wird an wenigstens den Bewertungsstellen ein Soll-Restastigmatismus vorgegeben werden, der kleiner ist, als der theoretisch erreichbare Restastigmatismus an den wenigstens entsprechenden Bewertungsstellen bei dem Vergleichs-Gleitsicht-Brillenglas, welche innerhalb des späteren Progressionskanals liegen sollen. Eine Verbreiterung des Progressionskanals ist nämlich stets wünschenswert.

Zusätzlich oder alternativ zu der vorstehend beschriebenen vorteilhaften Ausführungsvariante besteht eine Verfahrensvariante darin, das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen, mit der Maßgabe durchzuführen, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex. Grundsätzlich muss der Maximalwert für den Restastigmatismus bei dem entworfenen Gleitsicht-Brillenglas nicht am "gleichen" Ort bzw. an der "gleichen" Bewertungsstelle gelegen sein wie der Maximalwert für den Restastigmatismus beim Vergleichs-Gleitsicht-Brillenglas. Als Zusatzbedingung kommt dies bei der Durchführung des Verfahrens aber auch in Betracht. Durch diese Vorgaben werden die optischen Eigenschaften des Gleitsicht-Brillenglases gegenüber einem Vergleichs-Gleitsicht-Brillenglas herkömmlicher Fabrikationsart weiter verbessert.

Das Verfahren kann in einer Ausführungsvariante so durchgeführt werden, dass beim Entwerfen des Gleitsicht-Brillenglases ein Gleitsicht-Brillenglas entsprechend einem Erzeugnis der vorstehend beschriebenen Arten resultiert. Die Vorteile dieser Erzeugnisse wurden oben bereits im Detail beschrieben.

Es ist in einer weiteren Verfahrensvariante sogar vorgesehen, dass das Entwerfen des Gleitsicht-Brillenglases gerade mit der Maßgabe erfolgt, ein Gleitsicht-Brillenglas entsprechend einem Erzeugnis nach einem der der vorstehend beschriebenen Arten zu erzeugen. Die Soll-Eigenschaften und die Abbruchbedingungen werden bei dieser weiteren Variante so gewählt, dass zwangsläufig das entsprechende Gleitsicht-Brillenglas mit den oben beschriebenen optischen Eigenschaften bei der durch die Darstellung vorgegebenen Anordnung vor dem Auge des zukünftigen Brillenträgers beim Entwerfen entsteht.

Die Erfindung sieht weiter ein Computerprogramm mit Programmcode zur Durchführung aller Verfahrensschritte nach einem der vorstehend beschriebenen Verfahren vor, wenn das Computerprogramm in einem Computer geladen und/oder in einem Computer ausgeführt wird. Das Computerprogramm kann auf jedem computerlesbaren Medium, insbesondere auf einer Festplatte eines Computers, auf einem USB-Stick oder auch in einer Cloud abgelegt sein. Demnach such die Erfindung auch Schutz für ein computerlesbares Medium mit einem Computerprogramm der vorstehend beschriebenen Art.

Die Erfindung bezieht sich auch auf ein Verfahren zum Herstellen eines Gleitsicht-Brillenglases nach einem der vorangehend beschriebenen Erzeugnisse oder eines unter Verwendung eines Verfahrens der vorstehend beschriebenen Varianten entworfenen Gleitsicht-Brillenglases durch ein additives Verfahren.

Additive Verfahren sind Verfahren, bei denen das Gleitsicht-Brillenglas sequentiell aufgebaut wird. Insbesondere ist in diesem Zusammenhang bekannt, dass insbesondere sogenannte digitale Fabrikatoren Fertigungsmöglichkeiten für nahezu beliebige Strukturen bieten, die mit den klassischen abrasiven Verfahren nicht oder nur schwer realisierbar sind. Innerhalb der Maschinenklasse der digitalen Fabrikatoren stellen die 3D-Drucker die wichtigste Teilklasse der additiven, also anhäufenden, aufbauenden Fabrikatoren dar. Die wichtigsten Techniken des 3D-Druckens sind das selektive Laserschmelzen (SLM) und das Elektronenstrahlschmelzen für Metalle und das selektive Lasersintern (SLS) für Polymere, Keramik und Metalle, die Stereolithografie (SLA) und das Digital Light Processing für flüssige Kunstharze und das Multijet- oder Polyjet-Modeling (z.B. Tintenstrahldrucken) sowie das Fused Deposition Modeling (FDM) für Kunststoffe und teilweise Kunstharze. Weiter bekannt ist auch ein Aufbau mit Hilfe von Nanoschichten, wie dies z.B. unter http://peaknano.com/wpcontent/uploads/PEAK-1510-GRINOptics-Overview.pdf, heruntergeladen am 12.1.2017 beschrieben ist.

Ausgangsmaterialien für die Fertigung mittels 3D-Druck sowie Möglichkeiten für das 3D-Fertigungsverfahren selbst entnimmt man z.B. der europäischen Patentanmeldung Nr. 16195139.7.

Eine Weiterbildung der Erfindung besteht in einem Verfahren zum Herstellen eines Gleitsicht-Brillenglases umfassend ein Verfahren zum Entwerfen eines Gleitsicht-Brillenglases wie oben beschrieben und Fertigen des Gleitsicht-Brillenglases nach dem Entwurf.

Das Fertigen des Gleitsicht-Brillenglases nach dem Entwurf kann erfindungsgemäß wiederum durch ein additives Verfahren erfolgen.

Eine andere Weiterbildung der Erfindung besteht in einem Computer mit einem Prozessor, der eingerichtet ist, ein Verfahren zum Entwerfen eines Gleitsicht-Brillenglases nach einem der oben beschriebenen Arten oder Varianten auszuführen.

Die Erfindung wird nachfolgend anhand der Zeichnungen näher beschrieben. Es zeigen:

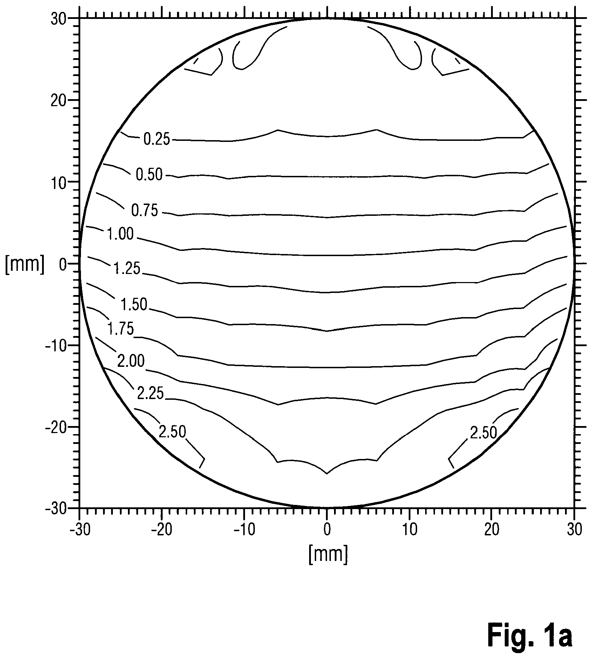

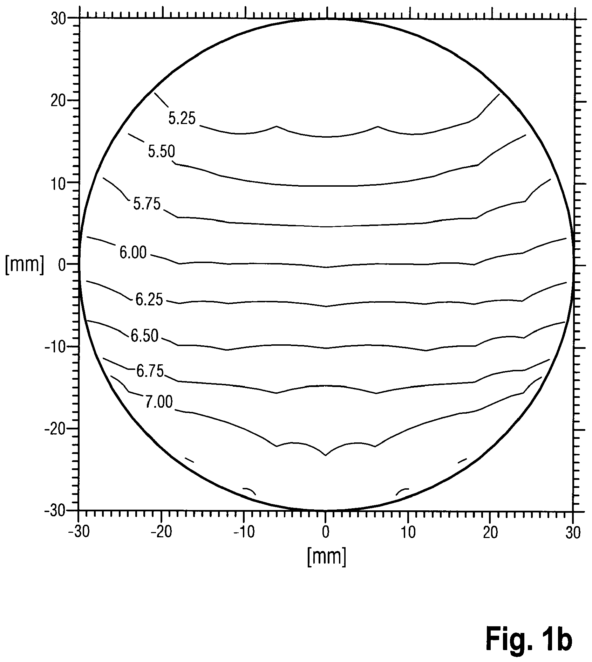

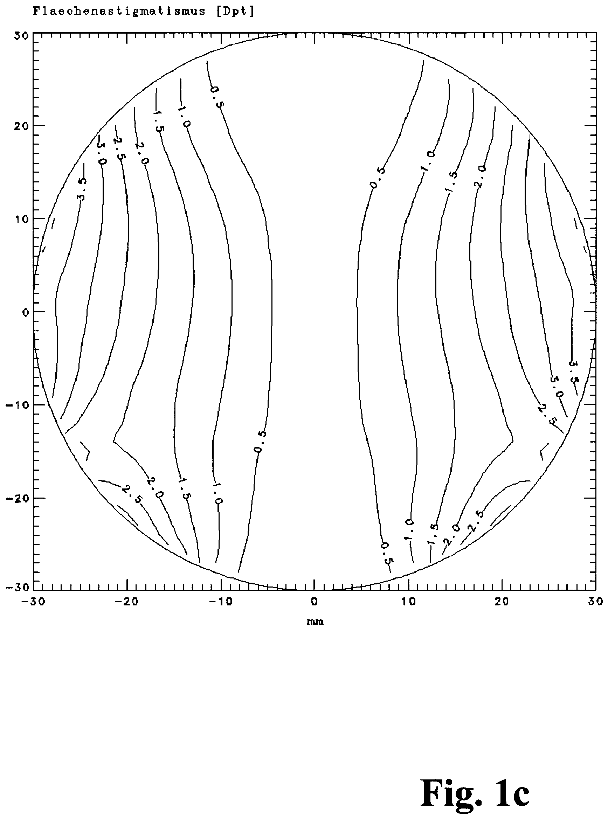

Figur 1 optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem ersten Ausführungsbeispiel nach der Erfindung

a: mittlere sphärische Wirkung des Vergleichs-Gleitsicht-Brillenglases

b: mittlerer Flächenbrechwert des Vergleichs-Gleitsicht-Brillenglases, objektseitige Freiformfläche

c: mittlerer Flächenastigmatismus für n=1.600 der objektseitigen Freiformfläche des Vergleichs-Gleitsicht-Brillenglases der Figur 1a

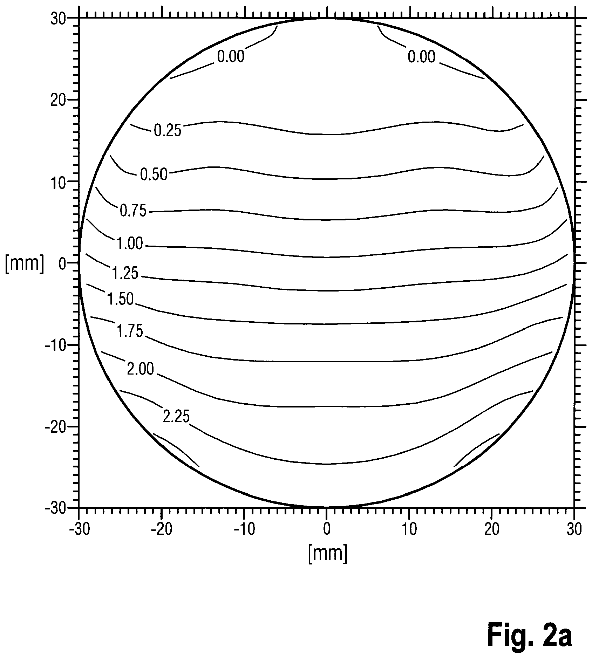

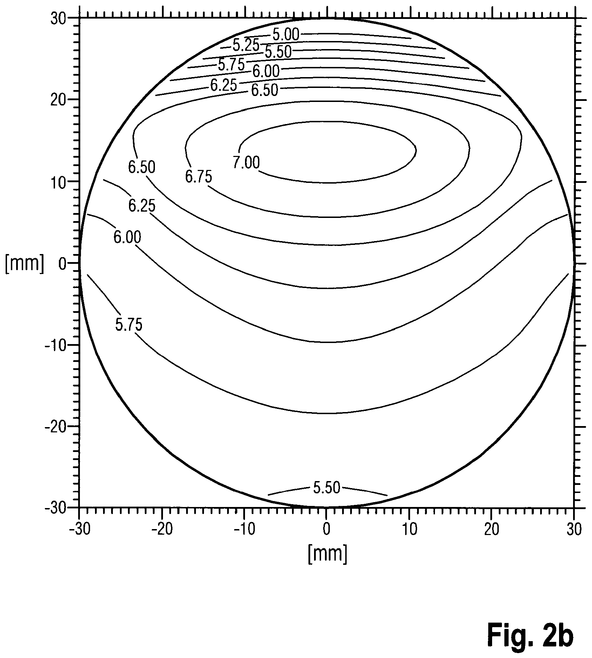

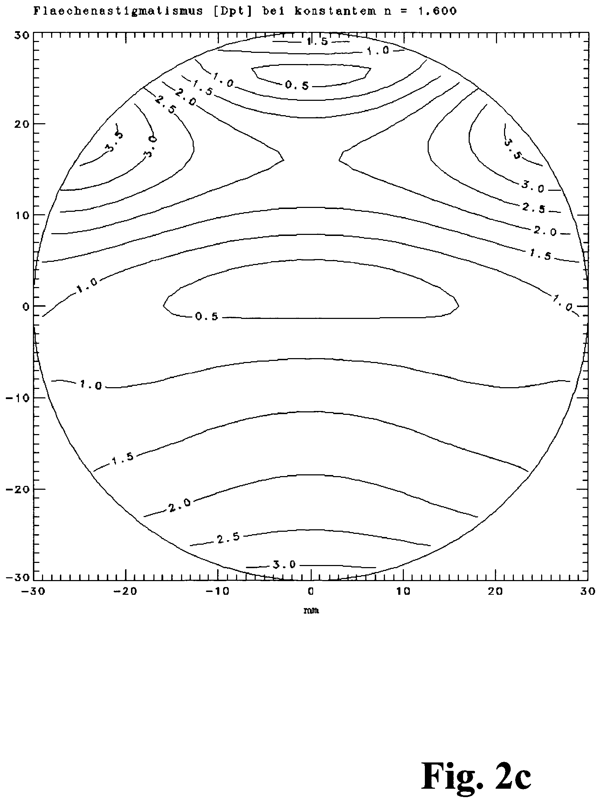

Figur 2 optische Eigenschaften des GRIN-Gleitsicht-Brillenglases nach dem ersten Ausführungsbeispiel

a: mittlere sphärische Wirkung

b: mittlerer Flächenbrechwert gerechnet für eine konstante Brechzahl n=1.600 für die objektseitige Freiformfläche

c: mittlerer Flächenastigmatismus für n=1.600 der objektseitigen Freiformfläche des GRIN-Gleitsicht-Brillenglases der Figur 2a

Figur 3    die Verteilung der Brechzahl des GRIN-Gleitsicht-Brillenglases nach dem ersten Ausführungsbeispiel
Figur 4    Vergleich der Restastigmatismusverteilung des GRIN-Gleitsicht-Brillenglases nach dem ersten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des erfindungsgemäßen GRIN-Gleitsicht-Brillenglases nach dem ersten Ausführungsbeispiel

Figur 5    Vergleich des Restastigmatismusverlaufs des GRIN-Gleitsicht-Brillenglases nach dem ersten Ausführungsbeispiel mit dem Restastigmatismusverlauf des Vergleichs-Gleitsicht-Brillenglases längs eines Schnitts bei y=0 nach der Figur 4

a: Restastigmatismusverlauf des Vergleichs-Gleitsicht-Brillenglases
b: Restastigmatismusverlauf des erfindungsgemäßen GRIN-Gleitsicht-Brillenglases nach dem ersten Ausführungsbeispiel

Figur 6    Vergleich der Kontur der Vorderfläche des GRIN-Gleitsicht-Brillenglases nach dem ersten Ausführungsbeispiel mit der Kontur der Vorderfläche des Vergleichs-Gleitsicht-Brillenglases

a: Pfeilhöhen der Vorderfläche des Vergleichs-Gleitsicht-Brillenglases
b: Pfeilhöhen der Vorderfläche des erfindungsgemäßen GRIN-Gleitsicht-Brillenglases nach dem ersten Ausführungsbeispiel

Figur 7    optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem zweiten Ausführungsbeispiel nach der Erfindung

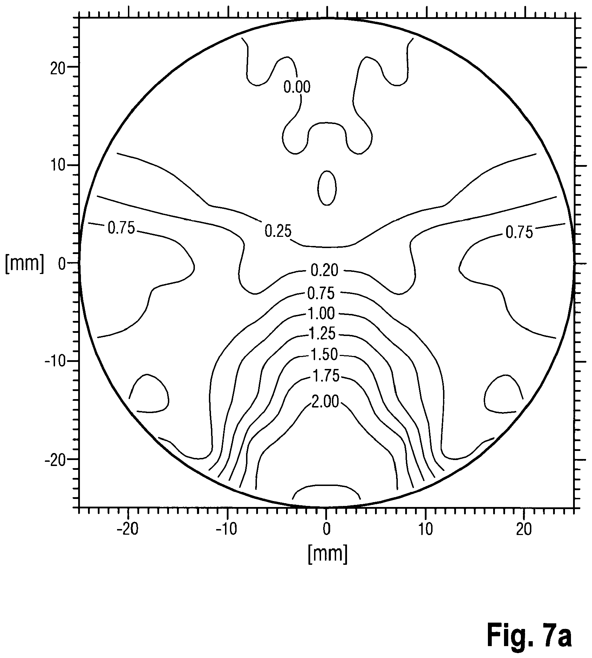

a: mittlere sphärische Wirkung
b: mittlerer Flächenbrechwert, objektseitige Freiformfläche
c: Flächenastigmatismus für n=1.600 der objektseitigen Freiformfläche des Vergleichs-Gleitsicht-Brillenglases der Figur 7a

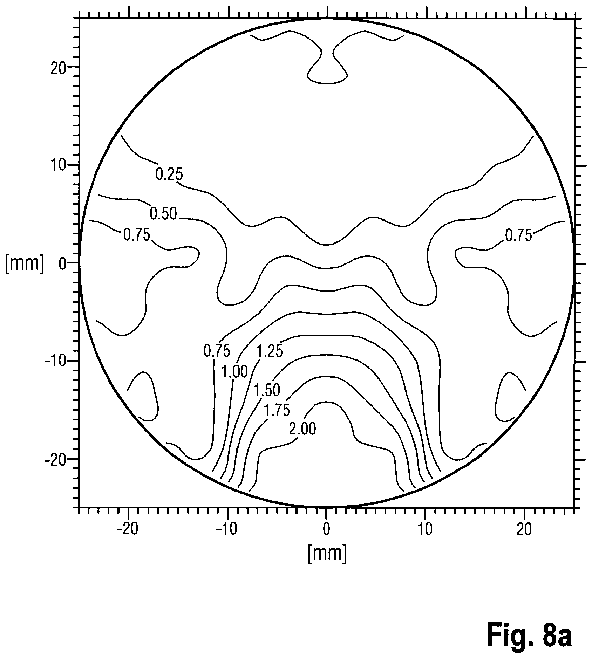

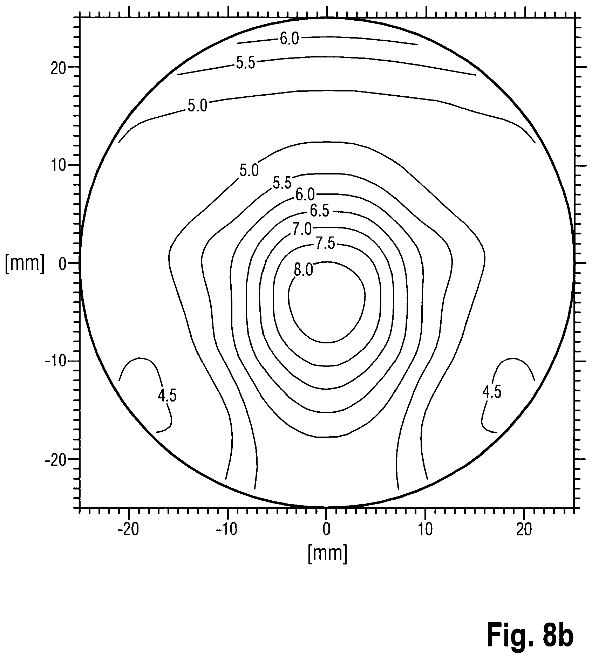

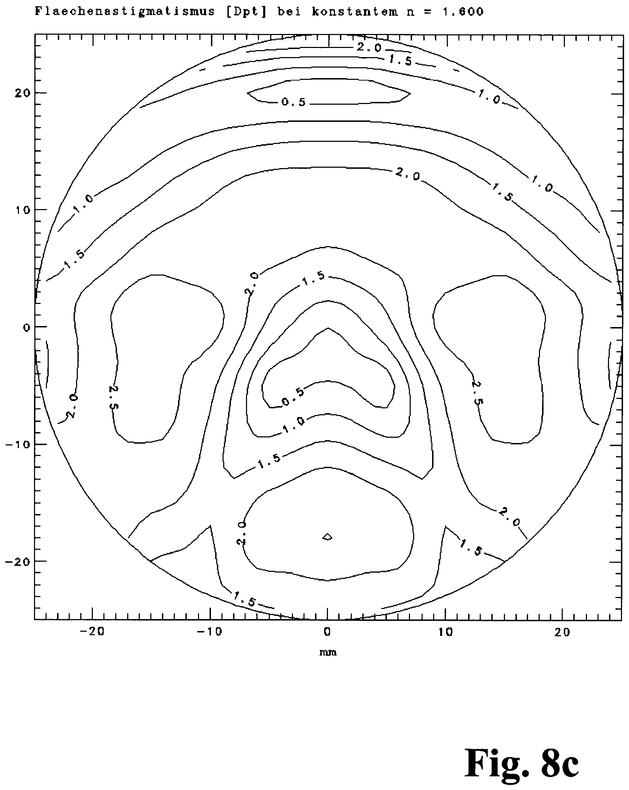

Figur 8    optische Eigenschaften des GRIN-Gleitsicht-Brillenglases nach dem zweiten Ausführungsbeispiel

a: mittlere sphärische Wirkung

b: mittlerer Flächenbrechwert gerechnet für eine Brechzahl n=1.600 für die objektseitige Fläche

c: Verlauf des Flächenastigmatismus der Vorderfläche des erfindungsgemäßen GRIN-Gleitsicht-Brillenglases nach dem zweiten Ausführungsbeispiel

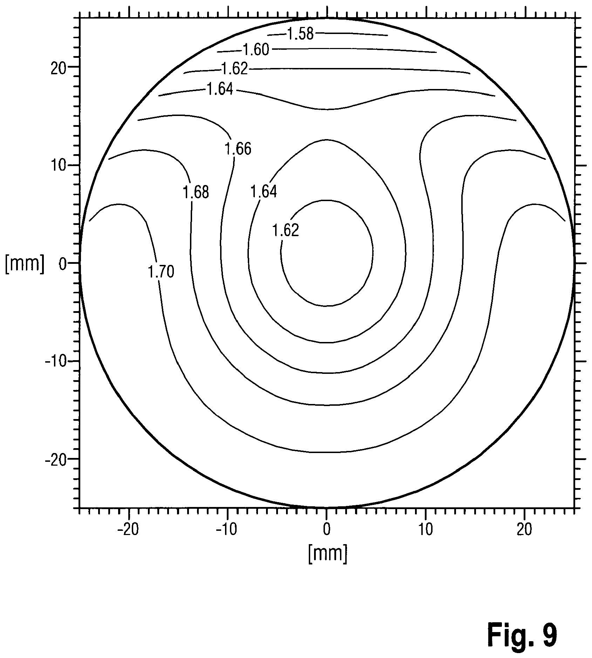

Figur 9    die Verteilung der Brechzahl des GRIN-Gleitsicht-Brillenglases nach dem zweiten Ausführungsbeispiel

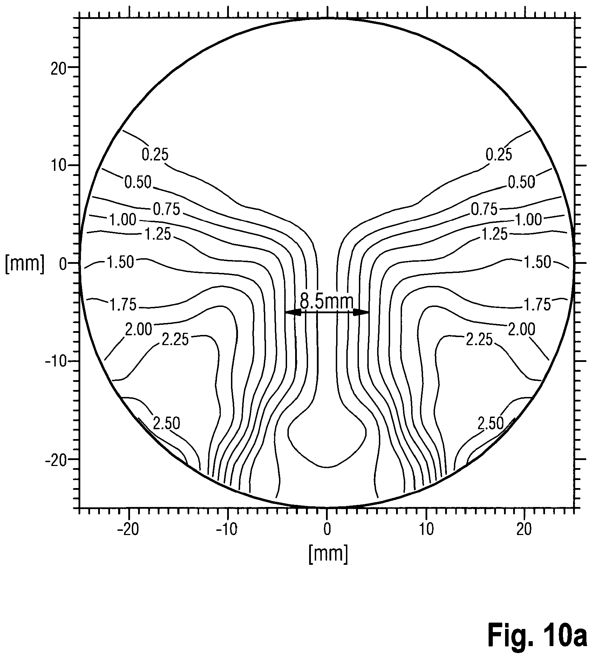

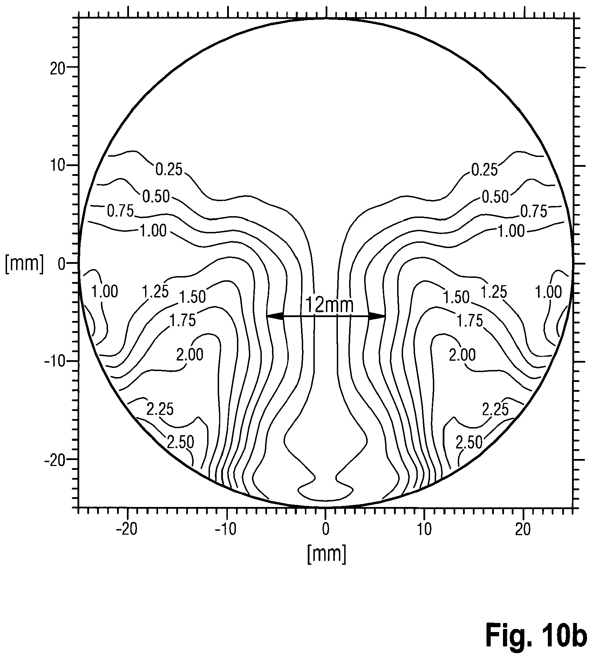

Figur 10    Vergleich der Restastigmatismusverteilung des GRIN-Gleitsicht-Brillenglases nach dem zweiten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des erfindungsgemäßen GRIN-Gleitsicht-Brillenglases nach dem zweiten Ausführungsbeispiel

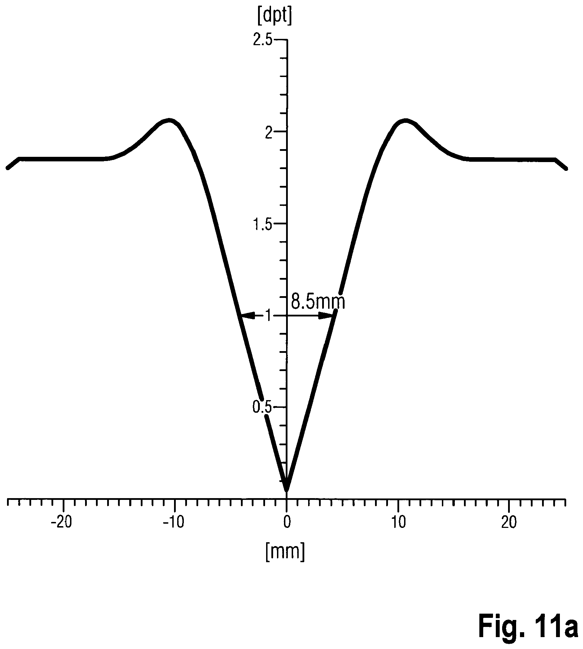

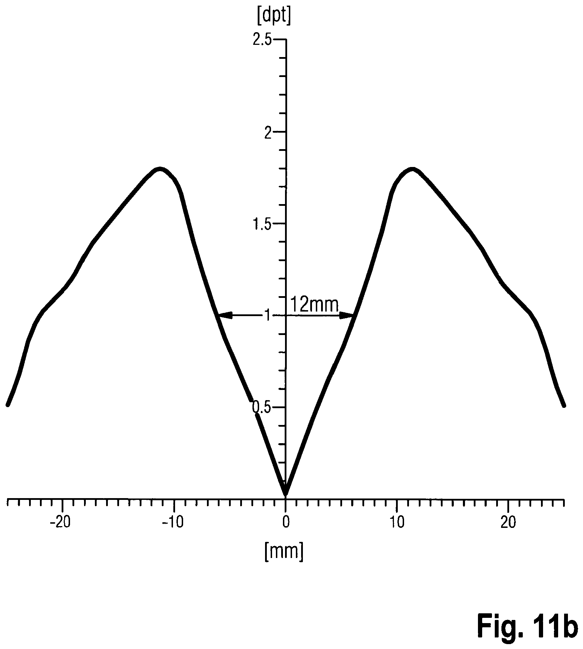

Figur 11    Vergleich der Restastigmatismusverlaufs des GRIN-Gleitsicht-Brillenglases nach dem zweiten Ausführungsbeispiel mit dem Restastigmatismusverlauf des Vergleichs-Gleitsicht-Brillenglases längs eines Schnitts bei y = -5 mm nach der Figur 10

a: Restastigmatismusverlauf des Vergleichs-Gleitsicht-Brillenglases

b: Restastigmatismusverlauf des erfindungsgemäßen GRIN-Gleitsicht-Brillenglases nach dem ersten Ausführungsbeispiel

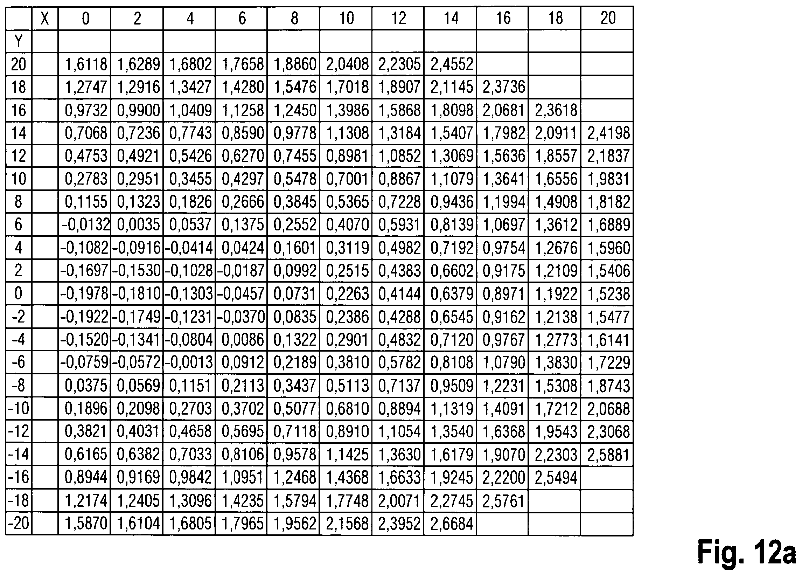

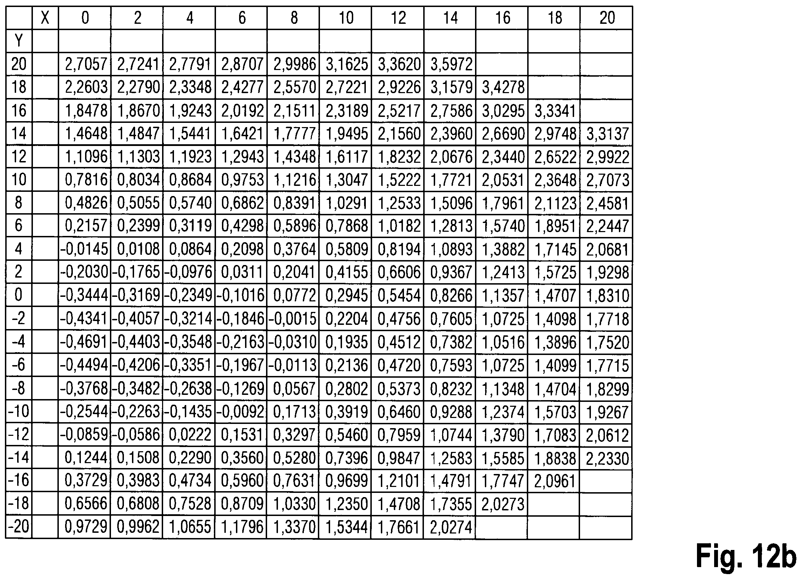

Figur 12     Vergleich der Kontur der Vorderfläche des GRIN-Gleitsicht-Brillenglases nach dem zweiten Ausführungsbeispiel mit der Kontur der Vorderfläche des Vergleichs-Gleitsicht-Brillenglases; die Pfeilhöhen sind gegenüber einer um -7,02° um die horizontale Achse verkippten Ebene angegeben

a: Pfeilhöhen der Vorderfläche des erfindungsgemäßen GRIN-Gleitsicht-Brillenglases nach dem zweiten Ausführungsbeispiel

b: Pfeilhöhen der Vorderfläche des Vergleichs-Gleitsicht-Brillenglases

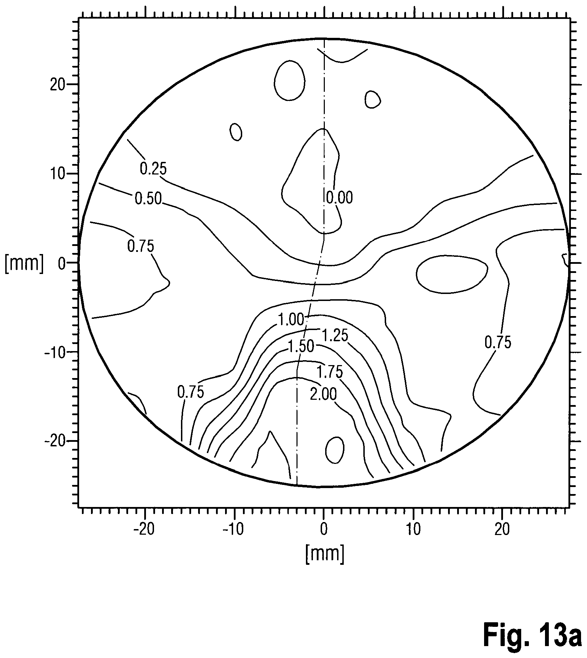

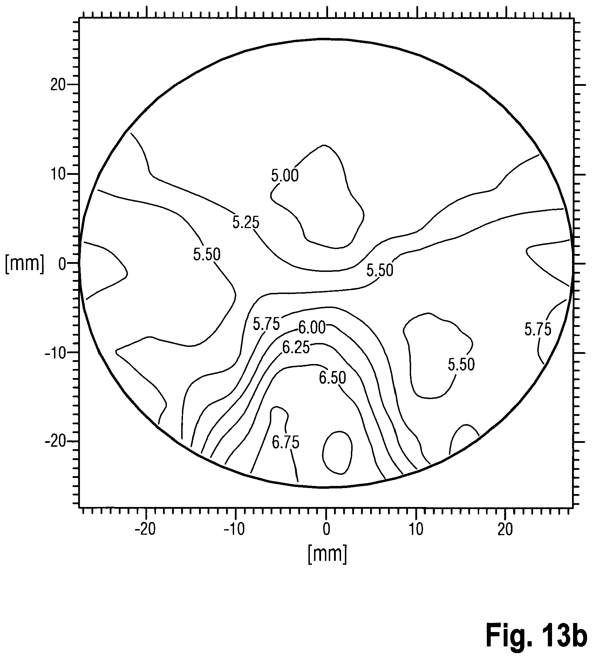

Figur 13     optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas ohne jegliche Symmetrie nach einem dritten Ausführungsbeispiel nach der Erfindung

a: mittlere sphärische Wirkung des Vergleichs-Gleitsicht-Brillenglases

b: mittlerer Flächenbrechwert des Vergleichs-Gleitsicht-Brillenglases, objektseitige Freiformfläche

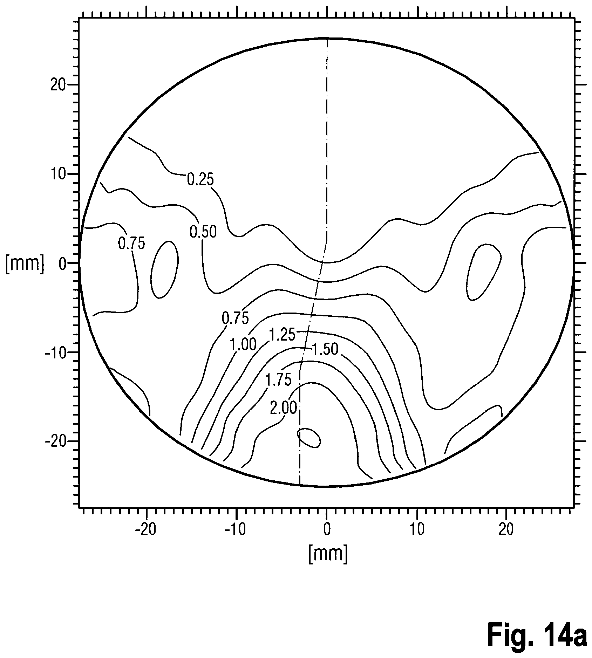

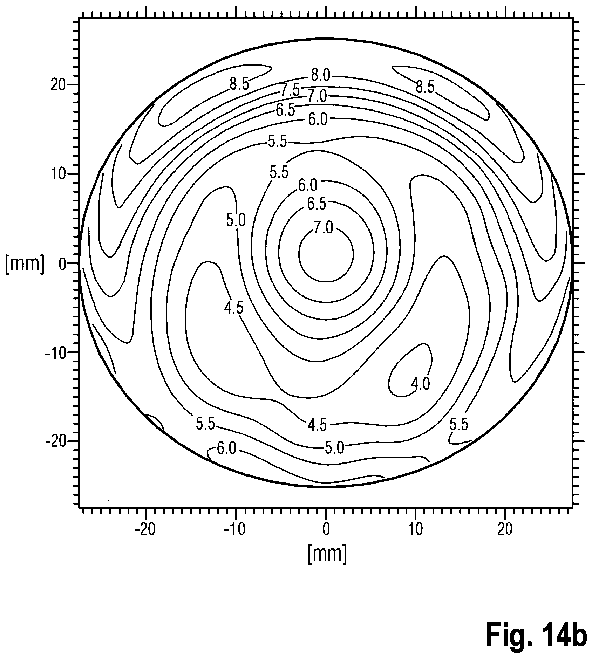

Figur 14     optische Eigenschaften des GRIN-Gleitsicht-Brillenglases nach dem dritten Ausführungsbeispiel

a: mittlere sphärische Wirkung

b: mittlerer Flächenbrechwert gerechnet für eine Brechzahl n=1.600

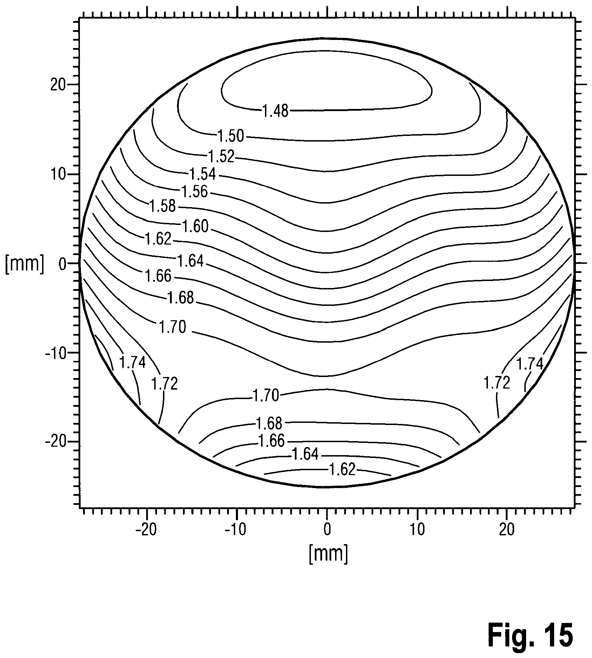

Figur 15     die Verteilung der Brechzahl des GRIN-Gleitsicht-Brillenglases nach dem dritten Ausführungsbeispiel

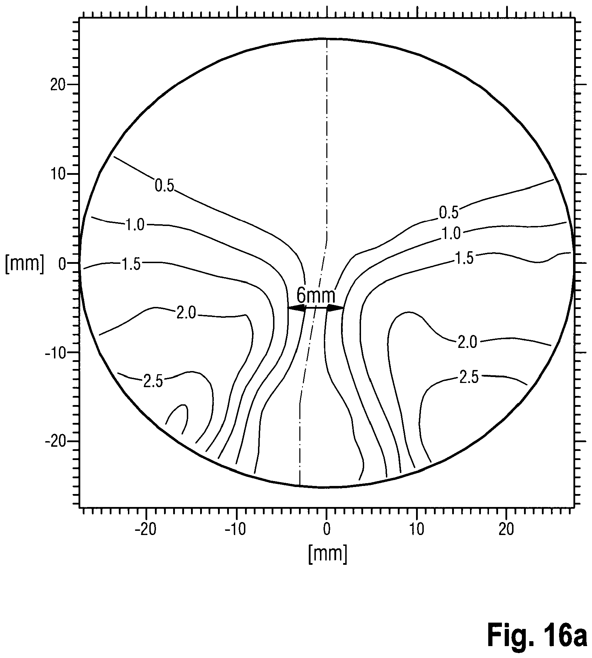

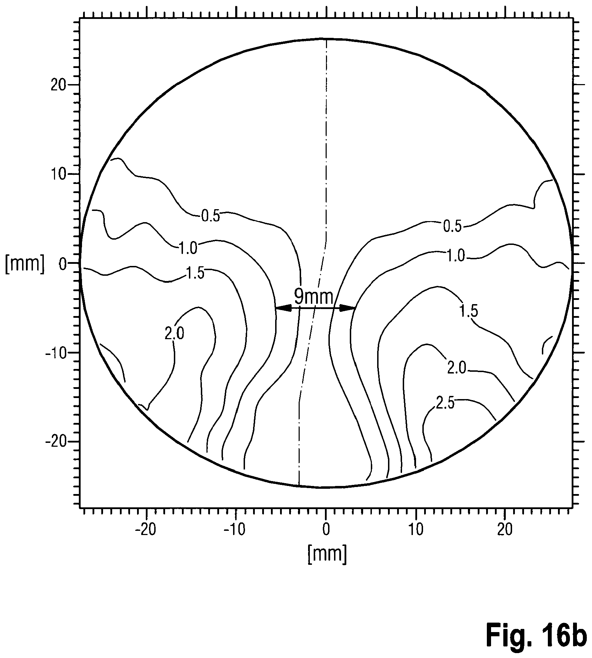

Figur 16     Vergleich der Restastigmatismusverteilung des GRIN-Gleitsicht-Brillenglases nach dem dritten Ausführungsbeispiel mit der Restastigmatismusverteilung des Vergleichs-Gleitsicht-Brillenglases

a: Restastigmatismusverteilung des Vergleichs-Gleitsicht-Brillenglases

b: Restastigmatismusverteilung des erfindungsgemäßen GRIN-Gleitsicht-Brillenglases nach dem dritten Ausführungsbeispiel

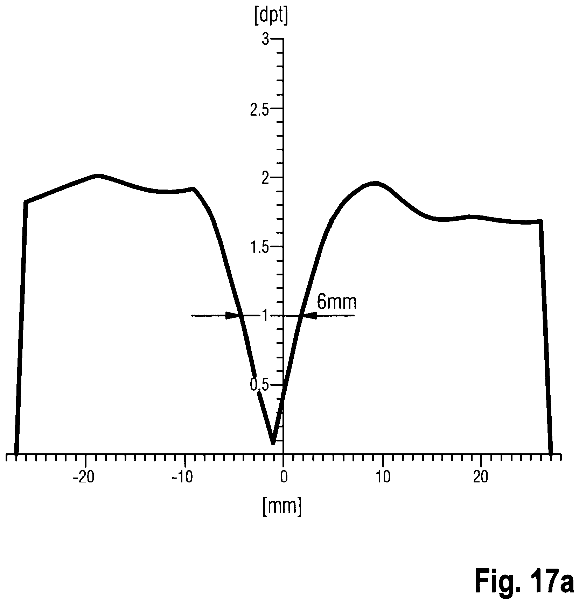

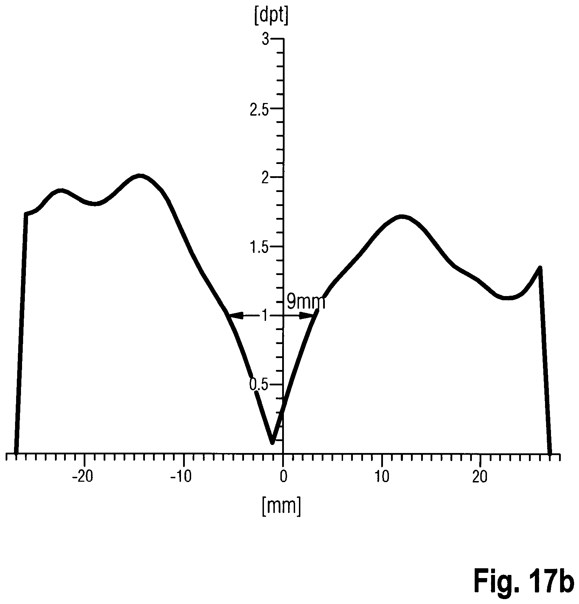

Figur 17     Vergleich der Restastigmatismusverteilung des GRIN-Gleitsicht-Brillenglases nach dem dritten Ausführungsbeispiel mit dem Restastigmatismusverteilung des Vergleichs-Gleitsicht-Brillenglases längs eines Schnitts bei y = -5 mm nach der Figur 16

a: Restastigmatismusverteilung des Vergleichs-Gleitsicht-Brillenglases

b: Restastigmatismusverteilung des erfindungsgemäßen GRIN-Gleitsicht-Brillenglases nach dem dritten Ausführungsbeispiel

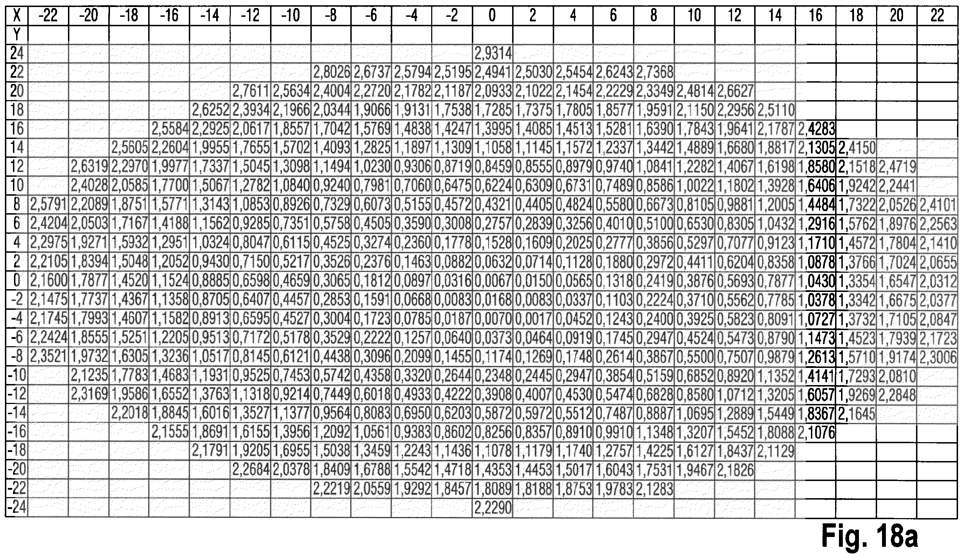

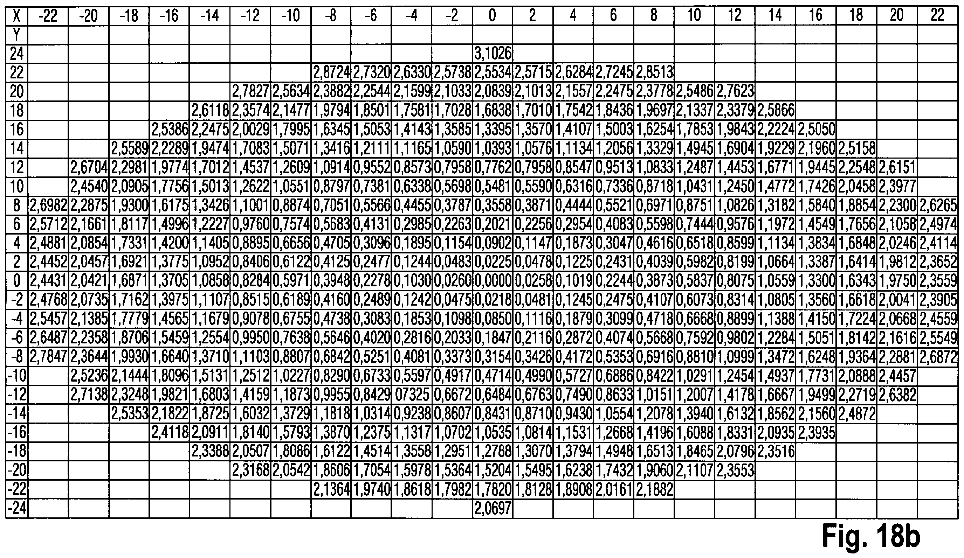

Figur 18     Vergleich der Kontur der Vorderfläche des GRIN-Gleitsicht-Brillenglases nach dem dritten Ausführungsbeispiel mit der Kontur der Vorderfläche des Vergleichs-Gleitsicht-Brillenglases

a: Pfeilhöhen der Vorderfläche des Vergleichs-Gleitsicht-Brillenglases

b: Pfeilhöhen der Vorderfläche des erfindungsgemäßen GRIN-Gleitsicht-Brillenglases nach dem dritten Ausführungsbeispiel

Die drei ersten Ausführungsbeispiele beziehen sich auf GRIN-Gleitsicht-Brillengläser bzw. deren Darstellung in einem Speicher eines Computers entsprechend einem Erzeugnis der erfindungsgemäßen Art. Das vierte Ausführungsbeispiel zeigt exemplarisch ein Verfahren zum Entwerfen eines GRIN-Gleitsicht-Brillenglases.

Erstes Ausführungsbeispiel

Im ersten Beispiel wird ein Gleitsicht-Brillenglas mit einer besonders einfachen Flächengeometrie gewählt. Es ist spiegelsymmetrisch zu einer auf der Zeichenebene senkrecht stehenden Ebene aufgebaut und besteht im Wesentlichen nur aus einer im mittleren Bereich angeordneten, senkrecht von oben nach unten verlaufenden Zone mit stetig zunehmender Wirkung.

Figur 1a zeigt die Verteilung der mittleren sphärischen Wirkung im Strahlengang für den Brillenträger für ein Gleitsicht-Brillenglas aus einem Standardmaterial (Brechzahl n=1.600) mit einer objektseitigen Freiformfläche, welche durch sogenannte bikubische Splines beschrieben ist. Dieses Gleitsicht-Brillenglas dient als Vergleichs-Gleitsicht-Brillenglas für ein erfindungsgemäß ausgebildetes Gleitsicht-Brillenglas, welches nachfolgend aufgrund dessen räumlich variierendem Brechungsindex als GRIN-Gleitsicht-Brillenglas bezeichnet wird.

Die Rückseite des Vergleichs-Gleitsicht-Brillenglases ist eine sphärische Fläche mit Radius 120 mm und der Augendrehpunkt liegt hinter der geometrischen Mitte des Glases mit einem Abstand von 25,5 mm zur Rückfläche. Das Glas hat eine Mittendicke von 2,5 mm und eine prismatische Wirkung 0 in der geometrischen Mitte. Die Rückfläche ist unverkippt, d.h. sowohl Vorderfläche als auch Rückfläche haben in der geometrischen Mitte eine Normale in Richtung der Blickrichtung horizontal geradeaus.

Die eingezeichneten Koordinatenachsen x und y dienen zur Bestimmung von Punkten auf dieser Fläche. Auf der senkrechten Mittelachse des Glases überschreitet die Wirkung die 0,00 Dioptrien in einer Höhe von etwa y = 25 mm, eine Wirkung von 2,25 dpt (Dioptrien) wird etwa bei y = -25 mm erreicht. Auf dieser Länge von 50 mm steigt demnach die Glaswirkung um 2,25 dpt an. Das Gleitsicht-Brillenglas hat demnach für den Brillenträger in vorgesehener Gebrauchsstellung keine sphärische Wirkung (Sphäre = 0) und keine astigmatische Wirkung (Zylinder = 0) im Fernteil und eine Addition von 2,25 dpt. Nach Abschnitt 11.1 der DIN EN ISO 13666:2013-10 ist ein Brillenglas mit sphärischer Wirkung ein Brillenglas, das ein paraxiales, paralleles Lichtbündel in einem einzelnen Brennpunkt vereinigt. Nach Abschnitt 12.1 der DIN EN ISO 13666:2013-10 ist ein Brillenglas mit astigmatischer Wirkung ein Brillenglas, das ein paraxiales, paralleles Lichtbündel in zwei getrennten, zueinander senkrecht stehenden Brennlinien vereinigt, und das daher nur in den beiden Hauptschnitten einen Scheitelbrechwert besitzt. Abschnitt 14.2.1 dieser Norm definiert die Addition als Differenz zwischen dem Scheitelbrechwert des Nahteiles und dem Scheitelbrechwert des Fernteiles.

Figur 1b zeigt den mittleren Flächenbrechwert für n=1.600 der objektseitigen Freiformfläche des Vergleichs-Gleitsicht-Brillenglases der Figur 1a. Die Flächenkrümmung nimmt von oben nach unten stetig zu, der mittlere Flächenbrechwert steigt von etwa 5,3 dpt bei y = 15 mm auf etwa 7,0 dpt bei y = -25 mm.

Figur 1c zeigt den mittleren Flächenastigmatismus für n=1.600 der objektseitigen Freiformfläche des Vergleichs-Gleitsicht-Brillenglases der Figur 1a.

Die Figuren 2a, 2b und 2c zeigen die Nachbildung des Vergleichs-Gleitsicht-Brillenglases mit Verwendung eines GRIN-Materials. Figur 2a zeigt hierzu die Verteilung der mittleren sphärischen Wirkung. Dem Vergleich der Figur 1a und Figur 2a entnimmt man, dass die Wirkungsverteilung der beiden Gleitsicht-Brillengläser gleich ist. In Figur 2b ist der Verlauf des mittleren Flächenbrechwerts, in Figur 2c der Verlauf des Flächenastigmatismus der Vorderfläche des erfindungsgemäß ausgebildeten GRIN-Gleitsicht-Brillenglases dargestellt. Um einen Vergleich der mittleren Krümmungen mit der Figur 1b und des Flächenastigmatismus mit der Figur 1c zu ermöglichen, wurde bei der Berechnung des mittleren Flächenbrechwertes und des Flächenastigmatismus nicht das GRIN-Material, sondern wie vorher das Material mit der Brechzahl n=1.600 verwendet.

Nach Heinz Diepes, Ralf Blendowske: Optik und Technik der Brille; 2. Auflage, Heidelberg 2005, S. 256 sind der mittlere Flächenbrechwert und der Flächenastigmatismus definiert.

Der Vergleich der Figuren 2b und 2c mit den Figuren 1b und 1c zeigt, dass sich die Gestalt der Freiformfläche deutlich geändert hat: Der mittlere Flächenbrechwert (gerechnet mit n=1.600) nimmt jetzt von oben nach unten ab, d.h., die mittlere Krümmung der Fläche wird von oben nach unten geringer. Der Verlauf des Flächenastigmatismus zeigt keinen typischen Progressionskanal mehr.

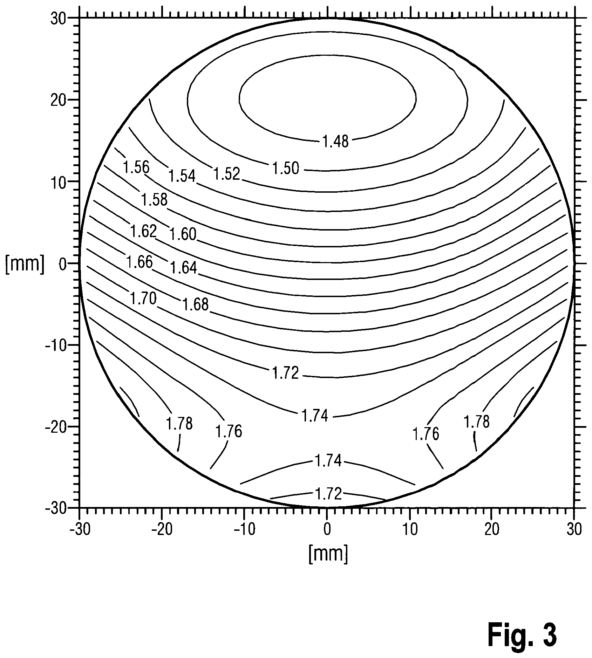

Figur 3 zeigt die Verteilung der Brechzahl über das erfindungsgemäße GRIN-Gleitsicht-Brillenglas. Die Brechzahl steigt hier von oben nach unten von etwa n = 1.48 auf etwa n = 1.75 im unteren Bereich an.

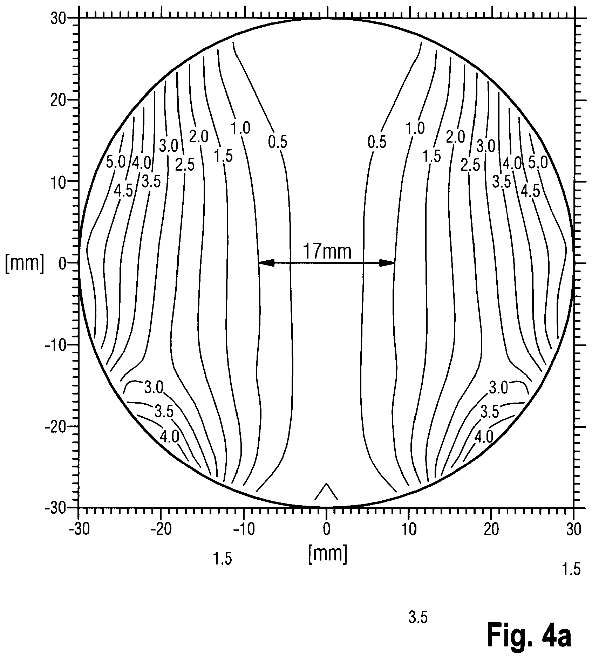

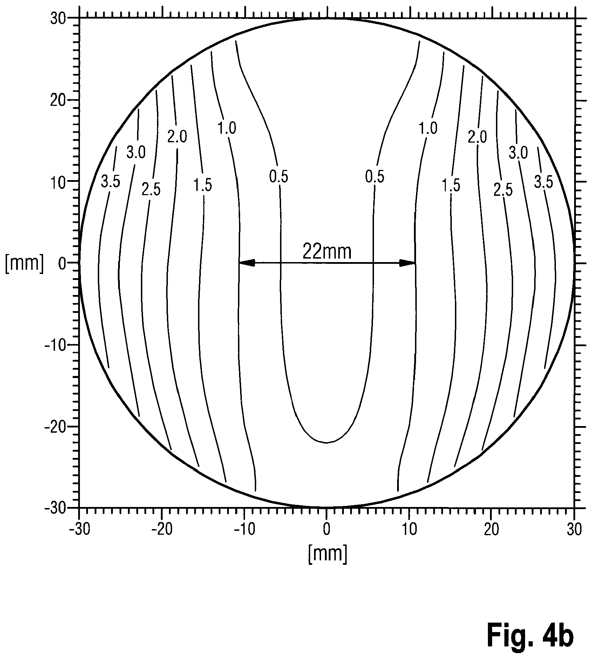

Die Figur 4a und Figur 4b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Standardglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 17 mm auf 22 mm, also etwa um 30 Prozent.

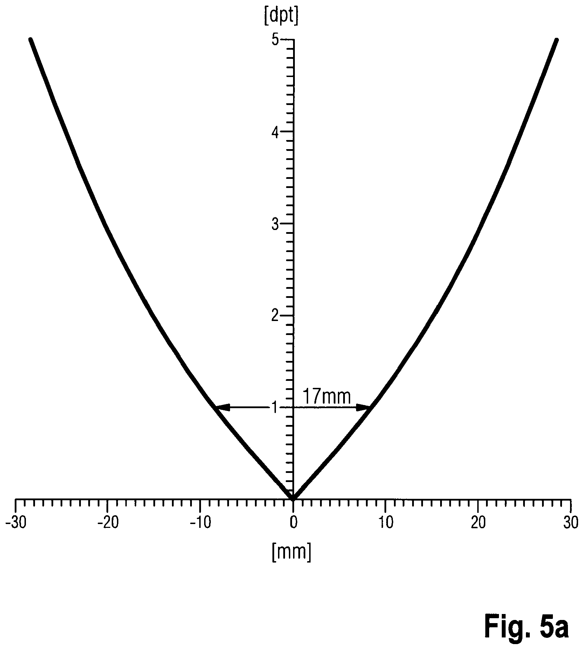

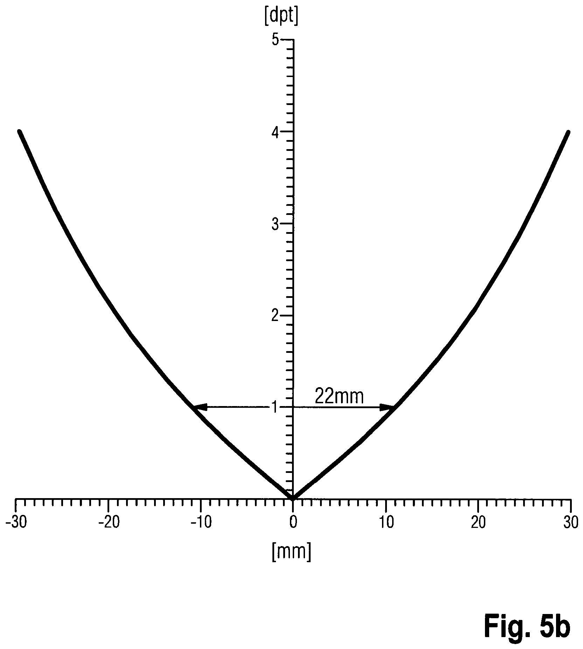

Die Figur 5a und Figur 5b zeigen Querschnitte durch die Restastigmatismusverteilungen aus Figur 4a und Figur 4b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = 0) ist für das GRIN-Glas deutlich geringer, obwohl derselbe Wirkungsanstieg wie im Standardglas vorhanden ist. Gerade dieser Anstieg wird in der Theorie der Optik der Gleitsichtgläser mit Minkwitz' Aussage erklärt.

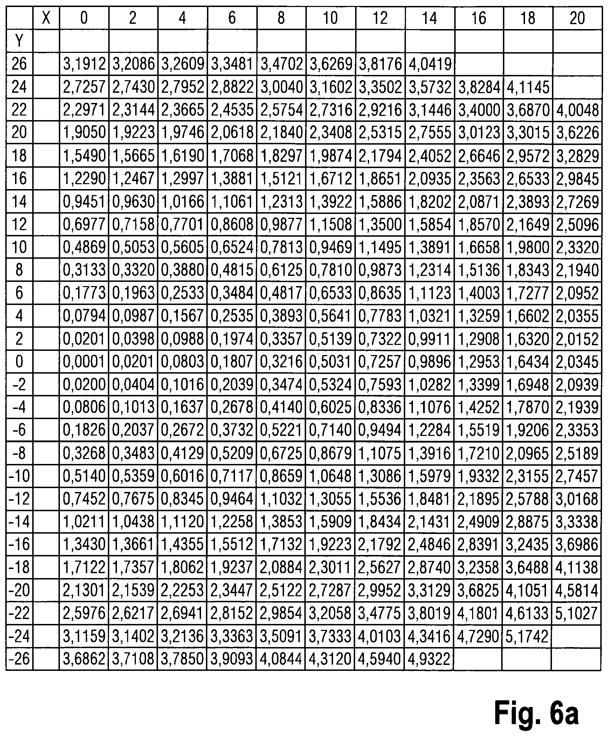

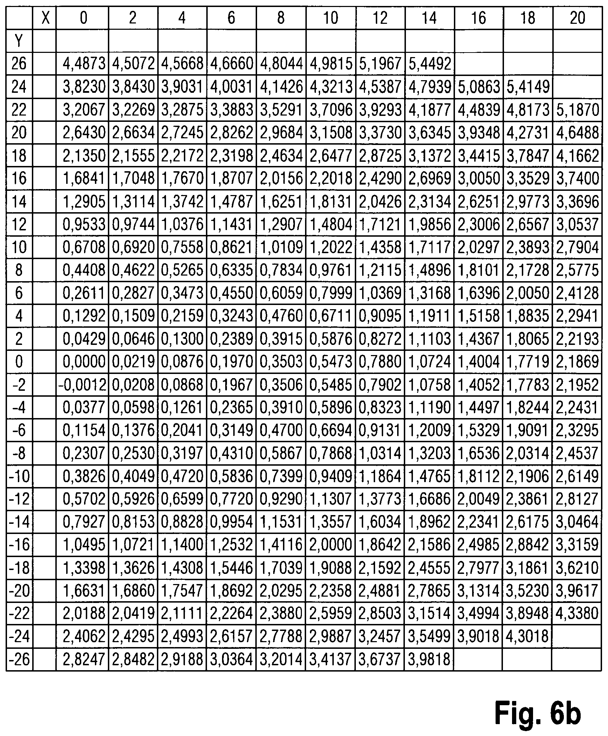

Die Figur 6 vergleicht die Kontur der Vorderfläche des GRIN-Gleitsicht-Brillenglases nach dem ersten Ausführungsbeispiel mit der Kontur der Vorderfläche des Vergleichs-Gleitsicht-Brillenglases mit Hilfe einer Pfeilhöhendarstellung. Die Figur 6b zeigt die Pfeilhöhen der Vorderfläche des erfindungsgemäßen GRIN-Gleitsicht-Brillenglases nach dem ersten Ausführungsbeispiel und im Vergleich dazu zeigt Figur 6a die Pfeilhöhen der Vorderfläche des Vergleichs-Gleitsicht-Brillenglases.

Zweites Ausführungsbeispiel

Alle folgenden Figuren entsprechen thematisch und in der Reihenfolge denjenigen zum ersten Ausführungsbeispiel.

Die Figur 7a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n=1.600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,8 mm zur Rückfläche. Das Vergleichs-Gleitsicht-Brillenglas hat eine Mittendicke von 2.6 mm und 2 mm unterhalb der geom. Mitte eine prismatische Wirkung 1.0 cm/m Basis 270° . Die Rückfläche ist um -8° um die horizontale Achse verkippt.

Die eingezeichneten Koordinatenachsen dienen zur Bestimmung von Punkten auf dieser Fläche. Auf der senkrechten Mittelachse des Vergleichs-Gleitsicht-Brillenglases überschreitet die Wirkung die 0,00 Dioptrie-Linie in einer Höhe von etwa y = 6 mm (d.h. der Brillenträger erhält beim Blick horizontal geradeaus nahezu eine Wirkung von 0 dpt), eine Wirkung von 2,00 Dioptrien wird etwa bei y = -14 mm erreicht. Auf dieser Länge von 20 mm steigt demnach die Glaswirkung um 2,00 dpt an

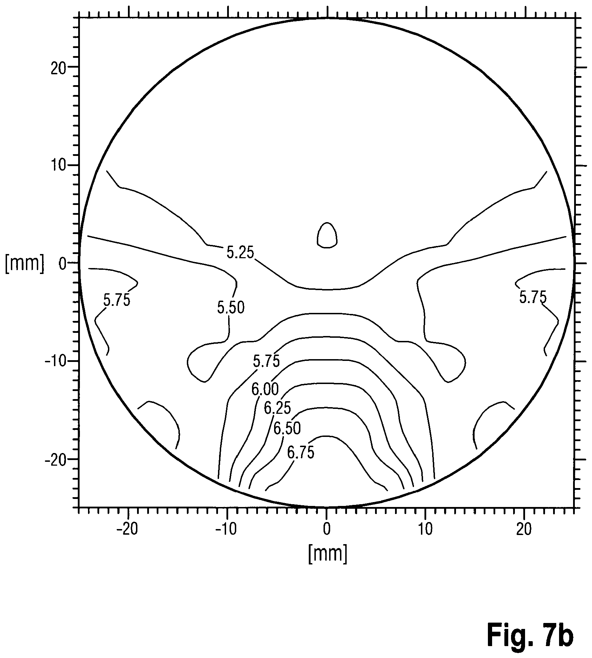

Figur 7b zeigt den mittleren Flächenbrechwert für n=1.600 der objektseitigen Freiformfläche des Vergleichs-Gleitsicht-Brillenglases der Figur 7a. Die Flächenkrümmung nimmt von oben nach unten stetig zu, der mittlere Flächenbrechwert steigt von 5,00 dpt bei y = 2 mm auf 6,75 dpt bei y = -18 mm.

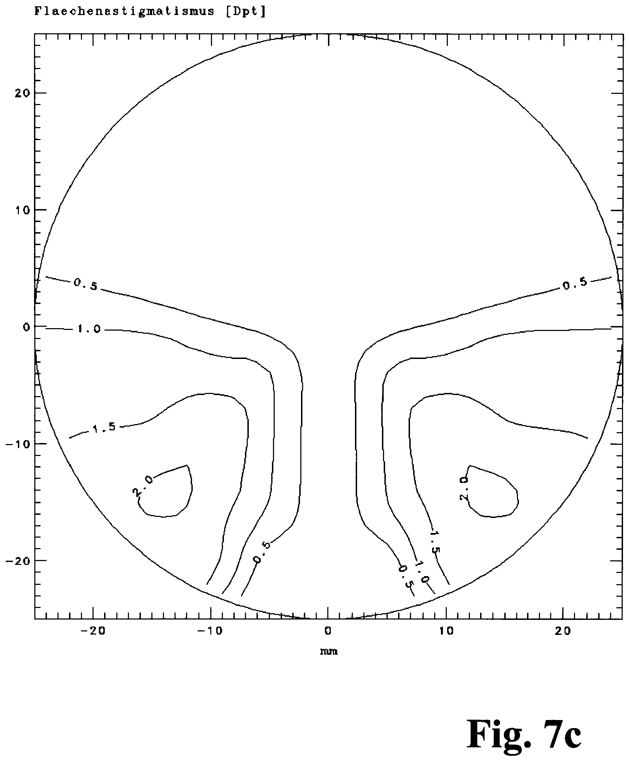

Figur 7c zeigt den Flächenastigmatismus für n=1.600 der objektseitigen Freiformfläche des Vergleichs-Gleitsicht-Brillenglases der Figur 7a.

Die Figuren 8a, 8b und 8c zeigen die Nachbildung des Vergleichs-Gleitsicht-Brillenglases unter Verwendung eines GRIN-Materials (erfindungsgemäßes Gleitsicht-Brillenglas). Figur 8a zeigt hierzu die Verteilung der mittleren sphärischen Wirkung. Dem Vergleich der Figuren 7a und 8a entnimmt man, dass der Wirkungsanstieg entlang der senkrechten Mittellinie der beiden Gläser gleich ist. In Figur 8b ist der Verlauf des mittleren Flächenbrechwerts, in Figur 8c der Verlauf des Flächenastigmatismus der Vorderfläche des erfindungsgemäßen GRIN-Gleitsicht-Brillenglases dargestellt. Um einen Vergleich der mittleren Krümmungen mit der Figur 7b und des Flächenastigmatismus mit der Figur 7c zu ermöglichen, wurde bei der Berechnung nicht das GRIN-Material, sondern wie vorher das Material mit der Brechzahl n=1,600 verwendet.

Der Vergleich der Figuren 8b und 8c mit den Figuren 7b und 7c zeigt, dass sich die Gestalt der Freiformfläche deutlich geändert hat: der mittlere Flächenbrechwert (gerechnet mit n=1,600) nimmt jetzt von der Glasmitte zum Rand hin in ungleichmäßiger Weise ab. Der Verlauf des Flächenastigmatismus zeigt keinen typischen Progressionskanal mehr.

Die Figur 9 zeigt die Verteilung der Brechzahl über das Brillenglas. Die Brechzahl steigt hier von ca. 1,60 von der Mitte des Glases auf etwa n = 1.70 im unteren Bereich an.

Die Figur 10a und die Figur 10b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 8,5 mm auf 12 mm, also etwa um 41 Prozent.

Die Figur 11a und die Figur 11b zeigen Querschnitte durch die Restastigmatismusverteilungen aus Figur 10a und Figur 10b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = -5 mm) ist für das erfindungsgemäße GRIN-Gleitsicht-Brillenglas deutlich geringer, obwohl derselbe Wirkungsanstieg wie im Vergleichs-Gleitsicht-Brillenglas vorhanden ist. Analog zum ersten Ausführungsbeispiel ergibt sich eine deutliche Abweichung des Astigmatismusgradienten des GRIN- Gleitsicht-Brillenglases von dem von Minkwitz vorhergesagten Verhalten: Der Progressionskanal wird deutlich breiter.

Die Figur 12 vergleicht die Kontur der Vorderfläche des GRIN-Gleitsicht-Brillenglases nach dem zweiten Ausführungsbeispiel mit der Kontur der Vorderfläche des Vergleichs-Gleitsicht-Brillenglases mit Hilfe einer Pfeilhöhendarstellung. Die Figur 12b zeigt die Pfeilhöhen der Vorderfläche des erfindungsgemäßen GRIN-Gleitsicht-Brillenglases nach dem zweiten Ausführungsbeispiel und im Vergleich dazu zeigt Figur 12a die Pfeilhöhen der Vorderfläche des Vergleichs-Gleitsicht-Brillenglases jeweils bzgl. eines um -7.02 um eine horizontale Achse gekippten Koordinatensystems (d.h. die vertikale Y-Achse dieses Systems ist um -7.02° gegenüber der Raumvertikalen verkippt).

Drittes Ausführungsbeispiel

Alle folgenden Figuren entsprechen thematisch und in der Reihenfolge denjenigen zum zweiten Ausführungsbeispiel.

Das dritte Ausführungsbeispiel zeigt zwei Gleitsichtgläser, bei denen die Konvergenzbewegung des Auges beim Blick auf Objekte in den Zwischenentfernungen und in der Nähe, die geradeaus vor dem Auge des Brillenträgers liegen, berücksichtigt werden. Diese Konvergenzbewegung bewirken, das die Durchblickpunkte durch die Vorderfläche des Brillenglases beim Blick auf diese Punkte nicht auf einem exakt senkrechten Geradenstück, sondern auf einer zur Nase hin verschwenkten vertikalen Linie liegen, die als Hauptblicklinie bezeichnet wird.

Daher ist in diesen Beispielen auch die Mitte des Nahbereichs horizontal nasaler Richtung verschoben. Die Beispiele sind so gerechnet, dass diese Hauptblicklinie im Progressionsbereich mittig zwischen den Linien auf der Vorderfläche liegen, für die der astigmatische Restfehler 0,5 dpt beträgt (siehe dazu die Figuren 16a und 16b).

Die Figur 13a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n = 1,600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,5 mm zur Rückfläche. Das Vergleichs-Gleitsicht-Brillenglas hat eine Mittendicke von 2,5 mm und 2 mm unterhalb der geom. Mitte eine prismatische Wirkung 1,0 cm/m Basis 270°. Die Rückfläche ist so verkippt, dass das beim Blick horizontal geradeaus der augenseitige Strahl senkrecht zur Rückfläche steht.

Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 13 mm unterhalb der geometrischen Mitte und -2,5 mm horizontal in nasaler Richtung eine mittlere Wirkung von 2,00 dpt. D.h. auf einer Länge von 17 mm steigt demnach die Glaswirkung um ca. 2,00 dpt an.

Figur 13b zeigt die Verteilung des mittleren Flächenbrechwertes für eine Brechzahl n=1,600 der objektseitigen Freiformfläche des Vergleichs-Gleitsicht-Brillenglases des dritten Ausführungsbeispiels, das eine Verteilung der mittleren Wirkung bewirkt, wie sie in Figur 13a dargestellt wird. Die Flächenkrümmung nimmt von oben nach unten stetig zu, der mittlere Flächenbrechwert steigt von 5,00 dpt bei y = ca. 2 mm auf 6,50 dpt bei y = -12 mm.

Die Figuren 14a und 14b zeigen die Nachbildung des Vergleichs-Gleitsicht-Brillenglases unter Verwendung eines GRIN-Materials (erfindungsgemäßes Gleitsicht-Brillenglas). Figur 14a zeigt hierzu die Verteilung der mittleren sphärischen Wirkung. Dem Vergleich der Figuren 13a und 14a entnimmt man, dass der Wirkungsanstieg entlang der Hauptblicklinie im Progressionsbereich gleich ist. In Figur 14b ist der Verlauf des mittleren Flächenbrechwerts der Vorderfläche des erfindungsgemäßen GRIN-Gleitsicht-Brillenglases dargestellt. Um einen Vergleich der mittleren Krümmungen mit der Figur 13b zu ermöglichen, wurde bei der Berechnung nicht das GRIN-Material, sondern wie vorher das Material mit der Brechzahl n = 1,600 verwendet.

Der Vergleich der Figur 13b mit der Figur 14b zeigt, dass sich die Gestalt der Freiformfläche deutlich geändert hat: der mittlere Flächenbrechwert (gerechnet mit n = 1,600) nimmt jetzt von der Glasmitte zum Rand hin in ungleichmäßiger Weise ab, um in der Peripherie hin wieder anzusteigen.

Die Figur 15 zeigt die Verteilung der Brechzahl über das Brillenglas. Die Brechzahl steigt hier von ca. 1,48 im oberen Bereichs des Glases auf etwa 1,70 im in Höhe y = -13 im unteren Bereich an.

Die Figuren 16a und 16b stellen die Auswirkungen des Einsatzes des GRIN-Materials mit seiner speziellen Brechzahlverteilung sowie des Designs der Freiformfläche für dieses GRIN-Gleitsicht-Brillenglas auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem dritten Beispiel ergibt sich eine Verbreiterung des Progressionskanals, hier definiert durch die Isoastigmatismuslinie 1 dpt, von 6 mm auf 9 mm, also etwa um 50 Prozent.

Die Figur 17a und die Figur 17b zeigen Querschnitte durch die Restastigmatismusverteilungen aus Figur 16a und Figur 16b. Diese Figuren verdeutlichen wieder die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz). Der Anstieg des astigmatischen Restfehlers in der Umgebung der Mitte des Progressionskanals (y = -5 mm) ist für das erfindungsgemäße GRIN-Gleitsicht-Brillenglas wieder deutlich geringer, obwohl derselbe Wirkungsanstieg wie im Vergleichs-Gleitsicht-Brillenglas vorhanden ist.

Die Figur 18 vergleicht die Kontur der Vorderfläche des GRIN-Gleitsicht-Brillenglases nach dem ersten Ausführungsbeispiel mit der Kontur der Vorderfläche des Vergleichs-Gleitsicht-Brillenglases mit Hilfe einer Pfeilhöhendarstellung. Die Figur 18b zeigt die Pfeilhöhen der Vorderfläche des erfindungsgemäßen GRIN-Gleitsicht-Brillenglases nach dem dritten Ausführungsbeispiel und im Vergleich dazu zeigt Figur 18a die Pfeilhöhen der Vorderfläche des Vergleichs-Gleitsicht-Brillenglases jeweils bzgl. einer Ebene, die senkrecht auf der Blickrichtung horizontal geradeaus steht.

Viertes Ausführungsbeispiel

Nachfolgend werden die wesentlichen Schritte eines erfindungsgemäßen Verfahrens zum Entwerfen eines GRIN-Gleitsicht-Brillenglases skizziert:

In einem ersten Schritt werden individuelle Benutzerdaten bzw. Anwendungsdaten des Brillenträgers erfasst. Hierzu gehören die Erfassung von dem Brillenträger zuordenbaren (physiologischen) Daten und die Erfassung von Gebrauchsbedingungen, unter denen der Brillenträger die zu entwerfende Gleitsicht-Brille tragen wird.

Zu den physiologischen Daten des Brillenträgers gehören z.B. die Fehlsichtigkeit und die Akkommodationsfähigkeit, die mittels einer Refraktionsmessung festgestellt wird und regelmäßig in Form der Rezeptwerte für Sphäre, Zylinder, Achslage, Prisma und Basis sowie Addition in die Verordnung eingehen. Weiterhin werden z.B. die Pupillendistanz und die Pupillengröße bei unterschiedlichen Lichtverhältnissen festgestellt. Das Alter des Brillenträgers wird z.B. berücksichtigt, welches Einfluss auf die zu erwartende Akkommodationsfähigkeit und Pupillengröße hat. Das Konvergenzverhalten der Augen ergibt sich aus der Pupillendistanz für unterschiedliche Blickrichtungen und Objektentfernungen.

Zu den Gebrauchsbedingungen gehören der Sitz der Brillengläser vor dem Auge (üblicherweise in Bezug zum Augendrehpunkt) und die Objektabstände für unterschiedliche Blickrichtungen, unter denen der Brillenträger scharf sehen soll. Der Sitz der Brillenträger vor dem Auge kann z.B. über die Erfassung von Hornhautscheitelabstand, Vor- und Seitenneigung bestimmt werden. Diese Daten gehen in ein Objektabstandsmodell ein, für welches ein Strahldurchrechnungsverfahren durchgeführt werden kann.

In einem nachfolgenden Schritt wird auf Basis dieser erfassten Daten ein Designentwurf für das Brillenglas mit einer Vielzahl von Bewertungsstellen festgelegt. Der Designentwurf umfasst optische Soll-Eigenschaften für das Gleitsicht-Brillenglas an der jeweiligen Bewertungsstelle. Zu den Soll-Eigenschaften gehören z.B. die zulässige Abweichung von der verordneten sphärischen und astigmatischen Wirkung unter Berücksichtigung der Addition und zwar verteilt über das gesamte Gleitsicht-Brillenglas, wie dies durch die Anordnung des Brillenglases vor dem Auge und das zugrunde gelegte Abstandsmodell vorgegeben ist.

Weiterhin werden ein Entwurf von Flächengeometrien für die Vorder- und Rückfläche sowie ein Entwurf für eine Brechungsindexverteilung über das gesamte Brillenglas festgelegt. So kann z.B. die Vorderfläche als sphärische Fläche gewählt werden und die Rückfläche als Gleitsichtfläche. Es könnten auch beide Flächen zunächst als sphärische Flächen gewählt werden. Die Wahl der Flächengeometrie für den ersten Entwurf bestimmt nachfolgend im Allgemeinen lediglich die Konvergenz (Geschwindigkeit und Erfolg) des angewandten Optimierverfahrens. Es soll beispielsweise davon ausgegangen werden, dass die Vorderfläche die sphärische Gestalt beibehalten soll und die Rückfläche die Form einer Gleitsichtfläche erhält.

In einem weiteren Schritt wird der Verlauf von Hauptstrahlen durch die Vielzahl von Bewertungsstellen bestimmt. Ggf. kann eine lokale Wellenfront zu jedem der Hauptstrahlen in einer Umgebung des jeweiligen Hauptstrahls festgelegt werden.

In einem nachfolgenden Schritt werden die o.a. optischen Eigenschaften des Brillenglases an den Bewertungsstellen durch Bestimmen eines Einflusses des Brillenglases auf den Strahlengang der Hauptstrahlen und ggf. die lokalen Wellenfronten in einer Umgebung der jeweiligen Bewertungsstelle ermittelt.

In einem weiteren Schritt wird der Entwurf des Brillenglases in Abhängigkeit von den ermittelten optischen Eigenschaften und den individuellen Benutzerdaten bewertet. Die Rückfläche und die Brechungsindexverteilung des Entwurfs des Brillenglases werden dann im Hinblick auf eine Minimierung einer Zielfunktion

$$F = \sum_m P_m \sum_n W_n \left(T_n - A_n\right)^2$$

modifiziert, wobei $P_m$ die Gewichtung an der Bewertungsstelle m, $W_n$ die Gewichtung der optischen Eigenschaft n, $T_n$ den Soll-Wert der optischen Eigenschaft n an der jeweiligen Bewertungsstelle m und $A_n$ den Ist-Wert der optischen Eigenschaft n an der Bewertungsstelle m darstellt.

Anders ausgedrückt wird die lokale Flächengeometrie der Rückfläche und den lokale Brechungsindex des Gleitsicht-Brillenglases im jeweiligen Sehstrahlengang durch die Bewertungsstellen so lange modifiziert, bis ein Abbruchkriterium erfüllt ist.

Das auf diese in erfindungsgemäßer Weise entworfene GRIN-Gleitsichtbrillenglas kann dann nach diesem Entwurf gefertigt werden.

## Patentansprüche

1. Erzeugnis umfassend ein Gleitsicht-Brillenglas oder eine auf einem Datenträger in Form von computerlesbaren Daten befindliche Darstellung des des Gleitsicht-Brillenglases mit Anweisungen für seine Herstellung durch ein additives Verfahren, wobei das Gleitsicht-Brillenglas

- eine Vorderfläche und eine Rückfläche sowie
- einen räumlich variierenden Brechungsindex aufweist, wobei
- entweder (i) die Vorderfläche eine Gleitsichtfläche ist oder (ii) die Rückfläche eine Gleitsichtfläche ist,

**dadurch gekennzeichnet, dass**

- im Fall (i) die als Gleitsichtfläche ausgebildete Vorderfläche so gestaltet ist, dass das Maximum des Betrags der mittleren Krümmung der Vorderfläche im Progressionskanal ist oder im Fall (ii) die als Gleitsichtfläche ausgebildete Rückfläche so gestaltet ist, dass das Minimum des Betrags der mittleren Krümmung der Rückfläche im Progressionskanal ist, wobei
- der Progressionskanal nach DIN EN ISO 13666:2013-10 Absatz 14.1.25 der Bereich des Gleitsicht- Brillenglases ist, der scharfes Sehen für Entfernungen ermöglicht, die zwischen der Ferne und der Nähe liegen.

2. Erzeugnis nach Anspruch 1, **dadurch gekennzeichnet, dass** wenigstens eine der Freiformflächen keine Punktsymmetrie und keine Achsensymmetrie aufweist oder dass wenigstens eine der Freiformflächen keine Punktsymmetrie und keine Achsensymmetrie und keine Rotationssymmetrie und keine Symmetrie bzgl. einer Symmetrieebene aufweist.

3. Erzeugnis nach einem der vorangegangenen Ansprüche, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
- das Gleitsicht-Brillenglas einen Progressionskanal mit einer Breite aufweist, und dass der Brechungsindex des Gleitsicht-Brillenglases räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases mit räumlich nicht variierendem Brechungsindex aber gleicher Verteilung des sphärischen Äquivalents bei gleicher Anordnung des Vergleichs-Gleitsicht-Brillenglases vor dem Auge des Gleitsicht-Brillenträgers.

4. Erzeugnis nach Anspruch 3, **dadurch gekennzeichnet, dass** der wenigstens eine Schnitt eine Variante aus der Gruppe

- horizontaler Schnitt,
- Schnitt bei halber Addition,
- horizontaler Schnitt bei halber Addition
- horizontaler Schnitt bei halber Addition und horizontaler Schnitt bei 25 % der Addition
- horizontaler Schnitt bei halber Addition und horizontaler Schnitt bei 75 % der Addition
- horizontaler Schnitt bei halber Addition und horizontaler Schnitt bei 25 % der Addition und horizontaler Schnitt bei 75 % der Addition

gewählt ist.

5. Erzeugnis nach Anspruch 3 oder 4, **dadurch gekennzeichnet, dass**

- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, dass

- das Gleitsicht-Brillenglas ein Fernteil und ein Nahteil aufweist und dass
- die Breite des Progressionskanals der Abmessung quer zu einer zwischen Fernteil und Nahteil verlaufenden Längsrichtung des Progressionskanals entspricht, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

6. Erzeugnis nach einem der vorangegangenen Ansprüche, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und dass

- der Brechungsindex des Gleitsicht-Brillenglases räumlich derart variiert, dass der Maximalwert des Restastigmatismus des Gleitsicht-Brillenglases kleiner ist, als der Maximalwert des Restastigmatismus eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

7. Erzeugnis nach einem der vorangegangenen Ansprüche, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents (W) für die vorbestimmte Anordnung des Gleitsicht-Brillenglases vor dem Auge des Gleitsicht-Brillenträgers, für den das Gleitsicht-Brillenglas bestimmt ist, aufweist, dass
- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist, und dass

- das Gleitsicht-Brillenglas einen Progressionskanal und eine Hauptblicklinie aufweist, und dass der Brechungsindex des Gleitsicht-Brillenglases räumlich derart variiert, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals oder für einen horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents des Gleitsicht-Brillenglases an der schmalsten Stelle des Progressionskanals auf der Hauptblicklinie oder in einem Punkt auf der Hauptblicklinie in dem die halbe Addition erreicht wird, B die Breite des Bereichs im Gleitsicht-Brillenglas, in dem der Restastigmatismus $A_{Rest} \le A_{Rest,Grenz}$ ist, wobei c eine Konstante gewählt ist aus der Gruppe:

(a) 1,0 < c
(b) 1,1 < c
(c) 1,2 < c
(d) 1,3 < c.

8. Verfahren zum Herstellen eines Gleitsicht-Brillenglases nach einem der Ansprüche 1 bis 7 durch ein additives Verfahren.

**Claims**

1. Product comprising a progressive power spectacle lens or a representation which is situated on a data medium in the form of computer-readable data and is of the progressive power spectacle lens with instructions for the production thereof by way of an additive method, wherein the progressive power spectacle lens comprises

- a front surface and a back surface, and
- a spatially varying refractive index, wherein
- either (i) the front surface is a progressive surface or (ii) the back surface is a progressive surface

**characterized in that**

- in case (i) the front surface embodied as a progressive surface is formed in such a way that the maximum of the absolute value of the mean curvature of the front surface lies in the intermediate corridor or in case (ii) the back surface embodied as a progressive surface is formed in such a way that the minimum of the absolute value of the mean curvature of the back surface lies in the intermediate corridor, wherein,
- pursuant to DIN EN ISO 13666:2013-10, section 14.1.25, the intermediate corridor is the region of the progressive power spectacle lens providing clear vision for ranges intermediate between distance and near.

2. Product according to Claim 1, **characterized in that** at least one of the free-form surfaces has no point symmetry and no axial symmetry or **in that** at least one of the free-form surfaces has no point symmetry and no axial symmetry and no rotational symmetry and no symmetry with respect to a plane of symmetry.

3. Product according to either of the preceding claims, **characterized in that**

- the product further comprises a representation which is situated on a data medium and is of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the progressive power spectacle lens has an intermediate corridor with a width and **in that** the refractive index of the progressive power spectacle lens varies in space in such a way that the width of the intermediate corridor of the progressive power spectacle lens, at least in a section or over the entire length of the intermediate corridor, is greater than the width of the intermediate corridor of a comparison progressive power spectacle lens with a spatially non-variable refractive index but with the same distribution of the spherical equivalent in the case of the same arrangement of the comparison progressive power spectacle lens in front of the eye of the progressive power spectacle wearer.

4. Product according to Claim 3, **characterized in that** a variant of the group:

- horizontal section,
- section at half addition,
- horizontal section at half addition,
- horizontal section at half addition and horizontal section at 25% of the addition,
- horizontal section at half addition and horizontal section at 75% of the addition,
- horizontal section at half addition and horizontal section at 25% of the addition and horizontal section at 75% of the addition,

is selected for the at least one section.

5. Product according to Claim 3 or 4, **characterized in that**

- the product further comprises

(i) a representation which is situated on a data medium and is of a residual astigmatism distribution for the predetermined arrangement of the progressive power spectacle lens in front of the eye of the progressive power spectacle wearer, for whom the progressive power spectacle lens is intended, and/or
(ii) a representation which is situated on a data medium and is of an astigmatic power distribution, required for a full correction, for the predetermined arrangement of the progressive power spectacle lens in front of the eye of the progressive power spectacle wearer, for whom the progressive power spectacle lens is intended, and/or
(iii) a representation which is situated on a data medium and is of a prescription and an object distance model for the predetermined arrangement of the progressive power spectacle lens in front of the eye of a progressive power spectacle wearer, for whom the progressive power spectacle lens is intended, and/or
(iv) a representation which is situated on a data medium and is of a distribution of the spherical equivalent for the predetermined arrangement of the progressive power spectacle lens in front of the eye of the progressive power spectacle wearer, for whom the progressive power spectacle lens is intended, **in that**

- the progressive power spectacle lens has a distance portion and a near portion, and **in that**
- the width of the intermediate corridor corresponds to the dimension transverse to a longitudinal direction of the intermediate corridor extending between the distance portion and near portion, within which the absolute value of the residual astigmatism lies below a predetermined limit value, which is selected within a range from the group specified below:

(a) the limit value lies in the range between 0.25 dpt and 1.5 dpt,
(b) the limit value lies in the range between 0.25 dpt and 1.0 dpt,
(c) the limit value lies in the range between 0.25 dpt and 0.75 dpt,
(d) the limit value lies in the range between 0.25 dpt and 0.6 dpt,
(e) the limit value lies in the range between 0.25 dpt and 0.5 dpt,
(f) the limit value is 0.5 dpt.

6. Product according to any one of the preceding claims, **characterized in that**

- the product further comprises a representation which is situated on a data medium and is of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the product further comprises

(i) a representation which is situated on a data medium and is of a residual astigmatism distribution for the predetermined arrangement of the progressive power spectacle lens in front of the eye of the progressive power spectacle wearer, for whom the progressive power spectacle lens is intended, and/or
(ii) a representation which is situated on a data medium and is of an astigmatic power distribution, required for a full correction, for the predetermined arrangement of the progressive power spectacle lens in front of the eye of the progressive power spectacle wearer, for whom the progressive power spectacle lens is intended, and/or
(iii) a representation which is situated on a data medium and is of a prescription and an object distance model for the predetermined arrangement of the progressive power spectacle lens in front of the eye of a progressive power spectacle wearer, for whom the progressive power spectacle lens is intended, and/or
(iv) a representation which is situated on a data medium and is of a distribution of the spherical equivalent for the predetermined arrangement of the progressive power spectacle lens in front of the eye of the progressive power spectacle wearer, for whom the progressive power spectacle lens is intended, and **in that**

- the refractive index of the progressive power spectacle lens varies in space in such a way that the maximum value of the residual astigmatism of the progressive power spectacle lens is less than the maximum value of the residual astigmatism of a comparison progressive power spectacle lens with the same distribution of the spherical equivalent in the case of the same arrangement of the comparison progressive power spectacle lens in front of the eye of the progressive power spectacle wearer, but with a spatially non-variable refractive index.

7. Product according to any one of the preceding claims, **characterized in that**

- the product further comprises a representation which is situated on a data medium and is of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent (W) for the predetermined arrangement of the progressive power spectacle lens in front of the eye of the progressive power spectacle wearer, for whom the progressive power spectacle lens is intended, **in that**
- the product further comprises

(i) a representation which is situated on a data medium and is of a residual astigmatism distribution for the predetermined arrangement of the progressive power spectacle lens in front of the eye of the progressive power spectacle wearer, for whom the progressive power spectacle lens is intended, and/or
(ii) a representation which is situated on a data medium and is of an astigmatic power distribution, required for a full correction, for the predetermined arrangement of the progressive power spectacle lens in front of the eye of the progressive power spectacle wearer, for whom the progressive power spectacle lens is intended, and/or

(iii) a representation which is situated on a data medium and is of a prescription and an object distance model for the predetermined arrangement of the progressive power spectacle lens in front of the eye of a progressive power spectacle wearer, for whom the progressive power spectacle lens is intended, and/or
(iv) a representation which is situated on a data medium and is of a distribution of the spherical equivalent for the predetermined arrangement of the progressive power spectacle lens in front of the eye of the progressive power spectacle wearer, for whom the progressive power spectacle lens is intended, and **in that**

- the progressive power spectacle lens comprises an intermediate corridor and a principal line of sight, and **in that** the refractive index of the progressive power spectacle lens varies in space in such a way that for a predetermined residual astigmatism value $A_{Rest,Grenz}$ of the group

(a) the residual astigmatism value $A_{Rest,Grenz}$ lies in the range between 0.25 dpt and 1.5 dpt,
(b) the residual astigmatism value $A_{Rest,Grenz}$ lies in the range between 0.25 dpt and 1.0 dpt,
(c) the residual astigmatism value $A_{Rest,Grenz}$ lies in the range between 0.25 dpt and 0.75 dpt,
(d) the residual astigmatism value $A_{Rest,Grenz}$ lies in the range between 0.25 dpt and 0.6 dpt,
(e) the residual astigmatism value $A_{Rest,Grenz}$ lies in the range between 0.25 dpt and 0.5 dpt,
(f) the residual astigmatism value $A_{Rest,Grenz}$ is 0.5 dpt on a horizontal section at the narrowest point of the intermediate corridor or for a horizontal section through the point on the principal line of sight at which the half addition is achieved, the following relationship applies within a region with a horizontal distance of 10 mm on both sides of the principal line of sight:

$$B > c \times \frac{A_{Rest,Grenz}}{grad\ W}$$

where grad W describes the power gradient of the spherical equivalent of the progressive power spectacle lens at the narrowest point of the intermediate corridor on the principal line of sight or in a point on the principal line of sight at which the half addition is achieved, B describes the width of the region in the progressive power spectacle lens in which the residual astigmatism is $A_{Rest} \le A_{Rest,Grenz}$, where c is a constant selected from the group:

(a) 1. 0 < c
(b) 1.1 < c
(c) 1.2 < c
(d) 1.3 < c.

8. Method for producing a progressive power spectacle lens according to any one of Claims 1 to 7 by way of an additive method.

**Revendications**

1. Produit comprenant un verre de lunettes progressif ou une représentation du verre de lunettes progressif se trouvant sur un support de données sous la forme de données lisibles par ordinateur avec des instructions pour la fabrication de celui-ci par un procédé additif, le verre de lunettes progressif présentant

- une surface avant et une surface arrière, et
- un indice de réfraction variable dans l'espace, dans lequel
- soit (i) la surface avant est une surface à foyer progressif, soit (ii) la surface arrière est une surface à foyer progressif,

**caractérisé en ce que**

- dans le cas où (i) la surface avant réalisée comme une surface à foyer progressif est configurée de telle sorte que le maximum de la grandeur de courbure moyenne de la surface avant se trouve dans le canal de progression, ou dans le cas où (ii) la surface arrière réalisée comme une surface à foyer progressif est configurée de telle sorte que le minimum de la grandeur de la courbure moyenne de la surface arrière se trouve dans le canal de progression, dans lequel
- le canal de progression selon DIN EN ISO 13666:2013-10 alinéa 14.1.25 est la zone du verre de lunettes progressif qui permet la vision nette pour des distances situées entre la vision de loin et la vision de près.

2. Produit selon la revendication 1, **caractérisé en ce qu'**au moins l'une des surfaces de forme libre ne présente ni symétrie ponctuelle ni symétrie axiale, ou **en ce qu'**au moins l'une des surfaces de forme libre ne présente ni symétrie ponctuelle ni symétrie axiale ni symétrie de révolution ni symétrie par rapport à un plan de symétrie.

3. Produit selon l'une quelconque des revendications précédentes, **caractérisé en ce que**

- le produit comprend en outre une représentation se trouvant sur un support de données d'une disposition prédéterminée du verre de lunettes progressif devant un œil d'un porteur de lunettes à verres progressifs à qui est destiné le verre de lunettes progressif,
- **en ce que** le verre de lunettes progressif présente une répartition d'un équivalent sphérique pour la disposition prédéterminée du verre de lunettes progressif devant l'œil du porteur de lunettes à verres progressifs à qui est destiné le verre de lunettes progressif,
- **en ce que** le verre de lunettes progressif présente un canal de progression ayant une largeur, et l'indice de réfraction du verre de lunettes progressif varie dans l'espace de telle sorte que la largeur du canal de progression du verre de lunettes progressif, au moins dans une coupe ou sur toute la longueur du canal de progression, est supérieure à la largeur du canal de progression d'un verre de lunettes progressif de comparaison ayant un indice de réfraction ne variant pas dans l'espace mais ayant la même répartition de l'équivalent sphérique pour une même disposition du verre de lunettes progressif de comparaison devant l'œil du porteur de lunettes à verres progressifs.

4. Produit selon la revendication 3, **caractérisé en ce que** ladite au moins une coupe est une variante sélectionnée dans le groupe composé

- d'une coupe horizontale,
- d'une coupe à la moitié de l'addition,
- d'une coupe horizontale à la moitié de l'addition,
- d'une coupe horizontale à la moitié de l'addition et d'une coupe horizontale à 25 % de l'addition,
- d'une coupe horizontale à la moitié de l'addition et d'une coupe horizontale à 75 % de l'addition,
- d'une coupe horizontale à la moitié de l'addition et d'une coupe horizontale à 25 % de l'addition et d'une coupe horizontale à 75 % de l'addition.

5. Produit selon la revendication 3 ou 4, **caractérisé en ce que**

- le produit présente en outre

(i) une représentation se trouvant sur un support de données d'une répartition d'astigmatisme résiduel pour la disposition prédéterminée du verre de lunettes progressif devant l'œil du porteur de lunettes à verres progressifs à qui est destiné le verre de lunettes progressif, et/ou
(ii) une représentation se trouvant sur un support de données d'une répartition des effets astigmatiques nécessaire à une correction totale pour la disposition prédéterminée du verre de lunettes progressif devant l'œil du porteur de lunettes à verres progressifs à qui est destiné le verre de lunettes progressif, et/ou
(iii) une représentation se trouvant sur un support de données d'une prescription et d'un modèle de distance d'objet pour la disposition prédéterminée du verre de lunettes progressif devant l'œil d'un porteur de lunettes à verres progressifs à qui est destiné le verre de lunettes progressif, et/ou
(iv) une représentation se trouvant sur un support de données d'une répartition de l'équivalent sphérique pour la disposition prédéterminée du verre de lunettes progressif devant l'œil du porteur de lunettes à verres progressifs à qui est destiné le verre de lunette progressif,

- **en ce que** le verre de lunettes progressif présente une partie de vision de loin et une partie de vision de près, et
- **en ce que** la largeur du canal de progression correspond à la dimension transversalement à une direction longitudinale du canal de progression s'étendant entre la partie de vision de loin et la partie de vision de près, à l'intérieur de laquelle la valeur de la grandeur de l'astigmatisme résiduel est située au-dessous d'une valeur limite prédéterminée qui est sélectionnée à l'intérieur d'une plage issue du groupe indiqué ci-après :

(a) la valeur limite est située dans la plage entre 0,25 dpt et 1,5 dpt
(b) la valeur limite est située dans la plage entre 0,25 dpt et 1,0 dpt
(c) la valeur limite est située dans la plage entre 0,25 dpt et 0,75 dpt
(d) la valeur limite est située dans la plage entre 0,25 dpt et 0,6 dpt
(e) la valeur limite est située dans la plage entre 0,25 dpt et 0,5 dpt
(f) la valeur limite est égale à 0,5 dpt.

6.  Produit selon l'une quelconque des revendications précédentes, **caractérisé en ce que**

- le produit comprend en outre une représentation se trouvant sur un support de données d'une disposition prédéterminée du verre de lunettes progressif devant un œil d'un porteur de lunettes à verres progressifs à qui est destiné le verre de lunettes progressif,
- **en ce que** le verre de lunettes progressif présente une répartition d'un équivalent sphérique pour la disposition prédéterminée du verre de lunettes progressif devant l'œil du porteur de lunettes à verres progressifs à qui est destiné le verre de lunettes progressif,
- **en ce que** le produit présente en outre

(i) une représentation se trouvant sur un support de données d'une répartition d'astigmatisme résiduel pour la disposition prédéterminée du verre de lunettes progressif devant l'œil du porteur de lunettes à verres progressifs à qui est destiné le verre de lunettes progressif, et/ou
(ii) une représentation se trouvant sur un support de données d'une répartition des effets astigmatiques nécessaire à une correction totale pour la disposition prédéterminée du verre de lunettes progressif devant l'œil du porteur de lunettes à verres progressifs à qui est destiné le verre de lunettes progressif, et/ou
(iii) une représentation se trouvant sur un support de données d'une prescription et d'un modèle de distance d'objet pour la disposition prédéterminée du verre de lunettes progressif devant l'œil d'un porteur de lunettes à verres progressifs à qui est destiné le verre de lunettes progressif, et/ou
(iv) une représentation se trouvant sur un support de données d'une répartition de l'équivalent sphérique pour la disposition prédéterminée du verre de lunettes progressif devant l'œil du porteur de lunettes à verres progressifs à qui est destiné le verre de lunette à verres progressifs, et

- **en ce que** l'indice de réfraction du verre de lunettes progressif varie dans l'espace de telle sorte que la valeur maximale de l'astigmatisme résiduel du verre de lunettes progressif est inférieure à la valeur maximale de l'astigmatisme résiduel d'un verre de lunettes progressif de comparaison ayant la même répartition de l'équivalent sphérique pour la même disposition du verre de lunettes progressif de comparaison devant l'œil du porteur de lunettes à verres progressifs mais avec un indice de réfraction qui ne varie pas dans l'espace.

7.  Produit selon l'une quelconque des revendications précédentes, **caractérisé en ce que**

- le produit comprend en outre une représentation se trouvant sur un support de données d'une disposition prédéterminée du verre de lunettes progressif devant un œil d'un porteur de lunettes à verres progressifs à qui est destiné le verre de lunettes progressif,
- **en ce que** le verre de lunettes progressif présente une répartition d'un équivalent sphérique (W) pour la disposition prédéterminée du verre de lunettes progressif devant l'œil du porteur de lunettes à verres progressifs à qui est destiné le verre de lunettes progressif,
- **en ce que** le produit présente en outre

(i) une représentation se trouvant sur un support de données d'une répartition d'astigmatisme résiduel pour la disposition prédéterminée du verre de lunettes progressif devant l'œil du porteur de lunettes à verres progressifs à qui est destiné le verre de lunettes progressif, et/ou
(ii) une représentation se trouvant sur un support de données d'une répartition des effets astigmatiques nécessaire à une correction totale pour la disposition prédéterminée des verre de lunettes progressif devant l'œil du porteur de lunettes à verres progressifs à qui est destiné le verre de lunettes progressif, et/ou
(iii) une représentation se trouvant sur un support de données d'une prescription et d'un modèle de distance d'objet pour la disposition prédéterminée du verre de lunettes progressif devant l'œil d'un porteur de lunettes à verres progressifs à qui est destiné le verre de lunettes progressif, et/ou
(iv) une représentation se trouvant sur un support de données d'une répartition de l'équivalent sphérique pour la disposition prédéterminée du verre de lunettes progressif devant l'œil du porteur de lunettes à verres progressifs à qui est destiné le verre de lunettes progressif, et

- **en ce que** le verre de lunettes progressif présente un canal de progression et une ligne de vision principale, et l'indice de réfraction du verre de lunettes progressif varie dans l'espace de telle sorte que pour une valeur d'astigmatisme résiduel prédéfinie $A_{Rest,Grenz}$ du groupe

(a) la valeur d'astigmatisme résiduel $A_{Rest,Grenz}$ est située dans la plage entre 0,25 dpt et 1,5 dpt,
(b) la valeur d'astigmatisme résiduel $A_{Rest,Grenz}$ est située dans la plage entre 0,25 dpt et 1,0 dpt,
(c) la valeur d'astigmatisme résiduel $A_{Rest,Grenz}$ est située dans la plage entre 0,25 dpt et 0,75 dpt,
(d) la valeur d'astigmatisme résiduel $A_{Rest,Grenz}$ est située dans la plage entre 0,25 dpt et 0,6 dpt,
(e) la valeur d'astigmatisme résiduel $A_{Rest,Grenz}$ est située dans la plage entre 0,25 dpt et 0,5 dpt,
(f) la valeur d'astigmatisme résiduel $A_{Rest,Grenz}$ est égale à 0,5 dpt,

sur une coupe horizontale à l'endroit le plus étroit du canal de progression ou pour une coupe horizontale par le point sur la ligne de vision principale où la moitié de l'addition est atteinte, à l'intérieur d'une plage ayant une distance horizontale de 10 mm des deux côtés de la ligne de vision principale, la relation suivante s'applique :

$$B > c \times \frac{A_{Rest,Grenz}}{grad\,W}$$

où grad W est le gradient effectif de l'équivalent sphérique du verre de lunettes progressif à l'endroit le plus étroit du canal de progression sur la ligne de vision principale ou dans un point sur la ligne de vision principale où la moitié de l'addition est atteinte, B est la largeur de la zone dans le verre de lunettes progressif où l'astigmatisme résiduel est $A_{Rest} \leq A_{Rest,Grenzt}$ où c est une constante choisie dans le groupe :

(a) $1,0 < c$,
(b) $1,1 < c$,
(c) $1,2 < c$,
(d) $1,3 < c$.

8. Procédé de fabrication d'un verre de lunettes progressif selon l'une quelconque des revendications 1 à 7 par un procédé additif.

Fig. 1a

**Fig. 1b**

Flaechenastigmatismus [Dpt]

**Fig. 1c**

**Fig. 2a**

Fig. 2b

Fig. 2c

**Fig. 3**

Fig. 4a

**Fig. 4b**

**Fig. 5a**

Fig. 5b

| X | 0 | 2 | 4 | 6 | 8 | 10 | 12 | 14 | 16 | 18 | 20 |
|---|---|---|---|---|---|---|---|---|---|---|---|
| Y | | | | | | | | | | | |
| 26 | 3,1912 | 3,2086 | 3,2609 | 3,3481 | 3,4702 | 3,6269 | 3,8176 | 4,0419 | | | |
| 24 | 2,7257 | 2,7430 | 2,7952 | 2,8822 | 3,0040 | 3,1602 | 3,3502 | 3,5732 | 3,8284 | 4,1145 | |
| 22 | 2,2971 | 2,3144 | 2,3665 | 2,4535 | 2,5754 | 2,7316 | 2,9216 | 3,1446 | 3,4000 | 3,6870 | 4,0048 |
| 20 | 1,9050 | 1,9223 | 1,9746 | 2,0618 | 2,1840 | 2,3408 | 2,5315 | 2,7555 | 3,0123 | 3,3015 | 3,6226 |
| 18 | 1,5490 | 1,5665 | 1,6190 | 1,7068 | 1,8297 | 1,9874 | 2,1794 | 2,4052 | 2,6646 | 2,9572 | 3,2829 |
| 16 | 1,2290 | 1,2467 | 1,2997 | 1,3881 | 1,5121 | 1,6712 | 1,8651 | 2,0935 | 2,3563 | 2,6533 | 2,9845 |
| 14 | 0,9451 | 0,9630 | 1,0166 | 1,1061 | 1,2313 | 1,3922 | 1,5886 | 1,8202 | 2,0871 | 2,3893 | 2,7269 |
| 12 | 0,6977 | 0,7158 | 0,7701 | 0,8608 | 0,9877 | 1,1508 | 1,3500 | 1,5854 | 1,8570 | 2,1649 | 2,5096 |
| 10 | 0,4869 | 0,5053 | 0,5605 | 0,6524 | 0,7813 | 0,9469 | 1,1495 | 1,3891 | 1,6658 | 1,9800 | 2,3320 |
| 8 | 0,3133 | 0,3320 | 0,3880 | 0,4815 | 0,6125 | 0,7810 | 0,9873 | 1,2314 | 1,5136 | 1,8343 | 2,1940 |
| 6 | 0,1773 | 0,1963 | 0,2533 | 0,3484 | 0,4817 | 0,6533 | 0,8635 | 1,1123 | 1,4003 | 1,7277 | 2,0952 |
| 4 | 0,0794 | 0,0987 | 0,1567 | 0,2535 | 0,3893 | 0,5641 | 0,7783 | 1,0321 | 1,3259 | 1,6602 | 2,0355 |
| 2 | 0,0201 | 0,0398 | 0,0988 | 0,1974 | 0,3357 | 0,5139 | 0,7322 | 0,9911 | 1,2908 | 1,6320 | 2,0152 |
| 0 | 0,0001 | 0,0201 | 0,0803 | 0,1807 | 0,3216 | 0,5031 | 0,7257 | 0,9896 | 1,2953 | 1,6434 | 2,0345 |
| -2 | 0,0200 | 0,0404 | 0,1016 | 0,2039 | 0,3474 | 0,5324 | 0,7593 | 1,0282 | 1,3399 | 1,6948 | 2,0939 |
| -4 | 0,0806 | 0,1013 | 0,1637 | 0,2678 | 0,4140 | 0,6025 | 0,8336 | 1,1076 | 1,4252 | 1,7870 | 2,1939 |
| -6 | 0,1826 | 0,2037 | 0,2672 | 0,3732 | 0,5221 | 0,7140 | 0,9494 | 1,2284 | 1,5519 | 1,9206 | 2,3353 |
| -8 | 0,3268 | 0,3483 | 0,4129 | 0,5209 | 0,6725 | 0,8679 | 1,1075 | 1,3916 | 1,7210 | 2,0965 | 2,5189 |
| -10 | 0,5140 | 0,5359 | 0,6016 | 0,7117 | 0,8659 | 1,0648 | 1,3086 | 1,5979 | 1,9332 | 2,3155 | 2,7457 |
| -12 | 0,7452 | 0,7675 | 0,8345 | 0,9464 | 1,1032 | 1,3055 | 1,5536 | 1,8481 | 2,1895 | 2,5788 | 3,0168 |
| -14 | 1,0211 | 1,0438 | 1,1120 | 1,2258 | 1,3853 | 1,5909 | 1,8434 | 2,1431 | 2,4909 | 2,8875 | 3,3338 |
| -16 | 1,3430 | 1,3661 | 1,4355 | 1,5512 | 1,7132 | 1,9223 | 2,1792 | 2,4846 | 2,8391 | 3,2435 | 3,6986 |
| -18 | 1,7122 | 1,7357 | 1,8062 | 1,9237 | 2,0884 | 2,3011 | 2,5627 | 2,8740 | 3,2358 | 3,6488 | 4,1138 |
| -20 | 2,1301 | 2,1539 | 2,2253 | 2,3447 | 2,5122 | 2,7287 | 2,9952 | 3,3129 | 3,6825 | 4,1051 | 4,5814 |
| -22 | 2,5976 | 2,6217 | 2,6941 | 2,8152 | 2,9854 | 3,2058 | 3,4775 | 3,8019 | 4,1801 | 4,6133 | 5,1027 |
| -24 | 3,1159 | 3,1402 | 3,2136 | 3,3363 | 3,5091 | 3,7333 | 4,0103 | 4,3416 | 4,7290 | 5,1742 | |
| -26 | 3,6862 | 3,7108 | 3,7850 | 3,9093 | 4,0844 | 4,3120 | 4,5940 | 4,9322 | | | |

**Fig. 6a**

| X \ Y | 0 | 2 | 4 | 6 | 8 | 10 | 12 | 14 | 16 | 18 | 20 |
|---|---|---|---|---|---|---|---|---|---|---|---|
| 26 | 4,4873 | 4,5072 | 4,5668 | 4,6660 | 4,8044 | 4,9815 | 5,1967 | 5,4492 | | | |
| 24 | 3,8230 | 3,8430 | 3,9031 | 4,0031 | 4,1426 | 4,3213 | 4,5387 | 4,7939 | 5,0863 | 5,4149 | |
| 22 | 3,2067 | 3,2269 | 3,2875 | 3,3883 | 3,5291 | 3,7096 | 3,9293 | 4,1877 | 4,4839 | 4,8173 | 5,1870 |
| 20 | 2,6430 | 2,6634 | 2,7245 | 2,8262 | 2,9684 | 3,1508 | 3,3730 | 3,6345 | 3,9348 | 4,2731 | 4,6488 |
| 18 | 2,1350 | 2,1555 | 2,2172 | 2,3198 | 2,4634 | 2,6477 | 2,8725 | 3,1372 | 3,4415 | 3,7847 | 4,1662 |
| 16 | 1,6841 | 1,7048 | 1,7670 | 1,8707 | 2,0156 | 2,2018 | 2,4290 | 2,6969 | 3,0050 | 3,3529 | 3,7400 |
| 14 | 1,2905 | 1,3114 | 1,3742 | 1,4787 | 1,6251 | 1,8131 | 2,0426 | 2,3134 | 2,6251 | 2,9773 | 3,3696 |
| 12 | 0,9533 | 0,9744 | 1,0376 | 1,1431 | 1,2907 | 1,4804 | 1,7121 | 1,9856 | 2,3006 | 2,6567 | 3,0537 |
| 10 | 0,6708 | 0,6920 | 0,7558 | 0,8621 | 1,0109 | 1,2022 | 1,4358 | 1,7117 | 2,0297 | 2,3893 | 2,7904 |
| 8 | 0,4408 | 0,4622 | 0,5265 | 0,6335 | 0,7834 | 0,9761 | 1,2115 | 1,4896 | 1,8101 | 2,1728 | 2,5775 |
| 6 | 0,2611 | 0,2827 | 0,3473 | 0,4550 | 0,6059 | 0,7999 | 1,0369 | 1,3168 | 1,6396 | 2,0050 | 2,4128 |
| 4 | 0,1292 | 0,1509 | 0,2159 | 0,3243 | 0,4760 | 0,6711 | 0,9095 | 1,1911 | 1,5158 | 1,8835 | 2,2941 |
| 2 | 0,0429 | 0,0646 | 0,1300 | 0,2389 | 0,3915 | 0,5876 | 0,8272 | 1,1103 | 1,4367 | 1,8065 | 2,2193 |
| 0 | 0,0000 | 0,0219 | 0,0876 | 0,1970 | 0,3503 | 0,5473 | 0,7880 | 1,0724 | 1,4004 | 1,7719 | 2,1869 |
| -2 | -0,0012 | 0,0208 | 0,0868 | 0,1967 | 0,3506 | 0,5485 | 0,7902 | 1,0758 | 1,4052 | 1,7783 | 2,1952 |
| -4 | 0,0377 | 0,0598 | 0,1261 | 0,2365 | 0,3910 | 0,5896 | 0,8323 | 1,1190 | 1,4497 | 1,8244 | 2,2431 |
| -6 | 0,1154 | 0,1376 | 0,2041 | 0,3149 | 0,4700 | 0,6694 | 0,9131 | 1,2009 | 1,5329 | 1,9091 | 2,3295 |
| -8 | 0,2307 | 0,2530 | 0,3197 | 0,4310 | 0,5867 | 0,7868 | 1,0314 | 1,3203 | 1,6536 | 2,0314 | 2,4537 |
| -10 | 0,3826 | 0,4049 | 0,4720 | 0,5836 | 0,7399 | 0,9409 | 1,1864 | 1,4765 | 1,8112 | 2,1906 | 2,6149 |
| -12 | 0,5702 | 0,5926 | 0,6599 | 0,7720 | 0,9290 | 1,1307 | 1,3773 | 1,6686 | 2,0049 | 2,3861 | 2,8127 |
| -14 | 0,7927 | 0,8153 | 0,8828 | 0,9954 | 1,1531 | 1,3557 | 1,6034 | 1,8962 | 2,2341 | 2,6175 | 3,0464 |
| -16 | 1,0495 | 1,0721 | 1,1400 | 1,2532 | 1,4116 | 2,0000 | 1,8642 | 2,1586 | 2,4985 | 2,8842 | 3,3159 |
| -18 | 1,3398 | 1,3626 | 1,4308 | 1,5446 | 1,7039 | 1,9088 | 2,1592 | 2,4555 | 2,7977 | 3,1861 | 3,6210 |
| -20 | 1,6631 | 1,6860 | 1,7547 | 1,8692 | 2,0295 | 2,2358 | 2,4881 | 2,7865 | 3,1314 | 3,5230 | 3,9617 |
| -22 | 2,0188 | 2,0419 | 2,1111 | 2,2264 | 2,3880 | 2,5959 | 2,8503 | 3,1514 | 3,4994 | 3,8948 | 4,3380 |
| -24 | 2,4062 | 2,4295 | 2,4993 | 2,6157 | 2,7788 | 2,9887 | 3,2457 | 3,5499 | 3,9018 | 4,3018 | |
| -26 | 2,8247 | 2,8482 | 2,9188 | 3,0364 | 3,2014 | 3,4137 | 3,6737 | 3,9818 | | | |

**Fig. 6b**

**Fig. 7a**

Fig. 7b

Fig. 7c

**Fig. 8a**

Fig. 8b

Flaechenastigmatismus [Dpt] bei konstantem n = 1.600

**Fig. 8c**

Fig. 9

**Fig. 10a**

**Fig. 10b**

Fig. 11a

Fig. 11b

| X\Y | 0 | 2 | 4 | 6 | 8 | 10 | 12 | 14 | 16 | 18 | 20 |
|---|---|---|---|---|---|---|---|---|---|---|---|
| 20 | 1,6118 | 1,6289 | 1,6802 | 1,7658 | 1,8860 | 2,0408 | 2,2305 | 2,4552 | | | |
| 18 | 1,2747 | 1,2916 | 1,3427 | 1,4280 | 1,5476 | 1,7018 | 1,8907 | 2,1145 | 2,3736 | | |
| 16 | 0,9732 | 0,9900 | 1,0409 | 1,1258 | 1,2450 | 1,3986 | 1,5868 | 1,8098 | 2,0681 | 2,3618 | |
| 14 | 0,7068 | 0,7236 | 0,7743 | 0,8590 | 0,9778 | 1,1308 | 1,3184 | 1,5407 | 1,7982 | 2,0911 | 2,4198 |
| 12 | 0,4753 | 0,4921 | 0,5426 | 0,6270 | 0,7455 | 0,8981 | 1,0852 | 1,3069 | 1,5636 | 1,8557 | 2,1837 |
| 10 | 0,2783 | 0,2951 | 0,3455 | 0,4297 | 0,5478 | 0,7001 | 0,8867 | 1,1079 | 1,3641 | 1,6556 | 1,9831 |
| 8 | 0,1155 | 0,1323 | 0,1826 | 0,2666 | 0,3845 | 0,5365 | 0,7228 | 0,9436 | 1,1994 | 1,4908 | 1,8182 |
| 6 | -0,0132 | 0,0035 | 0,0537 | 0,1375 | 0,2552 | 0,4070 | 0,5931 | 0,8139 | 1,0697 | 1,3612 | 1,6889 |
| 4 | -0,1082 | -0,0916 | -0,0414 | 0,0424 | 0,1601 | 0,3119 | 0,4982 | 0,7192 | 0,9754 | 1,2676 | 1,5960 |
| 2 | -0,1697 | -0,1530 | -0,1028 | -0,0187 | 0,0992 | 0,2515 | 0,4383 | 0,6602 | 0,9175 | 1,2109 | 1,5406 |
| 0 | -0,1978 | -0,1810 | -0,1303 | -0,0457 | 0,0731 | 0,2263 | 0,4144 | 0,6379 | 0,8971 | 1,1922 | 1,5238 |
| -2 | -0,1922 | -0,1749 | -0,1231 | -0,0370 | 0,0835 | 0,2386 | 0,4288 | 0,6545 | 0,9162 | 1,2138 | 1,5477 |
| -4 | -0,1520 | -0,1341 | -0,0804 | 0,0086 | 0,1322 | 0,2901 | 0,4832 | 0,7120 | 0,9767 | 1,2773 | 1,6141 |
| -6 | -0,0759 | -0,0572 | -0,0013 | 0,0912 | 0,2189 | 0,3810 | 0,5782 | 0,8108 | 1,0790 | 1,3830 | 1,7229 |
| -8 | 0,0375 | 0,0569 | 0,1151 | 0,2113 | 0,3437 | 0,5113 | 0,7137 | 0,9509 | 1,2231 | 1,5308 | 1,8743 |
| -10 | 0,1896 | 0,2098 | 0,2703 | 0,3702 | 0,5077 | 0,6810 | 0,8894 | 1,1319 | 1,4091 | 1,7212 | 2,0688 |
| -12 | 0,3821 | 0,4031 | 0,4658 | 0,5695 | 0,7118 | 0,8910 | 1,1054 | 1,3540 | 1,6368 | 1,9543 | 2,3068 |
| -14 | 0,6165 | 0,6382 | 0,7033 | 0,8106 | 0,9578 | 1,1425 | 1,3630 | 1,6179 | 1,9070 | 2,2303 | 2,5881 |
| -16 | 0,8944 | 0,9169 | 0,9842 | 1,0951 | 1,2468 | 1,4368 | 1,6633 | 1,9245 | 2,2200 | 2,5494 | |
| -18 | 1,2174 | 1,2405 | 1,3096 | 1,4235 | 1,5794 | 1,7748 | 2,0071 | 2,2745 | 2,5761 | | |
| -20 | 1,5870 | 1,6104 | 1,6805 | 1,7965 | 1,9562 | 2,1568 | 2,3952 | 2,6684 | | | |

Fig. 12a

EP 3 555 695 B1

| | X | 0 | 2 | 4 | 6 | 8 | 10 | 12 | 14 | 16 | 18 | 20 |
|---|---|---|---|---|---|---|---|---|---|---|---|---|
| Y | | | | | | | | | | | | |
| 20 | | 2,7057 | 2,7241 | 2,7791 | 2,8707 | 2,9986 | 3,1625 | 3,3620 | 3,5972 | | | |
| 18 | | 2,2603 | 2,2790 | 2,3348 | 2,4277 | 2,5570 | 2,7221 | 2,9226 | 3,1579 | 3,4278 | | |
| 16 | | 1,8478 | 1,8670 | 1,9243 | 2,0192 | 2,1511 | 2,3189 | 2,5217 | 2,7586 | 3,0295 | 3,3341 | |
| 14 | | 1,4648 | 1,4847 | 1,5441 | 1,6421 | 1,7777 | 1,9495 | 2,1560 | 2,3960 | 2,6690 | 2,9748 | 3,3137 |
| 12 | | 1,1096 | 1,1303 | 1,1923 | 1,2943 | 1,4348 | 1,6117 | 1,8232 | 2,0676 | 2,3440 | 2,6522 | 2,9922 |
| 10 | | 0,7816 | 0,8034 | 0,8684 | 0,9753 | 1,1216 | 1,3047 | 1,5222 | 1,7721 | 2,0531 | 2,3648 | 2,7073 |
| 8 | | 0,4826 | 0,5055 | 0,5740 | 0,6862 | 0,8391 | 1,0291 | 1,2533 | 1,5096 | 1,7961 | 2,1123 | 2,4581 |
| 6 | | 0,2157 | 0,2399 | 0,3119 | 0,4298 | 0,5896 | 0,7868 | 1,0182 | 1,2813 | 1,5740 | 1,8951 | 2,2447 |
| 4 | | -0,0145 | 0,0108 | 0,0864 | 0,2098 | 0,3764 | 0,5809 | 0,8194 | 1,0893 | 1,3882 | 1,7145 | 2,0681 |
| 2 | | -0,2030 | -0,1765 | -0,0976 | 0,0311 | 0,2041 | 0,4155 | 0,6606 | 0,9367 | 1,2413 | 1,5725 | 1,9298 |
| 0 | | -0,3444 | -0,3169 | -0,2349 | -0,1016 | 0,0772 | 0,2945 | 0,5454 | 0,8266 | 1,1357 | 1,4707 | 1,8310 |
| -2 | | -0,4341 | -0,4057 | -0,3214 | -0,1846 | -0,0015 | 0,2204 | 0,4756 | 0,7605 | 1,0725 | 1,4098 | 1,7718 |
| -4 | | -0,4691 | -0,4403 | -0,3548 | -0,2163 | -0,0310 | 0,1935 | 0,4512 | 0,7382 | 1,0516 | 1,3896 | 1,7520 |
| -6 | | -0,4494 | -0,4206 | -0,3351 | -0,1967 | -0,0113 | 0,2136 | 0,4720 | 0,7593 | 1,0725 | 1,4099 | 1,7715 |
| -8 | | -0,3768 | -0,3482 | -0,2638 | -0,1269 | 0,0567 | 0,2802 | 0,5373 | 0,8232 | 1,1348 | 1,4704 | 1,8299 |
| -10 | | -0,2544 | -0,2263 | -0,1435 | -0,0092 | 0,1713 | 0,3919 | 0,6460 | 0,9288 | 1,2374 | 1,5703 | 1,9267 |
| -12 | | -0,0859 | -0,0586 | 0,0222 | 0,1531 | 0,3297 | 0,5460 | 0,7959 | 1,0744 | 1,3790 | 1,7083 | 2,0612 |
| -14 | | 0,1244 | 0,1508 | 0,2290 | 0,3560 | 0,5280 | 0,7396 | 0,9847 | 1,2583 | 1,5585 | 1,8838 | 2,2330 |
| -16 | | 0,3729 | 0,3983 | 0,4734 | 0,5960 | 0,7631 | 0,9699 | 1,2101 | 1,4791 | 1,7747 | 2,0961 | |
| -18 | | 0,6566 | 0,6808 | 0,7528 | 0,8709 | 1,0330 | 1,2350 | 1,4708 | 1,7355 | 2,0273 | | |
| -20 | | 0,9729 | 0,9962 | 1,0655 | 1,1796 | 1,3370 | 1,5344 | 1,7661 | 2,0274 | | | |

**Fig. 12b**

**Fig. 13a**

**Fig. 13b**

Fig. 14a

**Fig. 14b**

**Fig. 15**

**Fig. 16a**

Fig. 16b

Fig. 17a

Fig. 17b

| X | -22 | -20 | -18 | -16 | -14 | -12 | -10 | -8 | -6 | -4 | -2 | 0 | 2 | 4 | 6 | 8 | 10 | 12 | 14 | 16 | 18 | 20 | 22 |
|---|---|---|---|---|---|---|---|---|---|---|---|---|---|---|---|---|---|---|---|---|---|---|---|
| Y | | | | | | | | | | | | | | | | | | | | | | | |
| 24 | | | | | | | | | | | | 2,9314 | | | | | | | | | | | |
| 22 | | | | | | | | 2,8026 | 2,6737 | 2,5794 | 2,5195 | 2,4941 | 2,5030 | 2,5454 | 2,6243 | 2,7368 | | | | | | | |
| 20 | | | | | | 2,7611 | 2,5634 | 2,4004 | 2,2720 | 2,1782 | 2,1187 | 2,0933 | 2,1022 | 2,1454 | 2,2229 | 2,3349 | 2,4814 | 2,6627 | | | | | |
| 18 | | | | | 2,6252 | 2,3934 | 2,1966 | 2,0344 | 1,9066 | 1,9131 | 1,7538 | 1,7285 | 1,7375 | 1,7805 | 1,8577 | 1,9591 | 2,1150 | 2,2956 | 2,5110 | | | | |
| 16 | | | | 2,5584 | 2,2925 | 2,0617 | 1,8557 | 1,7042 | 1,5769 | 1,4838 | 1,4247 | 1,3995 | 1,4085 | 1,4513 | 1,5281 | 1,6390 | 1,7843 | 1,9641 | 2,1787 | 2,4283 | | | |
| 14 | | | 2,5605 | 2,2604 | 1,9955 | 1,7655 | 1,5702 | 1,4093 | 1,2825 | 1,1897 | 1,1309 | 1,1058 | 1,1145 | 1,1572 | 1,2337 | 1,3442 | 1,4889 | 1,6680 | 1,8817 | 2,1305 | 2,4150 | | |
| 12 | | 2,6319 | 2,2970 | 1,9977 | 1,7337 | 1,5045 | 1,3098 | 1,1494 | 1,0230 | 0,9306 | 0,8719 | 0,8459 | 0,8555 | 0,8979 | 0,9740 | 1,0841 | 1,2282 | 1,4067 | 1,6198 | 1,8580 | 2,1518 | 2,4719 | |
| 10 | | 2,4028 | 2,0585 | 1,7700 | 1,5067 | 1,2782 | 1,0840 | 0,9240 | 0,7981 | 0,7060 | 0,6475 | 0,6224 | 0,6309 | 0,6731 | 0,7489 | 0,8586 | 1,0022 | 1,1802 | 1,3928 | 1,6406 | 1,9242 | 2,2441 | |
| 8 | 2,5791 | 2,2089 | 1,8751 | 1,5771 | 1,3143 | 1,0853 | 0,8926 | 0,7329 | 0,6073 | 0,5155 | 0,4572 | 0,4321 | 0,4405 | 0,4824 | 0,5580 | 0,6673 | 0,8105 | 0,9881 | 1,2005 | 1,4484 | 1,7322 | 2,0526 | 2,4101 |
| 6 | 2,4204 | 2,0503 | 1,7167 | 1,4188 | 1,1562 | 0,9285 | 0,7351 | 0,5758 | 0,4505 | 0,3590 | 0,3008 | 0,2757 | 0,2839 | 0,3256 | 0,4010 | 0,5100 | 0,6530 | 0,8305 | 1,0432 | 1,2916 | 1,5762 | 1,8976 | 2,2563 |
| 4 | 2,2975 | 1,9271 | 1,5932 | 1,2951 | 1,0324 | 0,8047 | 0,6115 | 0,4525 | 0,3274 | 0,2360 | 0,1778 | 0,1528 | 0,1609 | 0,2025 | 0,2777 | 0,3856 | 0,5297 | 0,7077 | 0,9123 | 1,1710 | 1,4572 | 1,7804 | 2,1410 |
| 2 | 2,2105 | 1,8394 | 1,5048 | 1,2052 | 0,9430 | 0,7150 | 0,5217 | 0,3526 | 0,2376 | 0,1463 | 0,0882 | 0,0632 | 0,0714 | 0,1128 | 0,1880 | 0,2972 | 0,4411 | 0,6204 | 0,8358 | 1,0878 | 1,3766 | 1,7024 | 2,0655 |
| 0 | 2,1600 | 1,7877 | 1,4520 | 1,1524 | 0,8885 | 0,6598 | 0,4659 | 0,3065 | 0,1812 | 0,0897 | 0,0316 | 0,0067 | 0,0150 | 0,0565 | 0,1318 | 0,2419 | 0,3876 | 0,5693 | 0,7877 | 1,0430 | 1,3354 | 1,6547 | 2,0312 |
| -2 | 2,1475 | 1,7737 | 1,4367 | 1,1358 | 0,8705 | 0,6407 | 0,4457 | 0,2853 | 0,1591 | 0,0668 | 0,0083 | 0,0168 | 0,0083 | 0,0337 | 0,1103 | 0,2224 | 0,3710 | 0,5562 | 0,7785 | 1,0378 | 1,3342 | 1,6675 | 2,0377 |
| -4 | 2,1745 | 1,7993 | 1,4607 | 1,1582 | 0,8913 | 0,6595 | 0,4527 | 0,3004 | 0,1723 | 0,0785 | 0,0187 | 0,0070 | 0,0017 | 0,0452 | 0,1243 | 0,2400 | 0,3925 | 0,5823 | 0,8091 | 1,0727 | 1,3732 | 1,7105 | 2,0847 |
| -6 | 2,2424 | 1,8555 | 1,5251 | 1,2205 | 0,9513 | 0,7172 | 0,5178 | 0,3529 | 0,2222 | 0,1257 | 0,0640 | 0,0373 | 0,0464 | 0,0919 | 0,1745 | 0,2947 | 0,4524 | 0,5473 | 0,8790 | 1,1473 | 1,4523 | 1,7939 | 2,1723 |
| -8 | 2,3521 | 1,9732 | 1,6305 | 1,3236 | 1,0517 | 0,8145 | 0,6121 | 0,4438 | 0,3096 | 0,2099 | 0,1455 | 0,1174 | 0,1269 | 0,1748 | 0,2614 | 0,3867 | 0,5500 | 0,7507 | 0,9879 | 1,2613 | 1,5710 | 1,9174 | 2,3006 |
| -10 | | 2,1235 | 1,7783 | 1,4683 | 1,1931 | 0,9525 | 0,7453 | 0,5742 | 0,4358 | 0,3320 | 0,2644 | 0,2348 | 0,2445 | 0,2947 | 0,3854 | 0,5159 | 0,6852 | 0,8920 | 1,1352 | 1,4141 | 1,7293 | 2,0810 | |
| -12 | | 2,3169 | 1,9586 | 1,6552 | 1,3763 | 1,1318 | 0,9214 | 0,7449 | 0,6018 | 0,4933 | 0,4222 | 0,3908 | 0,4007 | 0,4530 | 0,5474 | 0,6828 | 0,8580 | 1,0712 | 1,3205 | 1,6057 | 1,9269 | 2,2848 | |
| -14 | | | 2,2018 | 1,8845 | 1,6016 | 1,3527 | 1,1377 | 0,9564 | 0,8083 | 0,6950 | 0,6203 | 0,5872 | 0,5972 | 0,5512 | 0,7487 | 0,8887 | 1,0695 | 1,2889 | 1,5449 | 1,8367 | 2,1645 | | |
| -16 | | | | 2,1555 | 1,8691 | 1,6155 | 1,3956 | 1,2092 | 1,0561 | 0,9383 | 0,8602 | 0,8256 | 0,8357 | 0,8910 | 0,9910 | 1,1348 | 1,3207 | 1,5452 | 1,8088 | 2,1076 | | | |
| -18 | | | | | 2,1791 | 1,9205 | 1,6955 | 1,5038 | 1,3459 | 1,2243 | 1,1436 | 1,1078 | 1,1179 | 1,1740 | 1,2757 | 1,4225 | 1,6127 | 1,8437 | 2,1129 | | | | |
| -20 | | | | | | 2,2684 | 2,0378 | 1,8409 | 1,6788 | 1,5542 | 1,4718 | 1,4353 | 1,4453 | 1,5017 | 1,6043 | 1,7531 | 1,9467 | 2,1826 | | | | | |
| -22 | | | | | | | | 2,2219 | 2,0559 | 1,9292 | 1,8457 | 1,8089 | 1,8188 | 1,8753 | 1,9783 | 2,1283 | | | | | | | |
| -24 | | | | | | | | | | | | 2,2290 | | | | | | | | | | | |

**Fig. 18a**

EP 3 555 695 B1

| X | -22 | -20 | -18 | -16 | -14 | -12 | -10 | -8 | -6 | -4 | -2 | 0 | 2 | 4 | 6 | 8 | 10 | 12 | 14 | 16 | 18 | 20 | 22 |
|---|-----|-----|-----|-----|-----|-----|-----|----|----|----|----|---|---|---|---|---|----|----|----|----|----|----|----|
| Y |  |  |  |  |  |  |  |  |  |  |  |  |  |  |  |  |  |  |  |  |  |  |  |
| 24 |  |  |  |  |  |  |  |  |  |  |  | 3,1026 |  |  |  |  |  |  |  |  |  |  |  |
| 22 |  |  |  |  |  |  |  | 2,8724 | 2,7320 | 2,6330 | 2,5738 | 2,5534 | 2,5715 | 2,6284 | 2,7245 | 2,8513 |  |  |  |  |  |  |  |
| 20 |  |  |  |  |  | 2,7827 | 2,5634 | 2,3882 | 2,2544 | 2,1599 | 2,1033 | 2,0839 | 2,1013 | 2,1557 | 2,2475 | 2,3778 | 2,5486 | 2,7623 |  |  |  |  |  |
| 18 |  |  |  | 2,6118 | 2,3574 | 2,1477 | 1,9794 | 1,8501 | 1,7581 | 1,7028 | 1,6838 | 1,7010 | 1,7542 | 1,8436 | 1,9697 | 2,1337 | 2,3379 | 2,5866 |  |  |  |  |  |
| 16 |  |  | 2,5386 | 2,2475 | 2,0029 | 1,7995 | 1,6345 | 1,5053 | 1,4143 | 1,3585 | 1,3395 | 1,3570 | 1,4107 | 1,5003 | 1,6254 | 1,7853 | 1,9843 | 2,2224 | 2,5050 |  |  |  |  |
| 14 |  | 2,5589 | 2,2289 | 1,9474 | 1,7083 | 1,5071 | 1,3416 | 1,2111 | 1,1165 | 1,0590 | 1,0393 | 1,0576 | 1,1134 | 1,2056 | 1,3329 | 1,4945 | 1,6904 | 1,9229 | 2,1960 | 2,5158 |  |  |  |
| 12 |  | 2,6704 | 2,2981 | 1,9774 | 1,7012 | 1,4537 | 1,2609 | 1,0914 | 0,9552 | 0,8573 | 0,7958 | 0,7762 | 0,7958 | 0,8547 | 0,9513 | 1,0833 | 1,2487 | 1,4453 | 1,6771 | 1,9445 | 2,2548 | 2,6151 |  |
| 10 |  | 2,4540 | 2,0905 | 1,7756 | 1,5013 | 1,2622 | 1,0551 | 0,8797 | 0,7381 | 0,6338 | 0,5698 | 0,5481 | 0,5590 | 0,6316 | 0,7336 | 0,8718 | 1,0431 | 1,2450 | 1,4772 | 1,7426 | 2,0458 | 2,3977 |  |
| 8 | 2,6982 | 2,2875 | 1,9300 | 1,6175 | 1,3426 | 1,1001 | 0,8874 | 0,7051 | 0,5566 | 0,4455 | 0,3787 | 0,3558 | 0,3871 | 0,4444 | 0,5521 | 0,6971 | 0,8751 | 1,0826 | 1,3182 | 1,5840 | 1,8854 | 2,2300 | 2,6265 |
| 6 | 2,5712 | 2,1661 | 1,8117 | 1,4996 | 1,2227 | 0,9760 | 0,7574 | 0,5683 | 0,4131 | 0,2985 | 0,2263 | 0,2021 | 0,2256 | 0,2954 | 0,4083 | 0,5598 | 0,7444 | 0,9576 | 1,1972 | 1,4549 | 1,7656 | 2,1058 | 2,4974 |
| 4 | 2,4881 | 2,0854 | 1,7331 | 1,4200 | 1,1405 | 0,8895 | 0,6656 | 0,4705 | 0,3096 | 0,1895 | 0,1154 | 0,0902 | 0,1147 | 0,1873 | 0,3047 | 0,4616 | 0,6518 | 0,8599 | 1,1134 | 1,3834 | 1,6848 | 2,0246 | 2,4114 |
| 2 | 2,4452 | 2,0457 | 1,6921 | 1,3775 | 1,0952 | 0,8406 | 0,6122 | 0,4125 | 0,2477 | 0,1244 | 0,0483 | 0,0225 | 0,0478 | 0,1225 | 0,2431 | 0,4039 | 0,5982 | 0,8199 | 1,0664 | 1,3387 | 1,6414 | 1,9812 | 2,3652 |
| 0 | 2,4431 | 2,0421 | 1,6871 | 1,3705 | 1,0858 | 0,8284 | 0,5971 | 0,3948 | 0,2278 | 0,1030 | 0,0260 | 0,0000 | 0,0258 | 0,1019 | 0,2244 | 0,3873 | 0,5837 | 0,8075 | 1,0559 | 1,3300 | 1,6343 | 1,9750 | 2,3559 |
| -2 | 2,4768 | 2,0735 | 1,7162 | 1,3975 | 1,1107 | 0,8515 | 0,6189 | 0,4160 | 0,2489 | 0,1242 | 0,0475 | 0,0218 | 0,0481 | 0,1245 | 0,2475 | 0,4107 | 0,6073 | 0,8314 | 1,0805 | 1,3560 | 1,6618 | 2,0041 | 2,3905 |
| -4 | 2,5457 | 2,1385 | 1,7779 | 1,4565 | 1,1679 | 0,9078 | 0,6755 | 0,4738 | 0,3083 | 0,1853 | 0,1098 | 0,0850 | 0,1116 | 0,1879 | 0,3099 | 0,4718 | 0,6668 | 0,8899 | 1,1388 | 1,4150 | 1,7224 | 2,0668 | 2,4559 |
| -6 | 2,6487 | 2,2358 | 1,8706 | 1,5459 | 1,2554 | 0,9950 | 0,7638 | 0,5646 | 0,4020 | 0,2816 | 0,2033 | 0,1847 | 0,2116 | 0,2872 | 0,4074 | 0,5668 | 0,7592 | 0,9802 | 1,2284 | 1,5051 | 1,8142 | 2,1616 | 2,5549 |
| -8 | 2,7847 | 2,3644 | 1,9930 | 1,6640 | 1,3710 | 1,1103 | 0,8807 | 0,6842 | 0,5251 | 0,4081 | 0,3373 | 0,3154 | 0,3426 | 0,4172 | 0,5353 | 0,6916 | 0,8810 | 1,0999 | 1,3472 | 1,6248 | 1,9364 | 2,2881 | 2,6872 |
| -10 |  | 2,5236 | 2,1444 | 1,8096 | 1,5131 | 1,2512 | 1,0227 | 0,8290 | 0,6733 | 0,5597 | 0,4917 | 0,4714 | 0,4990 | 0,5727 | 0,6886 | 0,8422 | 1,0291 | 1,2454 | 1,4937 | 1,7731 | 2,0888 | 2,4457 |  |
| -12 |  | 2,7138 | 2,3248 | 1,9821 | 1,6803 | 1,4159 | 1,1873 | 0,9955 | 0,8429 | 07325 | 0,6672 | 0,6484 | 0,6763 | 0,7490 | 0,8633 | 1,0151 | 1,2007 | 1,4178 | 1,6667 | 1,9499 | 2,2719 | 2,6382 |  |
| -14 |  |  | 2,5353 | 2,1822 | 1,8725 | 1,6032 | 1,3729 | 1,1818 | 1,0314 | 0,9238 | 0,8607 | 0,8431 | 0,8710 | 0,9430 | 1,0554 | 1,2078 | 1,3940 | 1,6132 | 1,8562 | 2,1560 | 2,4872 |  |  |
| -16 |  |  |  | 2,4118 | 2,0911 | 1,8140 | 1,5793 | 1,3870 | 1,2375 | 1,1317 | 1,0702 | 1,0535 | 1,0814 | 1,1531 | 1,2668 | 1,4196 | 1,6088 | 1,8331 | 2,0935 | 2,3935 |  |  |  |
| -18 |  |  |  |  | 2,3388 | 2,0507 | 1,8086 | 1,6122 | 1,4514 | 1,3558 | 1,2951 | 1,2788 | 1,3070 | 1,3794 | 1,4948 | 1,6513 | 1,8465 | 2,0796 | 2,3516 |  |  |  |  |
| -20 |  |  |  |  |  | 2,3168 | 2,0542 | 1,8606 | 1,7054 | 1,5978 | 1,5364 | 1,5204 | 1,5495 | 1,6238 | 1,7432 | 1,9060 | 2,1107 | 2,3553 |  |  |  |  |  |
| -22 |  |  |  |  |  |  |  | 2,1364 | 1,9740 | 1,8618 | 1,7982 | 1,7820 | 1,8128 | 1,8908 | 2,0161 | 2,1882 |  |  |  |  |  |  |  |
| -24 |  |  |  |  |  |  |  |  |  |  |  | 2,0697 |  |  |  |  |  |  |  |  |  |  |  |

## Fig. 18b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904986 A1
- WO 9913361 A1
- US 2010238400 A1
- WO 10109154 A1
- WO 0155752 A1
- DE 102008041869 A1
- EP 2115527 B1
- DE 102015205721 A1
- EP 2383603 B1
- EP 0857993 B2
- EP 16195139

**In der Beschreibung aufgeführte Nicht-Patentliteratur**

- **YUKI SHITANOKI et al.** Application of Graded-Index for Astigmatism Reduction in Progressive Addition Lens. *Applied Physics Express,* Marz 2009, vol. 2 (1), 032401
- **ALBERT J. AUGUSTIN.** Augenheilkunde. Springer, 2007, 1272
- **HEINZ DIEPES ; RALF BLENDOWSKE.** Optik und Technik der Brille. Optische Fachveröffentlichung GmbH, 2002, 482